# EUROPEAN PATENT SPECIFICATION

(11) **EP 2 806 601 B1**
(45) Date of publication and mention of the grant of the patent: **24.08.2016**
(21) Application number: 14168828.3
(22) Date of filing: 19.05.2014
(51) Int. Cl.: H04L 12/46

(54) **Tunnels between virtual machines**
Tunnel zwischen virtuellen Maschinen
Tunnels entre machines virtuelles

(30) Priority: 22.05.2013 JP 2013107733
(43) Date of publication of application: 26.11.2014
(73) Proprietor: FUJITSU LIMITED, Kawasaki-shi, Kanagawa 211-8588 (JP)
(72) Inventor: Imai, Yuji, Kanagawa, 211-8588 (JP); Shimokuni, Osamu, Kanagawa, 211-8588 (JP)
(74) Representative: Hoffmann Eitle

(56) References cited:
- EP-A1- 2 547 047
- US-A1- 2011 075 667
- US-A1- 2011 090 911
- US-A1- 2012 177 043

## Description

### FIELD

The embodiments discussed herein are related to the communication between virtual machines.

### BACKGROUND

Various studies have been conducted in the field of communications through a network. The study of virtualization is also widely conducted at various levels such as the level of an individual device, the level of the entire network, etc.

For example, a multi-logic node device, which aims at being able to setting a different media access control (MAC) address for each logical node, has the following components.
- an operating system (OS) operating on the multi-logic node device
- an application operating on the OS
- a physical network device which is attached to the multi-logic node device and performs communications with a network medium
- a virtual network device configured by software
- a first device driver which is implemented on the OS and controls the physical network device
- a second device driver which is implemented on the OS and controls the virtual network device

The above-mentioned multi-logic node device is enabled to realize a plurality of logical nodes by using a single physical network device.

As another example, a routing device is proposed to be able to determine a virtual private network (VPN) which accommodates (i.e., services) a virtual local area network (VLAN), without depending on a VLAN identifier (VLAN-ID). In the routing device, a layer 2 (L2) processing unit has the function of sending and receiving VLAN frames, and a VLAN-VPN management unit retrieves a VPN-ID from a port number and a VLAN-ID. Furthermore, a layer 3 (L3) processing unit has the routing function of determining where to forward a packet on the basis of the VPN-ID and the Internet protocol (IP) address.

The VLAN-VPN management unit concretely includes a VLAN-VPN management table and a VLAN-VPN searching unit. The VLAN-VPN management table holds and manages the data of a port number, a VLAN-ID, and a VPN-ID. In addition, the VLAN-VPN searching unit receives a port number and a VLAN-ID from the L2 processing unit, performs a VPN-ID searching process using the VLAN-VPN management table, and notifies the L3 processing unit of the result of the searching process.

Well-known are some documents such as Japanese Laid-open Patent Publication No. 2007-4774, Japanese Laid-open Patent Publication No. 2006-339927, etc.

US 2012/0177043 A1 describes methods, apparatus and systems for processing fiber Channel fabric login frames by a FCoE device interconnection apparatus and a FCoE device interconnection apparatus controller. Fabric login fiber Channel frame is encapsulated into a fiber channel over ethernet frame at a fiber Channel device interconnection apparatus. The encapsulated frame is transmitted from the FIA to a FCoE device interconnection apparatus controller. A FIP link service accept frame is transmitted by the F IAC to the FIA, and the FIPS_ACC frame is received by the FIA. The FIP frame is the encapsulated into a fiber channel LS_ACC frame at the FIA. The fiber channel LS_ACC frame is transmitted back to the said fiber Channel device.

### SUMMARY

Recently, virtualization has become widespread in various aspects of a computer system. For example, the use of virtual machines is growing. However, the technology for guaranteeing the quality of service of communications between two virtual machines running on two different physical machines connected to each other over a physical network is still under development.

An aspect of the embodiments discussed herein aims at providing the technology for allowing a user to select the quality of service of communications between two virtual machines from among some choices.

According to an aspect of the embodiments, a management program including a plurality of executable instructions, which, when executed on a computer, cause the computer to execute a process is provided.

The process includes receiving a tunnel connection command to connect a first virtual machine and a second virtual machine through a layer 2 tunnel corresponding to particular quality of service.

The process also includes instructing a first physical machine on which the first virtual machine is running and which is connected to a plurality of physical networks through a first physical network interface device to use a first address and a second address in encapsulating in a first layer 3 packet a first layer 2 frame that the first virtual machine decides to send to the second virtual machine. Each of the plurality of physical networks supports one or more levels in quality of service. Both the first address and the second address correspond to a particular physical network of the plurality of physical networks that supports the particular quality of service. The first address is one of a plurality of addresses assigned to the first physical network interface device. The second address is one of a plurality of addresses assigned to a second physical network interface device through which a second physical machine on which the second virtual machine is running is connected to the plurality of physical networks.

The process also includes instructing the second physical machine to use the second address and the first address in encapsulating in a second layer 3 packet a second layer 2 frame that the second virtual machine decides to send to the first virtual machine.

### BRIEF DESCRIPTION OF DRAWINGS

FIG. 1 illustrates the configuration of a system according to an embodiment;
FIG. 2 illustrates a block diagram of an IaaS management server;
FIG. 3 illustrates a hardware configuration diagram;
FIG. 4 illustrates the configuration of a system of the first comparative example;
FIG. 5 illustrates the configuration of a system of the second comparative example;
FIG. 6 illustrates examples of a management screen and definition information used in the second comparative example;
FIG. 7 illustrates examples of tunnels which are created according to the second comparative example;
FIG. 8 illustrates examples of a management screen and definition information according to the embodiment;
FIG. 9 illustrates examples of tunnels which are created according to the embodiment;
FIG. 10 is a flowchart of a virtual system activating process;
FIG. 11 is a flowchart of a service level changing process; and
FIG. 12 illustrates an example of a change of a tunnel according to an embodiment.

### DESCRIPTION OF EMBODIMENTS

Recently, virtualization has become widespread in various aspects of a computer system. For example, the use of virtual machines is growing. However, the technology for guaranteeing the quality of service of communications between two virtual machines running on two different physical machines connected to each other over a physical network is still under development.

According to the embodiments described below, a user is enabled to select the quality of service of communications between two virtual machines from among some choices.

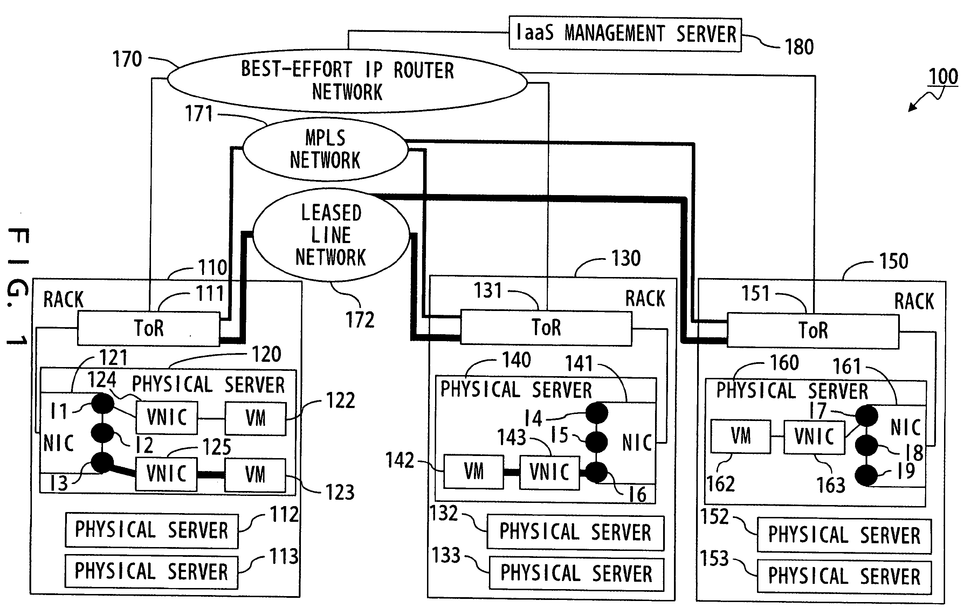

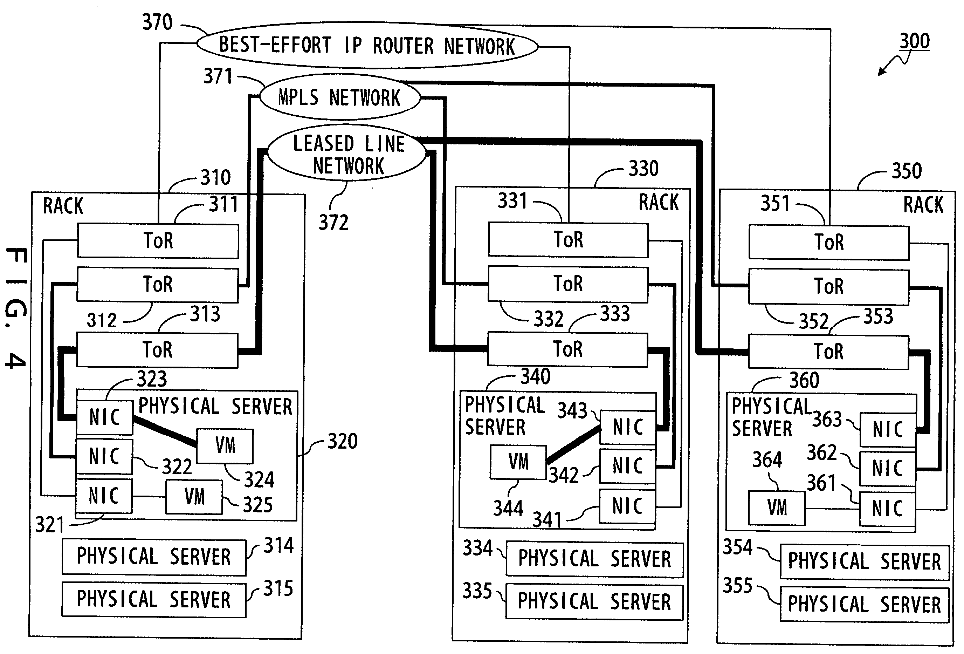

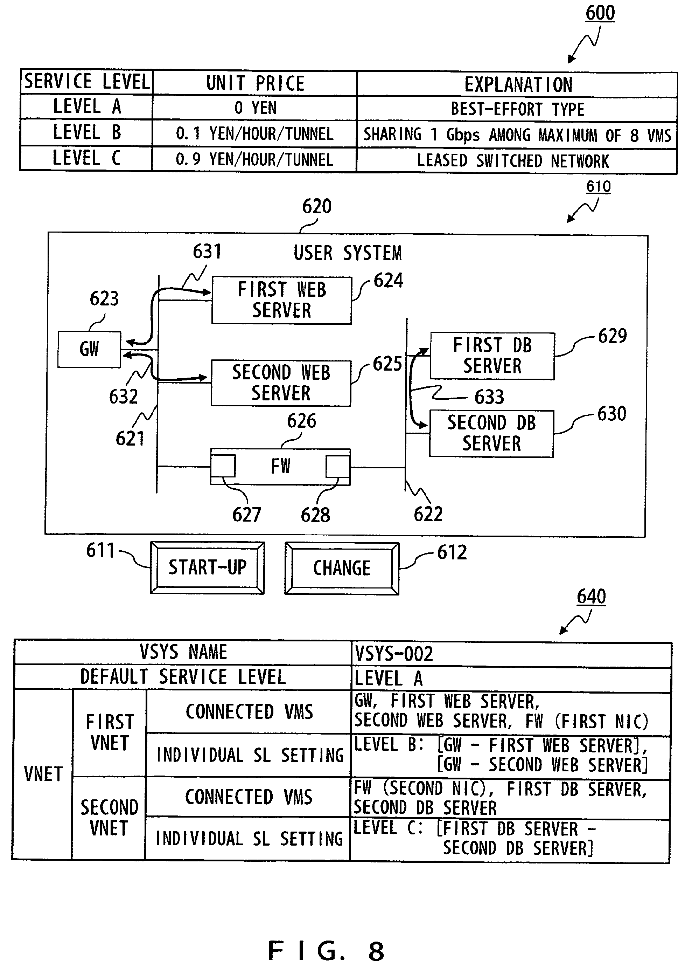

The embodiments are described below in detail with reference to the attached drawings. Concretely, the outline of an embodiment is described with reference to FIGS. 1 through 3. Next, for comprehensibility of the merits of the embodiment, two comparative examples are described with reference to FIGS. 4 through 7. Subsequently, the details of the embodiment are described with reference to FIGS. 8 through 12. Finally described are other embodiments.

FIG. 1 illustrates the configuration of a system according to an embodiment. A network system 100 in FIG. 1 includes a plurality of physical machines and a plurality of communication devices. Each communication device is connected to a plurality of physical networks. Each physical machine is connected to one of the communication devices (in other words, one or more physical machines are connected to each communication device).

The network system 100 may concretely be a system configured in a data center (DC) operated by an "infrastructure as a service" (IaaS) provider. The entire network system 100 may be physically in one building, or may be distributed to two or more buildings.

Each physical machine may execute one or more virtual machines (VMs). The IaaS provider provides a client with a VM running on a physical machine over a network. A service for providing a VM is a form of a service which has become widespread with the spread of cloud computing.

The client for an IaaS provider may also be simply referred to as a "user" hereinafter. A user in the present embodiment is a tenant, in other words. In the present embodiment, since a physical machine is used to provide the service for a user (more specifically, to lend a VM to the user), a physical machine may also be referred to as a "physical server".

Concretely, in the example in FIG. 1, a rack 110 is provided (i.e., installed) in the DC. In the rack 110, a layer 2 switch (L2 switch) called a "top of rack" (ToR) 111 and one or more physical servers connected to the ToR 111 are provided (i.e., installed). A ToR is also called a "ToR switch".

In FIG. 1, three physical servers 112, 113, and 120 are provided in the rack 110. However, obviously, the number of physical servers in one rack may be arbitrarily determined. In FIG. 1, the details of the physical servers 112 and 113 are omitted due to space limitations, and the details are described only for the physical server 120 (the details of the physical server 120 are described later). The cable for connection between the physical server 112 and the ToR 111 and the cable for connection between the physical server 113 and the ToR 111 are also omitted in FIG. 1 due to space limitations.

Similarly, a rack 130 is provided in the DC. In the rack 130, a ToR 131 and one or more physical servers connected to the ToR 131 are provided. In FIG. 1, three physical servers 132, 133, and 140 are provided in the rack 130. Among them, the details are described only for the physical server 140 (the derails of the physical server 140 are described later). The cable for connection between the physical server 132 and the ToR 131 and the cable for connection between the physical server 133 and the ToR 131 are omitted in FIG. 1.

Furthermore, a rack 150 is also provided in the DC. In the rack 150, a ToR 151 and one or more physical servers connected to the ToR 151 are provided. In FIG. 1, three physical servers 152, 153, and 160 are provided in the rack 150. Among them, the details are described only for the physical server 160 (the details of the physical server 160 are described later). Furthermore, the cable for connection between the physical server 152 and the ToR 151 and the cable for connection between the physical server 153 and the ToR 151 are omitted in FIG. 1.

In FIG. 1, three ToRs 111, 131, and 151 are illustrated as examples of a plurality of communication devices included in the network system 100. However, depending on the embodiments, the number of communication devices may be two, or may be four or more.

As described above, each of a plurality of communication devices (more specifically, each ToR) is connected to a plurality of physical networks. FIG. 1 illustrates the following three L3 network as examples of the plurality of physical networks.
- a best-effort Internet protocol (IP) router network 170
- a Multi-Protocol Label Switching network (MPLS network) 171
- a leased line network 172

Each of the plurality of physical networks may be provided by the IaaS provider, or may be provided by a telecommunications carrier. The plurality of physical networks may be provided by a plurality of different telecommunications carriers. Furthermore, depending on the embodiments, the number of physical networks may be two, or four or more. The type of each of the plurality of physical networks is appropriately determined depending on the embodiments.

The best-effort IP router network 170 is a network including a plurality of routers. In the best-effort IP router network 170, a communication of best-effort type is performed, and the quality of service (QoS) is not guaranteed.

The MPLS network 171 is a network that includes a plurality of routers (or switches) which support the MPLS. In the MPLS network 171, the QoS control is performed depending on the label. Prior to the communication over the MPLS network 171, the signaling is performed according to the Resource Reservation Protocol - Traffic Engineering (RSVP-TE). For example, when both endpoints of a tunnel over the MPLS network 171 are set up, the signaling may be performed according to the RSVP-TE. Then, the actual communication through the tunnel over the MPLS network 171 is performed with the QoS which depends on the label.

The leased line network 172 is a network for which a predetermined bandwidth such as 100 Gbps (gigabits per second) is guaranteed. The leased line network 172 may be concretely a network including a plurality of L2 switches.

As illustrated in FIG. 1, the ToR 111 is connected to the best-effort IP router network 170, the MPLS network 171, and the leased line network 172. Similarly, the ToR 131 is connected to the best-effort IP router network 170, the MPLS network 171, and the leased line network 172. Furthermore, the ToR 151 is also connected to the best-effort IP router network 170, the MPLS network 171, and the leased line network 172.

The above-mentioned configuration makes it possible to connect any VM running on any physical server connected to the ToR 111 and any VM running on any physical server connected to the ToR 131, through an L2 tunnel over one of the physical networks. That is, any VM running on any physical server connected to the ToR 111 and any VM running on any physical server connected to the ToR 131 are enabled to send and receive L2 frames between them through the L2 tunnel over one of the physical networks.

Similarly, it is also possible to connect any VM running on any physical server connected to the ToR 111 and any VM running on any physical server connected to the ToR 151, through an L2 tunnel over one of the physical networks. Similarly, it is also possible to connect any VM running on any physical server connected to the ToR 131 and any VM running on any physical server connected to the ToR 151, through an L2 tunnel over one of the physical networks.

Connecting two VMs in the IaaS by using an L2 tunnel over a physical network, which is an L3 network, makes it possible to realize a communication link between the two VMs. Therefore, realizing T (where 1 ≤ T) communication links by T tunnels makes it possible to configure (i.e., set up) a virtual Ethernet which connects a plurality of VMs in the IaaS.

The technology of configuring a virtual Ethernet over an L3 network by using the tunneling technique is called a "network virtualization over layer 3" (NVO3). A study for standardizing the NVO3 has been conducted by the NVO3 working group of the Internet engineering task force (IETF). Some problems of scalability with the spread of cloud computing may be solved by using the NVO3.

For example, the number of physical nodes allowed to be accommodated in a single physical L2 network segment is limited. Furthermore, the number of MAC addresses that a single L2 switch is capable of handling is also limited by an upper limit. The specific value of the upper limit depends on the performance of the L2 switch. For example, an L2 switch which is capable of handling the maximum of about 4,000 through 10,000 MAC addresses is often used.

However, with the growth of a cloud, there is an increasing number of physical servers in the DC. For example, there is a DC having 1,000 or more physical servers, and also a DC having about 10,000 physical servers. Therefore, it is harder and harder to cover all physical servers in the DC with a single L2 network segment.

Since the number of physical servers in a DC is increasing as described above, the number of VMs running in the DC is correspondingly increasing. Although the number of VMs running on one physical server is not fixed, there is the case in which about 60 VMs run on one physical server. Therefore, there is the possibility that tens of thousands of VMs run in the DC.

However, the number of VLANs which are distinguishable by different VLAN-IDs is much smaller than the number of VMs, which may be tens of thousands. This is because, in accordance with the 802.1Q standard of the Institute of Electrical and Electronics Engineers (IEEE), a VLAN-ID is a value of 12 bits. That is, the number of available VLANs tends to be insufficient.

Thus, there are some problems of scalability with a physical L2 network. The NVO3 is a technology for solving these problems of scalability in a large-scaled DC.

Therefore, in the present embodiment, the NVO3 is used to solve the problems of scalability. Concretely, as described above, two VMs are connected to each other by an L2 tunnel over an L3 physical network in the present embodiment. When an L2 tunnel is created over a physical network, this physical network is also referred to as a "delivery network".

In addition, as described later in detail, one of the merits of the present embodiment is that a delivery network is selectable for each pair of VMs. As a result, the present embodiment enables selection of the QoS of a communication through a tunnel for each pair of VMs. This is because different physical networks may provide different levels of QoS. The above-mentioned merit means, to a user, that a service level of a communication between two VMs is selectable for each pair of VMs.

FIG. 1 also illustrates an IaaS management server 180 which manages a plurality of physical servers in the network system 100. For convenience of explanation below, it is assumed that the IaaS management server 180 is connected to the best-effort IP router network 170.

However, the IaaS management server 180 may be connected to the MPLS network 171 or the leased line network 172. As another example, each of the ToRs 111, 131, and 151 may further be connected to a network that is used for the administrative purposes and is not illustrated in FIG. 1. Then, the IaaS management server 180 may be connected to the network for the administrative purposes.

In any way, the IaaS management server 180 is enabled to communicate with each physical server through certain one of the networks. Therefore, the IaaS management server 180 is enabled to give a command about setting a tunnel to a physical server on which a VM at one endpoint of the tunnel is running and a physical server on which a VM at the other endpoint of the tunnel is running.

FIG. 1 illustrates a network interface card (NIC) 121 included in the physical server 120, a NIC 141 included in the physical server 140, and a NIC 161 included in the physical server 160.

Each NIC may be a NIC of expansion card type, or an on-board NIC. Each NIC concretely includes a physical port for insertion of a cable, a circuit called a "PHY chip" for process of a physical layer, a circuit called a "MAC chip" for process of a MAC sublayer, etc.

In the present embodiment, three different IP addresses which start with three different prefixes corresponding to the three physical networks are assigned to each NIC. For convenience of explanation below, the following situation is assumed.

• The prefix corresponding to the best-effort IP router network 170 is 2001:db8:1::/48. Therefore, an L2 segment in the best-effort IP router network 170 is identifiable by the 49th through 64th bits of the IP address.
- The prefix corresponding to the MPLS network 171 is 2001:db8:2::/48. Therefore, an L2 segment in the MPLS network 171 is identifiable by the 49th through 64th bits of the IP address.
- The prefix corresponding to the leased line network 172 is 2001:db8:3::/48. Therefore, an L2 segment in the leased line network 172 is identifiable by the 49th through 64th bits of the IP address.
- Three IP addresses I1 (2001:db8:1:1::1), I2 (2001:db8:2:1::1), and I3 (2001:db8:3:1::1) are assigned to the NIC 121.
- Three IP addresses I4 (2001:db8:1:98::1), I5 (2001:db8:2:98::1), and I6 (2001:db8:3:98: :1) are assigned to the NIC 141.
- Three IP addresses I7 (2001:db8:1:99::1), I8 (2001:db8:2:99::1), and I9 (2001:db8:3:99::1) are assigned to the NIC 161.

In the example above, the value of the least significant 64 bits of any of the three IP addresses I1, I4, and I7 corresponding to the best-effort IP router network 170 is 0:0:0:1. Similarly, in the example above, the values of the least significant 64 bits of the IP addresses I2, I5, and I8 are equal to each other, and the values of the least significant 64 bits of the IP addresses I3, I6, and I9 are equal to each other.

From other point of view, the values of the least significant 64 bits of the three IP addresses I1, I2, and I3 assigned to a single NIC, i.e., the NIC 121, are equal to each other in the example above. Similarly, the values of the least significant 64 bits of the IP addresses I4, I5, and I6 are equal to each other and the values of the least significant 64 bits of the IP addresses I7, I8, and I9 are equal to each other in the example above.

Setting the same value to the least significant n bits of a plurality of IP addresses which are assigned to a plurality of different NICs and correspond to the same physical network as described above is useful in simplifying the administrative operations to be performed by an IaaS provider. Similarly, setting the same value to the least significant n bits of a plurality of IP addresses assigned to one NIC is useful in simplifying the administrative operations. However, it is obvious that any value may be set to the bits less significant than the prefix corresponding to each physical network.

As described above, in the present embodiment, a plurality of IP addresses are assigned to one NIC. The multi-prefix function of the Internet protocol version 6 (IPv6) allows a plurality of IP addresses to be assigned to one device as described above. That is, according to the multi-prefix function allows a plurality of IP addresses to be associated with one MAC address of one device.

Furthermore, FIG. 1 exemplifies VMs 122 and 123 which run on the physical server 120, a VM 142 which runs on the physical server 140, and a VM 162 which runs on the physical server 160. Obviously, other VMs not illustrated in FIG. 1 may also run on the physical server 120, 140, and/or 160.

In the present embodiment, the type of virtualization architecture for running one or more VMs on one physical server is not specifically limited. For example, a hypervisor may be used, or a kernel-based virtual machine (KVM) may be used. As another example, the OS virtualization technology for providing a plurality of environments, which are called containers or zones, on the OS may also be used.

Regardless of the type of virtualization architecture, the network access by a VM is performed through a "host OS" in the broad sense. The host OS is a special OS privileged to access physical hardware such as a physical NIC etc.

For example, when the Xen hypervisor is used, the host OS is the OS running on the "domain 0" (i.e., a domain having the privilege relating to physical hardware), and the VM is a "domain U" (i.e., unprivileged domain). When the KVM is used, a guest OS runs on each VM using the function of the kernel of the host OS. When the OS virtualization technology is used, for example, a non-global zone, which is an instance corresponding to an individual VM, may be included in the global zone provided by the host OS.

Regardless of the type of virtualization architecture, a virtual NIC is included in the VM. The virtual NIC in the VM is omitted in FIG. 1. Instead, FIG. 1 exemplifies a virtual NIC in the host OS.

The virtual NIC in the host OS is a virtual interface which is provided by the physical server (more concretely, by the host OS) between the physical NIC and the VM (more concretely, a virtual NIC in the VM). Due to space limitations, each virtual NIC in the host OS is abbreviated as "VNIC" in FIG. 1.

In detail, the virtual NIC in the host OS includes a virtual interface on the VM side and a virtual bridge. The virtual bridge operates so as to bridge the virtual interface on the VM side and the interface of the physical NIC. For example, when the Xen hypervisor is used, the virtual interface on the VM side is identified by the name of "vif1.0" etc., the virtual bridge is identified by the name of "xenbr0" etc., and the interface of the physical NIC is identified by the name of "peth0" etc. In other virtualization architectures, a similar virtual NIC is provided in the host OS. That is, the virtual NIC in the host OS provides an interface between the VM and the physical NIC by a virtual bridge that bridges the virtual interface paired with the virtual NIC in the VM and the physical interface (that is, the interface of the physical NIC).

FIG. 1 concretely illustrates the following virtual NICs.

The VM 122 and the VM 162 are connected to each other through a tunnel over the best-effort IP router network 170. For this connection, a virtual NIC 124 is provided in the host OS of the physical server 120, and a virtual NIC 163 is provided in the host OS of the physical server 160.

The virtual NIC 124 in the host OS of the physical server 120 provides an interface between the NIC 121 and the virtual NIC which is not illustrated in FIG. 1 but is included in the VM 122. That is, the virtual NIC 124 is paired with the virtual NIC which is not illustrated in FIG. 1 but is included in the VM 122. To be more concrete, the virtual NIC 124 provides the VM 122 with an interface for communication using the IP address I1 (2001:db8:1:1::1), which starts with the prefix corresponding to the best-effort IP router network 170.

Similarly, the virtual NIC 163 in the host OS of the physical server 160 provides an interface between the NIC 161 and the virtual NIC which is not illustrated in FIG. 1 but is included in the VM 162. That is, the virtual NIC 163 is paired with the virtual NIC which is not illustrated FIG. 1 but is included in the VM 162. To be more concrete, the virtual NIC 163 provides the VM 162 with an interface for communication using the IP address I7 (2001:db8:1:99::1), which starts with the prefix corresponding to the best-effort IP router network 170.

Therefore, the VM 122 and the VM 162 are enabled to communicate with each other through the virtual NIC 124, the NIC 121, the ToR 111, the best-effort IP router network 170, the ToR 151, the NIC 161, and the virtual NIC 163.

To be more concrete, according to a command which is received from the IaaS management server 180 when a tunnel is created, the physical server 120 sets up the virtual NIC 124. Then, the virtual NIC 124 appropriately encapsulates an L2 frame output from the VM 122. The encapsulated L2 frame is included in an L3 packet. Thus, the L2 frame encapsulated in the L3 packet reaches the VM 162 through the tunnel over the best-effort IP router network 170.

Similarly, according to a command which is received from the IaaS management server 180 when the tunnel is created, the physical server 160 sets up the virtual NIC 163. Then, the virtual NIC 163 appropriately encapsulates an L2 frame output from the VM 162. The encapsulated L2 frame is included in an L3 packet. Thus, the L2 frame encapsulated in the L3 packet reaches the VM 122 through the tunnel over the best-effort IP router network 170.

In addition, in the example in FIG. 1, the VM 123 and the VM 142 are connected to each other through a tunnel over the leased line network 172. For this connection, a virtual NIC 125 is further provided in the host OS of the physical server 120, and a virtual NIC 143 is provided in the host OS of the physical server 140.

The virtual NIC 125 in the host OS of the physical server 120 provides an interface between the NIC 121 and the virtual NIC which is not illustrated in FIG. 1 but is included in the VM 123. To be more concrete, the virtual NIC 125 provides the VM 123 with a virtual interface for communication using the IP address I3 (2001:db8:3:1::1), which starts with the prefix corresponding to the leased line network 172.

Similarly, the virtual NIC 143 in the host OS of the physical server 140 provides an interface between the NIC 141 and the virtual NIC which is not illustrated in FIG. 1 but is included in the VM 142. To be more concrete, the virtual NIC 143 provides the VM 142 with a virtual interface for communication using the IP address I6 (2001:db8:3:98::1), which starts with the prefix corresponding to the leased line network 172.

Therefore, the VM 123 and the VM 142 are enabled to communicate with each other through the virtual NIC 125, the NIC 121, the ToR 111, the leased line network 172, the ToR 131, the NIC 141, and the virtual NIC 143.

To be more concrete, according to a command which is received from the IaaS management server 180 when a tunnel is created, the physical server 120 sets up the virtual NIC 125. Then, the virtual NIC 125 appropriately encapsulates an L2 frame output from the VM 123. Thus, the encapsulated L2 frame reaches the VM 142 through the tunnel over the leased line network 172.

Similarly, according to a command which is received from the IaaS management server 180 when the tunnel is created, the physical server 140 sets up the virtual NIC 143. Then, the virtual NIC 143 appropriately encapsulates an L2 frame output from the VM 142. Thus, the encapsulated L2 frame reaches the VM 123 through the tunnel over the leased line network 172.

In the best-effort IP router network 170, best-effort communication (that is, communication for which the QoS is not guaranteed) is performed. The QoS provided by the best-effort IP router network 170 may be regarded as zero for convenience.

On the other hand, in the MPLS network 171, communication is performed with the QoS which depends on the label. The MPLS network 171 may support only a single level of QoS, or two or more levels of QoS.

Furthermore, in the leased line network 172, communication is performed with a bandwidth that is predetermined and guaranteed (that is, communication is performed with predetermined QoS). In other words, the leased line network 172 supports the predetermined QoS.

However, the QoS is not guaranteed outside the MPLS network 171. The QoS is not guaranteed outside the leased line network 172, either. That is, the communication within a physical network is performed with the QoS provided by the physical network, but the QoS is not guaranteed outside the physical network.

However, both the endpoints of the tunnel used in the communication between two VMs are outside the physical network such as the best-effort IP router network 170, the MPLS network 171, the leased line network 172, etc. Therefore, desired QoS is attained throughout the whole tunnel from one endpoint to the other endpoint when the desired QoS is attained not only within the physical network, but also within the following two sections.
- The section starting from the physical NIC of the physical server on which the sender VM is running, passing through a ToR, and ending at the edge router (or edge switch) of the physical network as a delivery network
- The section starting from another edge router (or another edge switch) of the physical network, passing through another ToR, and ending at the physical NIC of the physical server on which the destination VM is running.

There are at least two methods to attain desired QoS throughout the whole tunnel from one endpoint of the tunnel to the other endpoint of the tunnel. In the present embodiment, any of the methods may be used. It is also preferable to combine the two methods.

The first method is to use ToRs each having a sufficiently large throughput. The "sufficiently large throughput" herein depends on various factors as listed below.
- The number of physical servers connected to the ToR
- The number of VMs running on each physical server
- The amount of data sent and received by each VM
- The number of physical networks to which the ToR is connected (that is, the number of physical networks used by the network system 100)
- The QoS provided by each physical network

The throughput of the ToR depends on the specifications of the ToR. The specifications of the ToR are defined by various items. For example, the specification items may include: the performance of a hardware circuit and/or a processor for switching a frame from a port to another port inside the ToR; the capacity of a buffer provided in the ToR; the communication standard(s) supported by the ToR; and so on.

Therefore, a designer who designs the network system 100 (for example, a network administrator of an IaaS provider) estimates a throughput that can be regarded as "sufficiently large", depending on the various factors as described above. Then, the designer sets up (i.e., configures) the network system 100 by using the ToRs each having the throughput of the value not less than the estimated value.

The use of the ToRs each having a sufficiently large throughput makes it possible to prevent the congestion in the above-mentioned two sections. As a result, the delay due to congestion and the discard of a frame due to congestion can be avoided. That is, the use of the ToRs each having a sufficiently large throughput makes it possible to prevent degradation in communication QoS inside the above-mentioned two sections. Consequently, the use of the ToRs each having a sufficiently large throughput makes it possible to achieve the end-to-end QoS between VMs.

The second method for attaining the end-to-end QoS between VMs is a method in which class-of-service (CoS) control based on a VLAN tag is performed in the above-mentioned two sections.

According to the IEEE 802.1Q standard, a VLAN tag includes a 16-bit tag protocol identifier (TPID) and a 16-bit tag control information (TCI). The TCI includes a 3-bit priority code point (PCP), a 1-bit canonical format indicator (CFI), and a 12-bit VLAN-ID. Among these fields in the VLAN tag, the PCP indicates the priority. The PCP is used for CoS control. In the PCP field, the value of "0" indicates the lowest priority, and the value of "7" indicates the highest priority.

In the second method, the value depending on the QoS is set as the PCP in the VLAN tag. Therefore, the CoS control is performed in the above-mentioned two sections depending on the set priority.

For example, when the three physical networks exemplified in FIG. 1 are used, the QoS of the leased line network 172 is the highest, the QoS of the MPLS network 171 is the second highest, and the QoS of the best-effort IP router network 170 is the lowest. Therefore, the largest value of three values which are appropriately selected from among eight values of 0 through 7 in advance is used as the PCP corresponding to the data sent through a tunnel over the leased line network 172. As the PCP corresponding to the data sent through a tunnel over the MPLS network 171, the second largest value of the above-mentioned three values is used. As the PCP corresponding to the data sent through a tunnel over the best-effort IP router network 170, the smallest value of the above-mentioned three values is used.

The above-mentioned three values may be appropriately determined by an IaaS provider. For convenience of explanation below, assume that the above-mentioned three values are, for example, "0", "2", and "5".

As described above, in the example illustrated in FIG. 1, the VMs 123 and 142 send and receive data through the tunnel over the leased line network 172. Therefore, in the following two sections, the value of "5" corresponding to the leased line network 172 is specified as the PCP for the data sent and received between the VMs 123 and 142.
- The section starting from the NIC 121, passing through the ToR 111, and ending at an edge router (or an edge switch) of the leased line network 172
- The section starting from another edge router (or another edge switch) of the leased line network 172, passing through the ToR 131, and ending at the NIC 141

On the other hand, in the example illustrated in FIG. 1, the VMs 122 and 162 send and receive data through the tunnel over the best-effort IP router network 170. Therefore, in the following two sections, the value of "0" corresponding to the best-effort IP router network 170 is specified as the PCP for the data sent and received between the VMs 122 and 162.
- The section starting from the NIC 121, passing through the ToR 111, and ending at an edge router (or an edge switch) of the best-effort IP router network 170
- The section starting from another edge router (or another edge switch) of the best-effort IP router network 170, passing through the ToR 151, and ending at the NIC 161

For example, assume that the VM 122 is about to send data to the VM 162 substantially simultaneously with a point in time when the VM 123 is about to send data to the VM 142. Even in this case, when sent from the NIC 121 to the ToR 111, the data to be sent by the VM 123 to the VM 142 is prioritized over the data to be sent by the VM 122 to the VM 162. That is, even if the former data and the latter data conflict with each other in the NIC 121, the former data wins the conflict because the PCP of "5", which indicates the higher priority over the PCP of "0" specified for the latter data, is specified for the former data.

Furthermore, as another example, assume that the following two points in time are substantially simultaneous with each other.
- The point in time when the ToR 111 receives, from the edge router of the best-effort IP router network 170, the data which is addressed to the VM 122 and sent from the VM 162
- The point in time when the ToR 111 receives, from the edge router of the leased line network 172, the data which is addressed to the VM 123 and sent from the VM 142.

Even in the case above, when sent from the ToR 111 to the NIC 121, the data which is addressed to the VM 123 and sent from the VM 142 is prioritized over the data which is addressed to the VM 122 and sent from the VM 162. That is, even if the former data and the latter data conflict with each other in the ToR 111 (in detail, in the output queue for the port connected to the NIC 121), the former data wins the conflict because the PCP of "5", which indicates the higher priority over the PCP of "0" specified for the latter data, is specified for the former data.

As described above, in the second method, the CoS control is performed in the section between the physical server (in more detail, a physical NIC of the physical server) and the edge router (or edge switch) of the physical network. The CoS control thus performed substantially achieves the flow control which depends on the QoS and is applied to the section between the physical server and the edge router (or edge switch). As a result, in the second method, the end-to-end QoS is attained.

As described above, the end-to-end QoS between VMs is substantially guaranteed by the first method, the second method, or a combination of them.

An L2 frame sent from the NIC 121 to the ToR 111 includes the following field.
- an outer L2 header
- a header for tunneling (hereafter referred to as a "tunnel header")
- an inner L2 header
- an inner L3 packet
- an outer L2 trailer

The inner L3 packet is a payload of the inner L2 frame to be encapsulated and sent through a tunnel. The L3 protocol used for the inner L3 packet is not specifically restricted. For example, the inner L3 packet may be an IP packet (that is, an IP datagram). The payload of the inner L3 packet may be a protocol data unit (PDU) of an arbitrary protocol.

The inner L2 frame is generated by a sender VM. The inner L2 frame has the format in accordance with the L2 protocol used between the VMs (i.e. , in accordance with the payload protocol in tunneling). The L2 protocol used between the VMs is not specifically restricted. For example, the inner L2 frame may be an Ethernet frame.

The concrete format of the tunnel header depends on the delivery protocol in tunneling. According to the present embodiment, the delivery protocol is not specifically restricted. For example, various protocols are available as exemplified below.
- When the virtual extensible local area network (VXLAN) is used, the tunnel header includes an IP header, a user datagram protocol (UDP) header, and a VXLAN header.
- When the network virtualization using generic routing encapsulation (NVGRE) is used, the tunnel header includes an IP header and a generic routing encapsulation (GRE) header.
- When the layer 2 tunneling protocol version 3 (L2TPv3) is used, the tunnel header includes an IP header and an L2TP header. In a certain implementation, the tunnel header may include an IP header, a UDP header, and an L2TP header.
- When the EtherIP is used, the tunnel header includes an IP header and an EtherIP header.

Although the concrete format of the tunnel header may vary depending on the embodiments as exemplified above, the tunnel header includes an IP header in any case. In detail, the IP header included in the tunnel header is an IPv6 header in the present embodiment illustrated in FIG. 1.

The source IP address specified in the IPv6 header in the tunnel header is an IP address which starts with the prefix of the physical network as a delivery network, among a plurality of IP addresses assigned to the physical NIC of the physical server on the sender side. The destination address specified in the IPv6 header in the tunnel header is an IP address which starts with the prefix of the physical network as a delivery network, among a plurality of IP addresses assigned to the physical NIC of the physical server on the receiving side.

The payload of the outer L2 frame includes the tunnel header, the inner L2 header, and the inner L3 packet. When the tunneling is performed, the trailer of the inner L2 frame may be omitted depending on a protocol. For example, when the VXLAN protocol is used, the frame check sequence (FCS) of the inner L2 frame is omitted. On the other hand, the outer L2 frame according to the present embodiment is an Ethernet frame, and thus, the FCS is specifically used as the outer L2 trailer.

When the above-mentioned second method is used, the outer L2 header includes a VLAN tag in the section between the physical server and the edge router (or edge switch). Then, according to the value of the PCP in the VLAN tag, the CoS control is performed as described above. However, when the second method above is not adopted, the outer L2 header does not include a VLAN tag.

Regardless of whether or not the VLAN tag is used, the inner L2 frame is sent from a VM to another VM through a tunnel over one of the physical networks at the QoS desired by a user, according to the present embodiment. That is, a communication between VMs at a desired QoS is enabled by creating a tunnel over a physical network which supports the QoS which is sufficiently high to provide a user-requested service level.

Then, as illustrated in FIG. 1, when a plurality of physical networks which support a plurality of different levels of QoS are used, there are a plurality of choices for the QoS. Therefore, according to the present embodiment, VMs are enabled to send and receive data between them with the QoS appropriately selected from among the plurality of choices at a request of the user.

In more detail, in order to attain a desired QoS between VMs, two physical servers which host two VMs appropriately set up a tunnel in accordance with a command received from the IaaS management server 180. Described below is the present embodiment from the aspect of the operation of the IaaS management server 180.

The IaaS management server 180 is an example of a management device which manages the network system 100. The IaaS management server 180 receives a command (hereafter referred to as a "tunnel connection command") for connecting two VMs running on different physical machines with each other through a tunnel (concretely, a layer 2 tunnel) corresponding to particular QoS.

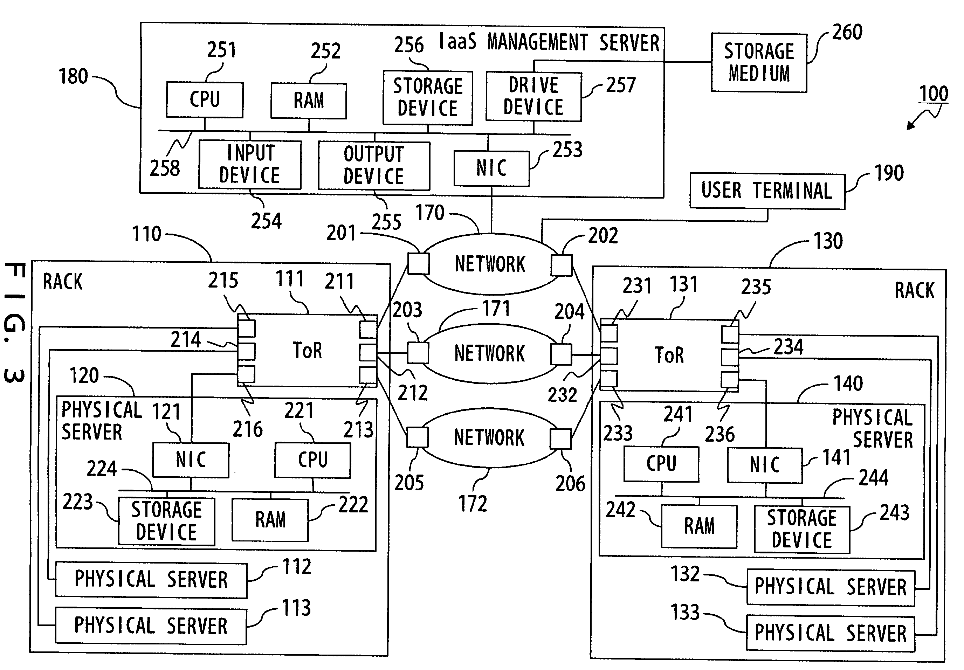

Concretely, the IaaS management server 180 accepts the tunnel connection command through an input device (for example, an input device 254 illustrated in FIG. 3 described later) or a communication device (for example, a NIC 253 illustrated in FIG. 3 described later). That is, the input device is an example of accepting means for accepting a tunnel connection command, and the communication device is another example of the accepting means.

Let N be the number of physical networks (where N ≥ 2). In the example in FIG. 1, N=3. Since each physical network supports one or more levels of QoS, a total of M levels of QoS are supported by the N physical networks (where M ≥ N).

For example, when the MPLS network 171 supports only one level of QoS, M=N=3. When the MPLS network 171 supports two levels of QoS, M=4. The particular QoS specified for the tunnel by the tunnel connection command as described above is one of the M levels of QoS. The tunnel herein is concretely an L2 tunnel over an L3 physical network.

For convenience of explanation below, assume that the tunnel connection command for connecting a first VM and a second VM with each other through a tunnel corresponding to particular QoS is accepted by the IaaS management server 180. For example, the first VM may be the VM 123, and the second VM may be the VM 142.

Furthermore, assume that the first VM (for example, the VM 123) runs on a first physical machine (for example, the physical server 120). The first physical machine is connected to the N physical networks through a first physical network interface device (for example, the NIC 121). Concretely, the first physical machine is connected to a first communication device (for example, the ToR 111) through the first physical network interface device, and the first communication device is connected to the N physical networks.

Similarly, assume that the second VM (for example, the VM 142) runs on a second physical machine (for example, the physical server 140). The second physical machine is connected to the N physical networks through a second physical network interface device (for example, the NIC 141). Concretely, the second physical machine is connected to a second communication device (for example, the ToR 131) through the second physical network interface device, and the second communication device is connected to the N physical networks.

A plurality of addresses are assigned to the first physical network interface device. Concretely, N addresses (which are specifically IP addresses, and in more detail, are IPv6 addresses) are assigned to the first physical network interface device correspondingly to the N physical networks.

Among these N addresses, the address corresponding to a particular physical network which supports the particular QoS among the N physical networks is hereafter referred to as a "first address" for convenience. That is, the first address is the address assigned to the first physical network interface device corresponding to the particular physical network.

For example, N (=3) IP addresses, i.e., the IP addresses I1 through I3, are assigned to the NIC 121. When the particular physical network is, for example, the leased line network 172, the first address is the IP address I3 of the IP addresses I1 through I3.

Similarly, a plurality of addresses are assigned also to the second physical network interface device. Concretely, N addresses are assigned to the second physical network interface device correspondingly to the N physical networks.

Among these N addresses, the address corresponding to the particular physical network is hereafter referred to as a "second address" for convenience. That is, the second address is the address assigned to the second physical network interface device corresponding to the particular physical network.

For example, N (=3) IP addresses, i.e., the IP addresses I4 through I6, are assigned to the NIC 141. When the particular physical network is, for example, the leased line network 172, the second address is the IP address I6 of the IP addresses I4 through I6.

Upon receipt of the above-mentioned tunnel connection command, the IaaS management server 180 gives (i.e., issues) commands to the first and second physical machines through the communication device built in or connected to the IaaS management server 180. The communication device built in or connected to the IaaS management server 180 may operate not only as the accepting means for accepting the tunnel connection command, but also as transmission means for sending the commands to the first and second physical machines.

The commands given to the first and second physical machines by the IaaS management server 180 are commands relating to the addresses to be used when an L2 frame (for example, an Ethernet frame) is encapsulated.

The first physical machine may encapsulate, in a first L3 packet (concretely an IP packet), a first L2 frame that the first VM decides to send to the second VM (or, in other words, that is output from the first VM to be sent to the second VM). This encapsulation is performed in order to send the first L2 frame through a tunnel. The IaaS management server 180 instructs the first physical machine to use the first and second addresses in encapsulating the first L2 frame in the first L3 packet. To be more concrete, the IaaS management server 180 instructs the first physical machine to use the first address as the source address of the first L3 packet, and the second address as the destination address of the first L3 packet.

Similarly, the second physical machine may encapsulate, in a second L3 packet (concretely an IP packet), a second L2 frame that the second VM decides to send to the first VM (or, in other words, that is output from the second VM to be sent to the first VM). This encapsulation is performed in order to send the second L2 frame through a tunnel. The IaaS management server 180 instructs the second physical machine to use the second and first addresses in encapsulating the second L2 frame in the second L3 packet. To be more concrete, the IaaS management server 180 instructs the second physical machine to use the second address as the source address of the second L3 packet, and the first address as the destination address of the second L3 packet.

The above-mentioned command to the first physical machine may concretely be a notification of the information including the first address and the second address. That is, the IaaS management server 180 may send, to the first physical machine, setting information that specifies the first address as the source address to be used for encapsulation and specifies the second address as the destination address to be used for encapsulation. The first physical machine stores the first and second addresses according to the setting information sent from the IaaS management server 180, and uses the stored first and second addresses when it encapsulates the first L2 frame. A similar scenario holds true for the command given to the second physical machine, mutatis mutandis.

Furthermore, the IaaS management server 180 may generate or determine tunnel identification information that identifies the tunnel (that is, the L2 tunnel), and notify the first physical machine and the second physical machine of the tunnel identification information through the communication device. For example, the IaaS management server 180 may send, to the first physical machine, the information including the first address, the second address, and the tunnel identification information. By so doing, the IaaS management server 180 may give the above-mentioned command to the first physical machine and simultaneously notify the first physical machine of the tunnel identification information. Similarly, the IaaS management server 180 may send, to the second physical machine, the information including the second address, the first address, and the tunnel identification information.

The first physical machine may use the tunnel identification information when the above-mentioned encapsulation is performed. Concretely, the first physical machine may include, in the first L3 packet, the tunnel identification information at a location that precedes the encapsulated first L2 frame. Similarly, the second physical machine may include, in the second L3 packet, the tunnel identification information at a location that precedes the encapsulated second L2 frame.

The first and second L3 packets concretely include, for example, the above-mentioned tunnel header. For example, when the VXLAN header is used, the tunnel identification information concretely is a VXLAN network identifier (VNI). As another example, when the GRE header is used, the tunnel identification information concretely may be all or a part of the key defined by the request for comments 2890 (RFC 2890). The key in the GRE header is also referred to a "GRE key", and a technology of using a part of the key as a tenant network identifier (TNI) is also well known.

The first and second addresses specified by the IaaS management server 180 as described above are addresses which are assigned to the first and second physical network interface devices, respectively. On the other hand, the first and second VMs do not directly recognize an address assigned to a physical device. Therefore, the first physical machine provides a first virtual interface between the first physical network interface device and the first VM. Furthermore, the second physical machine provides a second virtual interface between the second physical network interface device and the second VM.

The IaaS management server 180 may further instruct the first physical machine to associate the first virtual interface with a combination of the first address, the second address, and the tunnel identification information. That is, the IaaS management server 180 may instruct the first physical machine to provide the first virtual interface, which corresponds to the combination of the first address, the second address, and the tunnel identification information, between the first physical network interface device and the first VM. By this instruction, the IaaS management server 180 may enable the first physical machine to output the second L2 frame to the first VM through the first virtual interface upon receipt of the second L3 packet at the first physical network interface device.

For example, assume that the first VM is the VM 123, the first physical machine is the physical server 120, and the first address is the IP address I3. Also assume that the second VM is the VM 142, the second physical machine is the physical server 140, and the second address is the IP address I6.

In the case above, the first virtual interface is the virtual NIC 125 provided in the host OS of the physical server 120, and the second virtual interface is the virtual NIC 143 provided in the host OS of the physical server 140. The IaaS management server 180 instructs the physical server 120 to associate the virtual NIC 125 with the combination of the IP address I3, the IP address I6, and the tunnel identification information.

In accordance with this instruction, the physical server 120 associates the virtual NIC 125 with the combination of the IP address I3, the IP address I6, and the tunnel identification information.

When the NIC 121 receives the second L3 packet, in which the second L2 frame sent from the VM 142 and addressed to the VM 123 is encapsulated and included, the outer L3 header includes the IP address I3 as the destination IP address. Furthermore, the outer L3 header includes the IP address I6 as the source IP address, and also includes the tunnel identification information.

Therefore, the physical server 120 is enabled to select the virtual NIC 125, which is associated with the combination of the IP address I3, the IP address I6, and the tunnel identification information, from among two or more virtual interfaces which may exist in the physical server 120. As a result, the physical server 120 is enabled to output the inner L2 frame to the VM 123 through the virtual NIC 125. As described above, it is achieved that the inner L2 frame appropriately reaches the VM 123.

Similarly, the IaaS management server 180 may instruct the second physical machine to associate the second virtual interface with a combination of the second address, the first address, and the tunnel identification information. By this instruction, the IaaS management server 180 may enable the second physical machine to output the first L2 frame to the second VM through the second virtual interface upon receipt of the first L3 packet at the second physical network interface device.

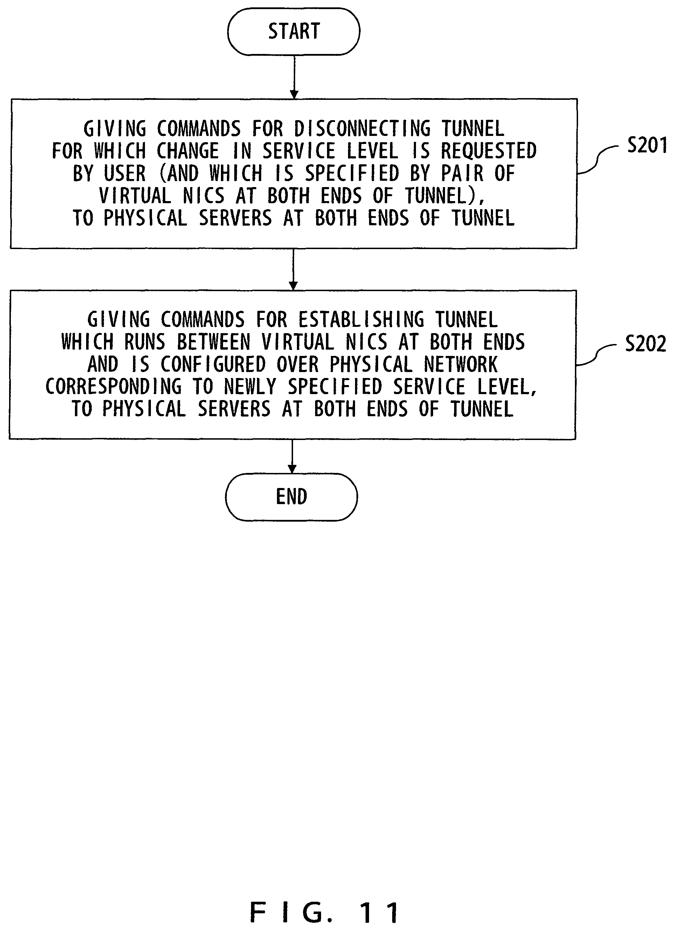

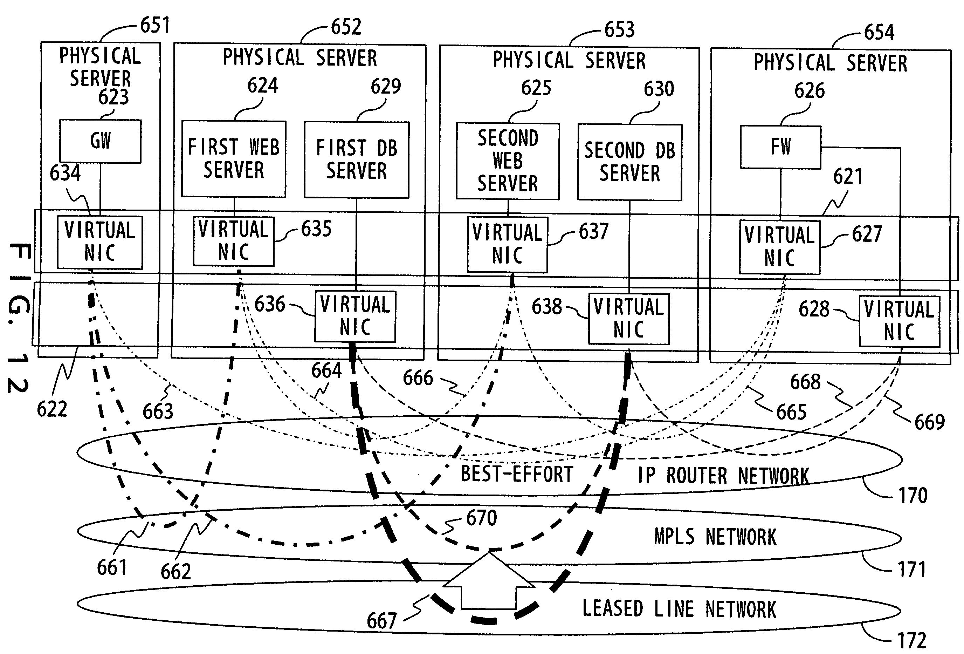

The tunnel connection command may be a command to newly create a tunnel corresponding to the particular QoS when no tunnel corresponding to any QoS is created between the first VM and the second VM. On the other hand, the tunnel connection command may be a command to replace, with a tunnel corresponding to the particular QoS, another tunnel which corresponds to different QoS other than the particular QoS and has been created between the first VM and the second VM. In the latter case, as described later with reference to FIGS. 11 and 12 in detail, the IaaS management server 180 may explicitly issue (i.e., give) a command to delete an existing tunnel, to the first and second physical machines.

For example, assume that the first VM is the VM 122, the second VM is the VM 162, and, there is an existing tunnel over the best-effort IP router network 170 as illustrated in FIG. 1. In this case, the existing tunnel may be deleted and a new tunnel may be created in order to replace the existing tunnel with the new tunnel.

For example, assume that the particular QoS specified for the new tunnel is concretely the QoS supported by the MPLS network 171. In the encapsulation for communication through the existing tunnel over the best-effort IP router network 170, the IP addresses I1 and I7 (that is, the addresses corresponding to the best-effort IP router network 170) are used. However, in the encapsulation for communication through the new tunnel over the MPLS network 171, the IP addresses I2 and I8 (that is, the addresses corresponding to the MPLS network 171) are used.

Therefore, in order to delete the existing tunnel, the IaaS management server 180 may instruct the first physical machine (i.e. , the physical server 120 in this example), which hosts the first VM, to stop using the IP addresses I1 and I7 in the encapsulation. Similarly, the IaaS management server 18 0 may instruct the second physical machine (i.e. , the physical server 160 in this example), which hosts the second VM, to stop using the IP addresses I7 and I1 in the encapsulation.

As described later in detail with reference to FIGS. 8 through 10, the tunnel connection command may be given to the IaaS management server 180 as a part of a certain command (hereafter referred to as a "network setting command").

For example, a user may design a virtual network to which a plurality of VMs belong. The first and second VMs, which are focused on by the tunnel connection command, may be two of the plurality of VMs.

The virtual network is realized by creating, for each pair of arbitrary two VMs out of the plurality of VMs, a tunnel which realizes a link between the pair of VMs concerned. Concretely, for each pair of VMs belonging to the virtual network, the network setting command specifies the QoS of a tunnel for connecting the pair of VMs concerned. The IaaS management server 180 may accept (i.e., receive) the network setting command as described above.

For example, a virtual network to which four VMs belong is realized by 6 (= 4x3/2) tunnels. Therefore, a network setting command with respect to a virtual network to which four VMs belong may include six tunnel connection commands. As exemplified above, a tunnel connection command may be a part of a network setting command. The IaaS management server 180 may accept a network setting command through an input device or a communication device.

The embodiment is described above from the aspect of the operation of the IaaS management server 180. Described below is a complement from the aspect of a physical machine which hosts a VM.

A physical machine (for example, the physical server 120) includes a physical network interface device (for example, the NIC 121) to which N addresses are assigned as described above.

The physical machine also includes a processor. The processor runs (i.e., executes) a VM. The processor encapsulates, in an L3 packet, an L2 frame that the VM decides to send to another VM (or, in other words, that is output from the VM to be sent to another VM). The processor then controls the physical network interface device to send the L3 packet. A central processing unit (CPU) 221 illustrated in FIG. 3 and described later is an example of the processor.

Furthermore, the physical machine includes a storage device which stores a source address and a destination address to be used in the encapsulation of an L2 frame. As examples of the storage device, FIG. 3 illustrates random access memory (RAM) 222, and a nonvolatile storage device 223.

For example, in accordance with the above-mentioned command from the IaaS management server 180, the first physical machine stores the first address and the second address as the source address and the destination address, respectively, in the storage device. In a case where the IaaS management server 180 notifies the first physical machine also of the tunnel identification information, the first physical machine stores also the tunnel identification information in the storage device.

Similarly, in accordance with the command from the IaaS management server 180, the second physical machine stores the second address and the first address as the source address and the destination address, respectively, in its storage device. In a case where the IaaS management server 180 notifies the second physical machine also of the tunnel identification information, the second physical machine also stores the tunnel identification information in the storage device.

The command from the IaaS management server 180 is, in other words, the setting information that specifies the source address and the destination address. As clearly described in the explanation above, the setting information may include the tunnel identification information.

As described above with reference to FIG. 1 as the "second method", the CoS control may be performed inside the section between the physical machine and the edge router (or edge switch) of the physical network.

As described above, the first physical machine (for example, the physical server 120) sends the first L3 packet, which includes the encapsulated first L2 frame, from the first physical network interface device (for example, the NIC 121) to the first communication device (for example, the ToR 111). When sending the first L3 packet, the first processor of the first physical machine prepends, to the first L3 packet, a first L2 header (i.e., the outer L2 header).

When the second method is adopted, concretely, the information about the priority is included in the first L2 header. That is, the first processor specifies, in the first L2 header, a particular value indicating a particular priority corresponding to the particular QoS, which is specified for the tunnel. Similarly, when the second physical machine sends the second L3 packet from the second physical network interface device to the second communication device, the second processor prepends, to the second L3 packet, a second L2 header in which the particular value is specified.

To be more concrete, the first L2 header includes a first VLAN tag in which the particular value is specified, and the second L2 header includes a second VLAN tag in which the particular value is specified. The first VLAN tag may further include a particular VLAN-ID which corresponds to the particular QoS or to the particular physical network, and the second VLAN tag may also include the particular VLAN-ID. When the particular physical network supports two or more levels in QoS, the VLAN-ID may be a value peculiar to the particular physical network, or a value different for each level in QoS.

As described above, a tunnel is created over a particular physical network in accordance with a tunnel connection command. The particular physical network may support only one level in QoS, or two or more levels in QoS.

When the particular physical network supports two or more levels in QoS including the particular QoS, a first field which relates to QoS and is included in the first L3 packet may be referred to while the first L3 packet is being sent. Similarly, a second field which relates to QoS and is included in the second L3 packet may be referred to while the second L3 packet is being sent.

Concretely, the first and second L3 packets are IPv6 packet according to the present embodiment. The information about QoS may be set in the "traffic class" field and/or the "flow label" field in the header of the IPv6 packet. The value(s) of the traffic class and/or the flow label may be referred to (i.e., referenced) while the IPv6 packet is being sent. That is, the QoS control depending on the value(s) of the traffic class and/or the flow label may be performed in the particular physical network.

Furthermore, when the particular physical network supports the two or more levels in QoS including the particular QoS as described above, signaling information may be sent over the particular physical network prior to the actual transmission of a packet.

Concretely, before the first L3 packet is sent, first signaling information which specifies the particular QoS may be sent from the first physical machine to the second physical machine over the particular physical network. Similarly, before the second L3 packet is sent, second signaling information which specifies the particular QoS may be sent from the second physical machine to the first physical machine over the particular physical network. For example, the signaling information may be sent over the MPLS network 171 according to the RSVP-TE.

As another example, instead of the first and second physical machines, the IaaS management server 180 may send the first signaling information and the second signaling information to the particular physical network. In this case, the first signaling information is the information which not only specifies the particular QoS as described above, but also specifies the first and second IP addresses as both endpoints of a path. In this case, similarly, the second signaling information is the information which specifies not only the particular QoS as described above, but also the second and first IP addresses as both endpoints of the path.

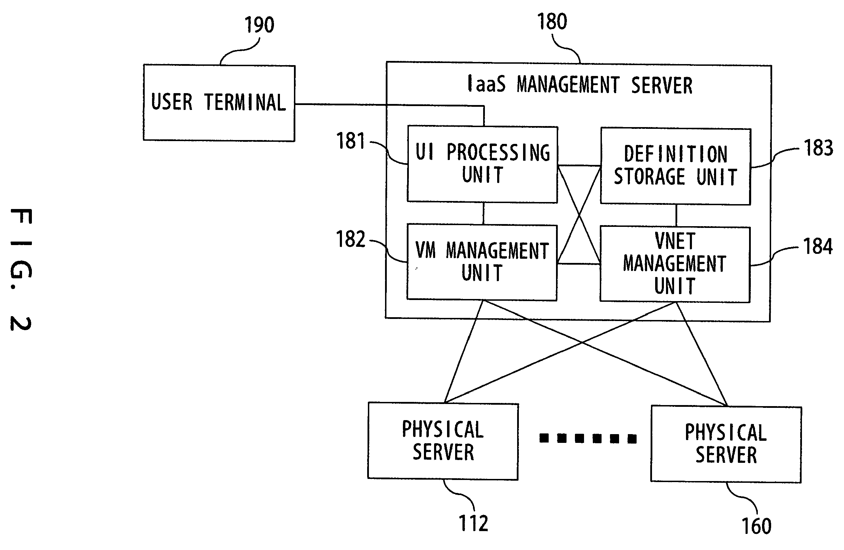

FIG. 2 illustrates the block diagram of the IaaS management server 180.

As described above with reference to FIG. 1, the IaaS management server 180 is connected to each physical server through a certain network. Due to space limitations, FIG. 2 illustrates only the physical servers 112 and 160 of the physical servers in FIG. 1.

The IaaS management server 180 is also connected to a user terminal 190 through the above-mentioned certain network used for connection to each physical server (or through another network not illustrated in the attached drawings). The user terminal 190 is used by a user (that is, a client of an IaaS provider).

The IaaS management server 180 includes a user interface (UI) processing unit 181, a VM management unit 182, a definition storage unit 183, and a VNET management unit 184. The term "VNET" is short for a "virtual network".

The UI processing unit 181 provides the user terminal 190 with a UI for defining a user system. The UI processing unit 181 accepts (i.e., receives) an input (that is, definition information for defining the user system) from the user terminal 190.

The "user system" herein refers to a system designed by the user. The user system includes one or more VMs leased out by the IaaS provider to the user (that is, one or more VMs provided as a service from the IaaS provider to the user). A concrete example of the definition information for defining the user system is described later.

The UI processing unit 181 stores the definition information received from the user terminal 190 in the definition storage unit 183. Although FIG. 2 illustrates only one user terminal 190, the UI processing unit 181 receives the definition information from each of a plurality of user terminals 190 corresponding to a plurality of users, and stores each piece of the definition information in the definition storage unit 183.

The VM management unit 182 performs various types of management on VMs. For example, when the UI processing unit 181 receives the definition information, the VM management unit 182 determines on which physical server each VM included in the user system is to be deployed. Furthermore, on the basis of this determination, the VM management unit 182 instructs each appropriate physical server to activate a new VM.

The VNET management unit 184 manages one or more virtual networks included in one user system. Concretely, each virtual network managed by the VNET management unit 184 is a virtual L2 network realized by using one or more L2 tunnels over one or more L3 physical networks. That is, the virtual L2 network is a type of overlay network.

To be more concrete, when V virtual network interfaces are connected to one virtual network, the one virtual network is realized by using (V×(V-1)/2) L2 tunnels. The (V×(V-1)/2) L2 tunnels may be created over one physical network, or created over two or more different physical networks. For each tunnel, the definition information specifies over which physical network the tunnel is to be created. According to the definition information, the VNET management unit 184 provides appropriate physical servers with appropriate commands to create tunnels.

For example, assume that the definition information for defining a user system including the VM 122 and the VM 162 in FIG. 1 is input from the user terminal 190. In this case, the VM management unit 182 instructs the physical server 120 to create and activate the VM 122, and instructs the physical server 160 to create and activate the VM 162. Furthermore, in this case, the VNET management unit 184 sends the information for setting a tunnel between the VMs 122 and 162, to the physical servers 120 and 160.

Then, the physical server 120 creates the VM 122 in accordance with the instruction (i.e., command) from the VM management unit 182, creates the virtual NIC 124 in the host OS according to the information provided from the VNET management unit 184, associates the VM 122 with the virtual NIC 124, and activates the VM 122. Similarly, the physical server 160 creates the VM 162 in accordance with the instruction (i.e. , command) from the VM management unit 182, creates the virtual NIC 163 in the host OS according to the information provided from the VNET management unit 184, associates the VM 162 with the virtual NIC 163, and activates the VM 162. As a result, a communication through a tunnel is enabled between the VMs 122 and 162.

Next, with reference to the hardware configuration diagram illustrated in FIG. 3, an example of hardware for realizing the network system 100 in FIG. 1 is described below. Due to space limitations, the rack 150 in FIG. 1 and the devices in the rack 150 are omitted in FIG. 3.

In FIG. 3, the best-effort IP router network 170, the MPLS network 171, and the leased line network 172 are respectively abbreviated as a "network 170", a "network 171", and a "network 172" for simplicity. FIG. 3 exemplifies the case in which the IaaS management server 180 and the user terminal 190 are connected to the best-effort IP router network 170.

FIG. 3 illustrates edge routers 201 and 202 in the best-effort IP router network 170, label edge routers (LERs) 203 and 204 in the MPLS network 171, and edge switches 205 and 206 in the leased line network 172. The edge router 201, the LER 203, and the edge switch 205 are connected to the ToR 111. The edge router 202, the LER 204, and the edge switch 206 are connected to the ToR 131.

The ToR 111 in the rack 110 includes at least six physical ports 211 through 216. The port 211 is connected to the edge router 201 through a cable, and the port 212 is connected to the LER 203 through a cable, and the port 213 is connected to the edge switch 205 through a cable. The port 214 is connected to the physical server 112 through a cable, the port 215 is connected to the physical server 113 through a cable, and the port 216 is connected to the physical server 120 (more concretely the NIC 121) through a cable.

The physical server 120 is a computer. The physical server 120 includes the NIC 121 as illustrated in FIG. 1. Furthermore, the physical server 120 includes one or more CPUs 221 and RAM 222. The VMs 122 and 123 and the virtual NICs 124 and 125 in FIG. 1 are realized by execution of a program (or programs) by the CPU 221. The CPU 221 is an example of a processor.

The physical server 120 also includes a nonvolatile storage device 223. The storage device 223 may be a hard disk drive (HDD), a solid-state drive (SSD), or a combination of them. Furthermore, read-only memory (ROM) may be used as the storage device 223. The storage device 223 stores in advance a program (s) to be executed by the CPU 221. The NIC 121, the CPU 221, the RAM 222, and the storage device 223 are connected to one another through a bus 224.

The ToR 131 in the rack 130 includes at least six physical ports 231 through 236. The port 231 is connected to the edge router 202 through a cable, the port 232 is connected to the LER 204 through a cable, and the port 233 is connected to the edge switch 206 through a cable. The port 234 is connected to the physical server 132 through a cable, the port 235 is connected to the physical server 133 through a cable, and the port 236 is connected to the physical server 140 (more concretely the NIC 141) through a cable.

The physical server 140 is also a computer. The physical server 140 includes the NIC 141 as illustrated in FIG. 1. The physical server 140 further includes one or more CPUs 241 and RAM 242. The VM 142 and the virtual NIC 143 in FIG. 1 are realized by execution of a program (or programs) by the CPU 241. The CPU 241 is also an example of a processor.

The physical server 140 also includes a nonvolatile storage device 243. The storage device 243 is an HDD, an SSD, or a combination of them. ROM may also be used as the storage device 243. The storage device 243 stores in advance a program (s) to be executed by the CPU 241. The NIC 141, the CPU 241, the RAM 242, and the storage device 243 are connected with one another through a bus 244.

The IaaS management server 180 is also a computer. Concretely, the IaaS management server 180 includes one or more CPUs 251, and RAM 252. The CPU 251 is an example of a processor. The CPU 251 loads a program into the RAM 252 and executes the program, using the RAM 252 also as a working area.

The IaaS management server 180 further includes the NIC 253. The NIC 253 is an example of a communication device. The NIC 253 is a reception device (i.e., receiver) for receiving (i.e., accepting) a tunnel connection command, and is also a transmission device (i.e., transmitter) for sending a command to a physical server. The NIC 253 may be a NIC of expansion card type, or an on-board NIC. The IaaS management server 180 is connected to a network (for example, the best-effort IP router network 170 in FIG. 3) through the NIC 253.

The IaaS management server 180 may further include the input device 254 and an output device 255. The input device 254 is, for example, a keyboard, a pointing device such as a mouse, or a combination of them. A touchscreen may be used as the pointing device. The output device 255 is, for example, a display, a speaker, or a combination of them. The display may be the touchscreen.

Furthermore, the IaaS management server 180 includes a nonvolatile storage device 256. The storage device 256 is an HDD, an SSD, or a combination of them. As the storage device 256, ROM may also be used.

The IaaS management server 180 may further include a drive device 257 for a storage medium (i.e., recording medium) 260. The storage medium 260 may be any of an optical disk such as compact disk (CD) and a digital versatile disk (DVD), a magneto optical disk, and a magnetic disk, etc. Otherwise, the storage medium 260 may be a semiconductor memory card, and the drive device 257 may be replaced with a reader/writer for the memory card (the term "reader/writer" is used to mean a device that operates as a reader and also as a writer).

The component in the IaaS management server 180 as described above are connected to one another through a bus 258.

The program executed by the CPU 251 may be installed in the storage device 256 in advance. The program may be stored in the storage medium 260, provided therefrom, read by the drive device 257, and installed in the storage device 256. The program may be downloaded through a network such as the best-effort IP router network 170 etc. and the NIC 253, and installed in the storage device 256.

The RAM 252, the storage device 256, and the storage medium 260 are examples of computer-readable storage media (i.e., computer-readable recording media). These storage media are tangible media, and are not transitory media such as a signal carrier etc.

The UI processing unit 181 in FIG. 2 is realized by the NIC 253, which communicates with the user terminal 190, and the CPU 251, which executes a program. When the IaaS management server 180 includes the input device 254 and the output device 255 as illustrated in FIG. 3, the UI processing unit 181 may be realized by the input device 254, the output device 255, and the CPU 251.

For example, a command to display an input screen may be issued (i.e., given) by the CPU 251 to the output device 255. While watching the input screen displayed on the output device 255, a user may input pieces of information such as the definition information etc. through the input device 254. The CPU 251 may appropriately store, in the storage device 256, the information input through the input device 254 and/or process this information.

Obviously, the CPU 251 may generate the information for displaying the input screen on the display of the user terminal 190, and the NIC 253 may send the generated information to the user terminal 190. The NIC 253 may receive pieces of information such as the definition information etc. input by a user through the user terminal 190, and the CPU 251 may store, in the storage device 256, the received information and/or process the received information.

The VM management unit 182 is realized by the NIC 253, which communicates with each physical server, and the CPU 251, whici executes a program. Similarly, the VNET management unit 184 is also realized by the NIC 253, which communicates with each physical server, and the CPU 251, which executes a program. The definition storage unit 183 is realized by the storage device 256.

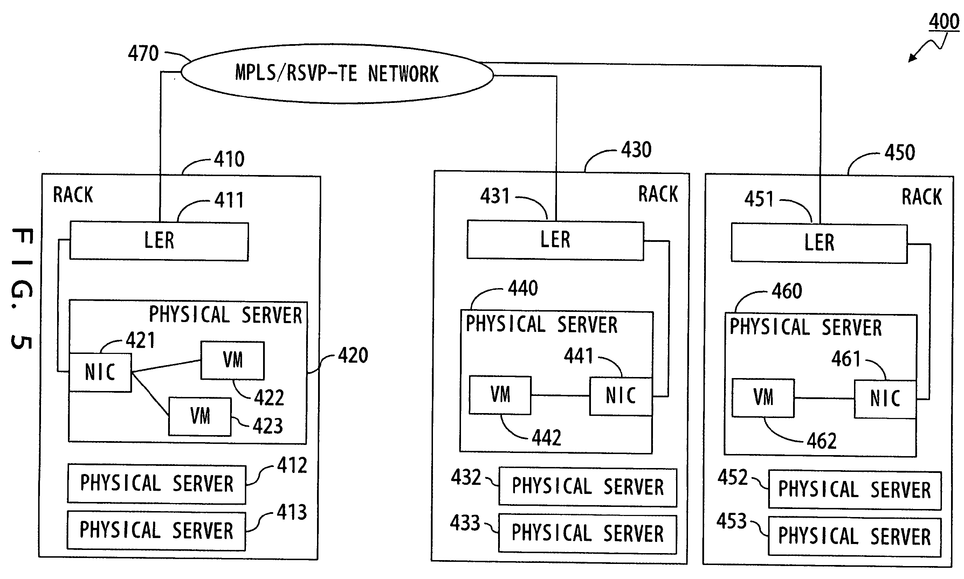

Then, for comprehensibility of the merits of the embodiment illustrated in FIGS. 1 through 3, the service level and the QoS are described, and two comparative examples are explained with reference to FIGS. 4 through 7. In an aspect, each of the embodiment illustrated in FIGS. 1 through 3, the first comparative example illustrated in FIG. 4, and the second comparative example illustrated in FIGS. 5 through 7 aims at allowing a user to select a service level of a virtual link between two VMs from among a plurality of choices. As described below, the embodiment illustrated in FIGS. 1 through 3 and FIGS. 8 through 12, which are described later, (and other embodiments described later) excels the first comparative example and the second comparative example.

As described above with reference to FIG. 2, a user leases one or more VMs from an IaaS provider, and manages a user system using the leased VMs. In addition, one user system includes one or more virtual networks unless the user system is a stand-alone system using one VM.

There may be various purposes for which a user leases one or more VMs from the IaaS provider. Some users may lease a VM for use as a database (DB) server. Some users may lease a VM for use as a storage server or a file server. Some users may lease a VM for use as a Web server. Some users may lease a VM for use as an application server.

Therefore, the communication performance (i.e., the QoS) of the virtual network of VMs that is desired by a user may vary depending on the user's purpose. The communication performance may be, for example, expressed by a bandwidth (that is, a bit rate), by a delay time, or by a combination of them.

For example, when a user system is a DB system configured redundantly to include a plurality of DB servers, the user system includes a virtual network that connects a plurality of VMs, each of which is used as a DB server. In order to enable quick data synchronization to be performed among the DB servers, a user may desire that the virtual network be a broadband network. Similarly, for quick data synchronization among a plurality of storage servers in a redundantly configured storage system, a user may desire that the virtual network be a broadband network. On the other hand, for a virtual network to which one or both of a VM used as a Web server and a VM used as an application server is/are connected, a user may consider that it is acceptable that the bandwidth of this virtual network is not so broad.

As described above, the QoS of a virtual network of VMs that is desired by a user may vary depending on the user' s purpose. However, it is difficult to enable a user to select his/her desired QoS from among a plurality of choices. Therefore, a number of IaaS providers have conventionally provided users simply with best-effort virtual networks, without guaranteeing the QoS.

For example, an IaaS provider designs and configures (i.e. , constructs) a physical network that connects a plurality of physical servers. However, it is very difficult to estimate (or predict) an appropriate capacity of the physical network.

The reason is as follows. In many cases, an IaaS provider is not know in advance: what type of user may use VMs in the future; for what type of user system a user may use VMs; and so on. Furthermore, even if the configuration of a user system is known in advance, it is very difficult for a user and the IaaS provider to predict how much traffic will flow over a user system.

Therefore, it is almost impractical for an IaaS provider to design, on the basis of traffic prediction, a physical network having a capacity that is sufficient for smooth flow of the predicted traffic. Therefore, a number of IaaS providers have conventionally provided users with best-effort virtual networks. That is, conventionally, a service level agreement (SLA) has not been provided in many cases.

When a virtual network provided by an IaaS provider is a best-effort virtual network, it is obvious that the communication performance desired by a user is not guaranteed on the virtual network. Therefore, the user-desired performance is not guaranteed with respect to the entire user system, either. For example, a user who is currently operating a user system that is configured (i.e., constructed) by using physical servers may consider the virtualization of this user system, but may give up the virtualization because the performance is not guaranteed.

On the other hand, a general tendency is as follows. Comparing the case where individual users independently use their physical servers and the case where an IaaS provider leases out VMs to the users, the latter case is more efficient than the former case in the utilization of computer resources, waste in the latter case is less than that in the former case, and the latter case achieves a higher level of energy saving than the former case. Therefore, in order to efficiently utilize the resources and save energy, it is useful to overcome the above-mentioned deficiency that the performance is not guaranteed, and thereby provide users with a more acceptable virtualization solution. Furthermore, it is obviously preferable for a user that the communication performance of a virtual network is guaranteed.

Therefore, the inventors have eagerly conducted studies, aiming at enabling an IaaS provider to present, to a user, a plurality of service levels as a menu. According to the findings obtained by the inventors as a result of the studies, to present (i.e., offer) a plurality of service levels may be achieved by any of the first comparative example, the second comparative example, the embodiment illustrated in FIGS. 1 through 3 and FIGS. 8 through 12, which are described later, and other modified embodiments, which are also described later. Comparing them, the embodiment illustrated in FIGS. 1 through 3 and FIGS. 8 through 12, which are described later, and the modified embodiments excel the first and second comparative examples. Hereafter, the first comparative example is described with reference to FIG. 4, and the second comparative example is described with reference to FIGS. 5 through 7.

FIG. 4 illustrates the system configuration diagram of a network system 300 of the first comparative example. As explained below, the IaaS provider which operates the network system 300 is capable of presenting at least three service levels to a user.

In the first comparative example, a rack 310 is provided in a DC, and three ToRs 311 through 313 are provided in the rack 310. In the rack 310, physical servers 314, 315, and 320 are also provided. In FIG. 4, only the physical server 320 is described in detail due to space limitations.

The physical server 320 includes three NICs 321 through 323. The NIC 321 is connected to the ToR 311, the NIC 322 is connected to the ToR 312, and the NIC 323 is connected to the ToR 313. Although omitted in FIG. 4 due to space limitations, the physical server 314 is similarly connected to all of these three ToRs 311 through 313, and the physical server 315 is similarly connected to all of these three ToRs 311 through 313.

In addition, for example, VMs 324 and 325 run on the physical server 320. A VM which runs on a physical server performs communication through a virtual NIC in the host OS. However, the virtual NICs in the host OS of each physical server are omitted in FIG. 3 for simplifying FIG. 3.

For example, the interface between the physical NIC 323 and the virtual NIC which is not illustrated in FIG. 4 but is included in the VM 324 is provided by a virtual NIC which is not illustrated in FIG. 4 but is included in the host OS. However, in FIG. 3, the VM 324 and the NIC 323 are directly connected by a line. Similarly, the interface between the physical NIC 321 and the virtual NIC which is not illustrated in FIG. 4 but is included in the VM 325 is provided by another virtual NIC which is not illustrated in FIG. 4 but is included in the host OS. However, in FIG. 3, the VM 325 is directly connected to the NIC 321 through a line.

Furthermore, a rack 330 is also provided in the DC. As with the rack 310, three ToRs 331 through 333 are provided in the rack 330. In the rack 330, physical servers 334, 335, and 340 are provided. Due to space limitations, the details of the physical servers 334 and 335, the cables for connection of the physical server 334 to the ToRs 331 through 333, and the cables for connection of the physical server 335 to the ToRs 331 through 333 are omitted in FIG. 4.

As with the physical server 320, the physical server 340 also includes three NICs 341 through 343. The NIC 341 is connected to the ToR 331, the NIC 342 is connected to the ToR 332, and the NIC 343 is connected to the ToR 333.

Furthermore, for example, a VM 344 runs on the physical server 340. The interface between the VM 344 and the physical NIC 343 is provided by the virtual NIC which is included in the host OS of the physical server 340 but is not illustrated in FIG. 4.

Furthermore, a rack 350 is provided in the DC. As with the rack 310, three ToRs 351 through 353 are provided in the rack 350. Furthermore, physical servers 354, 355, and 360 are provided in the rack 350. Due to space limitations, the details of the physical servers 354 and 355, the cables for connection of the physical server 354 to the ToRs 351 through 353, and the cables for connection of the physical server 355 to the ToRs 351 through 353 are omitted in FIG. 4.

As with the physical server 320, the physical server 360 also includes three NICs 361 through 363. The NIC 361 is connected to the ToR 351, the NIC 362 is connected to the ToR 352, and the NIC 363 is connected to the ToR 353.

Furthermore, for example, a VM 364 runs on the physical server 360. The interface between the VM 364 and the physical NIC 361 is provided by the virtual NIC which is included in the host OS of the physical server 360 but is not illustrated in FIG. 4.

The network system 300 in the first comparative example also uses a plurality of physical networks. Concretely, FIG. 3 exemplifies a best-effort IP router network 370, an MPLS network 371, and a leased line network 372. These three physical networks are similar to the three physical networks in FIG. 1.

However, while each ToR is connected to all of the three physical networks in the embodiment illustrated in FIG. 1, each ToR is connected to only one physical network that corresponds to this ToR in the first comparative example illustrated in FIG. 3. Concretely, the ToRs 311, 331, and 351 are connected to the best-effort IP router network 370, the ToRs 312, 332, and 352 are connected to the MPLS network 371, and the ToRs 313, 333, and 353 are connected to the leased line network 372.

According to the first comparative example illustrated in FIG. 4, for example, the VMs 324 and 344 are enabled to communicate with each other through an L2 tunnel over the leased line network 372. In addition, according to the first comparative example illustrated in FIG. 4, for example, the VMs 325 and 364 are enabled to communicate with each other through an L2 tunnel over the best-effort IP router network 370.

Then, according to the first comparative example, the streams of traffic which flow through different tunnels over different physical networks do not share a physical communication path. Therefore, there occurs no conflict between these streams of traffic. Accordingly, it is possible to avoid the problem that the QoS is not attained in a part of a tunnel due to a conflict. That is, in the first comparative example, the end-to-end QoS is achievable.

For example, assume that the VM 325 is about to send data to the VM 364 substantially simultaneously with a point in time when the VM 324 is about to send data to the VM 344. Even in this case, two streams of traffic do not conflict with each other because the former data is sent from the NIC 321 to the best-effort IP router network 370 through the ToR 311, and the latter data is sent from the NIC 323 to the leased line network 372 through the ToR 313.

Thus, in the first comparative example, there is no common part between the physical communication path through which the former data is sent and the physical communication path through which the latter data is sent. Therefore, there occurs no conflict between the former data and the latter data. Accordingly, it is possible to avoid the problem that the transmission of the latter data from the physical server 320 is delayed due to the transmission of the former data from the physical server 320.

As another example, assume that the following two points in time are substantially simultaneous with each other.
- the point in time when the data which is sent from the VM 344 and addressed to the VM 324 is received by the ToR 313 from the edge router of the leased line network 372
- the point in time when the data which is sent from the VM 364 and addressed to the VM 325 is received by the ToR 311 from the edge router of the best-effort IP router network 370

Even in this case, there occurs no conflict between the data which is addressed to the VM 324 and sent from the VM 344 and the data which is addressed to the VM 325 and sent from the VM 364. This is because the physical communication path between the ToR 313 and the physical server 320 and the physical communication path between the ToR 311 and the physical server 320 do not share any common part. Therefore, it is possible to avoid the problem that the reception of the former data at the physical server 320 is delayed due to the reception of the latter data at the physical server 320.

Therefore, even in the first comparative example, the end-to-end QoS is realized. Accordingly, in the first comparative example, the IaaS provider is able to offer a user the following three service levels.
- the first service level corresponding to the QoS of the communication through a tunnel over the best-effort IP router network 370
- the second service level corresponding to the QoS of the communication through a tunnel over the MPLS network 371
- the third service level corresponding to the QoS of the communication through a tunnel over the leased line network 372

Therefore, even in the first comparative example, a user is enabled to select a service level for each tunnel. That is, a user is allowed to select one of the three offered service levels depending on the QoS desired for each tunnel. The QoS may be expressed by a continuous value, or by a discrete value. On the other hand, the service level may be discrete as the example above.

As understood by comparison between FIG. 1 and FIG. 4, there are some defects in the first comparative example as mentioned below. That is, the embodiment excels the first comparative example.

In the embodiment illustrated in FIG. 1, one ToR provided in each rack is sufficient regardless of the number of physical networks. However, in the first comparative example illustrated in FIG. 4, one ToR per physical network is required for each rack.

In the embodiment illustrated in FIG. 1, one physical NIC provided in each physical server is sufficient regardless of the number of physical networks. However, in the first comparative example illustrated in FIG. 4, one physical NIC per physical network is required for each physical server.

That is, the financial cost of the ToRs and the NICs in the first comparative example is higher than that in the embodiment, and the time and effort taken to manage the ToRs (for example, the time and effort for initially setting the ToRs etc.) are also greater in the first comparative example. Since the number of physical servers is very large in the large DC, the difference in financial cost caused by the difference in the number of ToRs and physical NICs is not negligible.

In addition, it is expected that the failure rate of the entire network system is lower in the embodiment than in the first comparative example. This is because the number of components included in the entire network system (concretely, the number of ToRs and the number of physical NICs) is less in the embodiment than in the first comparative example.

Furthermore, in the embodiment in FIG. 1 and the first comparative example in FIG. 4, the number of service levels which can be presented (i.e. , offered) as a menu to a user may be increased by constructing a new physical network. For example, at a certain point in time, only the low service level corresponding to the best-effort IP router network 170 and the high service level corresponding to the leased line network 172 may be provided in the menu. The IaaS provider may newly construct the MPLS network 171 in order to enable an intermediate service level between these two service levels to be presented to a user as a new option in the menu.

When a new physical network is constructed in order to add a new service level as described above for example, it is not necessary to increase the number of ToRs in the embodiment in FIG. 1. However, in the first comparative example in FIG. 4, it is necessary to add one ToR for each rack. Similarly, when a new physical network is constructed, it is not necessary to increase the number of NICs in the embodiment in FIG. 1. However, in the first comparative example in FIG. 4, it is necessary to add one NIC for each physical server.

Therefore, in the embodiment illustrated in FIG. 1, it is feasible to add a new service level without stopping the operation of the network system 100. On the other hand, in the first comparative example illustrated in FIG. 4, it is necessary to stop the operation of the network system 300 to add a new service level.

For example, assume that an IaaS provider constructs the MPLS network 171 in the embodiment illustrated in FIG. 1, in order to add a new intermediate service level as described above. The MPLS network 171 includes some label edge routers (such as the LERs 203 and 204 in FIG. 3), some label switch routers (LSRs), and a plurality of cables for connection of these routers. The MPLS network 171 may be constructed during the operation of the network system 100 without stopping any physical servers.

When the installation (i.e., construction) of the MPLS network 171 is completed, the IaaS provider connects each LER of the MPLS network 171 to an appropriate ToR through a cable. For example, the IaaS provider connects the LER 203 to the ToR 111, and connects the LER 204 to the ToR 131. The manual operation of connecting the LER to the ToR through a cable may be performed without stopping the network system 100.

As described above, in the embodiment illustrated in FIG. 1, it is not necessary to stop (i.e., shut down) or reboot the physical servers in order to add a new service level. The assignment of a new IP address (that is, an IP address which starts with the prefix corresponding to the MPLS network 171) to the physical NIC is allowed to be performed during the operation of the physical server. For example, it is possible to newly assign the IP address I2 to the NIC 121 without shutting down or rebooting the physical server 120. Therefore, according to the embodiment illustrated in FIG. 1, a new service level is allowed to be added without stopping (i.e., shutting down) the VMs currently running on the physical servers.

However, in the first comparative example in FIG. 4, it is necessary to stop the physical server in order to add a new service level. Therefore, in the first comparative example, it is also necessary to stop the VMs currently running on the physical servers or migrate the VMs.

For example, in the first comparative example in FIG. 4, assume that an IaaS provider constructs the MPLS network 371 in order to add a new intermediate service level as described above.

The MPLS network 371 includes some LERs and some LSRs, and a plurality of cables for connection of these routers. The MPLS network 371 itself may be constructed, without stopping any physical servers, during the operation of the network system 300.

The IaaS provider also installs new ToRs (for example, the ToRs 312, 332, 352, etc.) corresponding to the MPLS network 371. Then, the IaaS provider connects each LER of the MPLS network 3 71 to a newly installed appropriate ToR through a cable. The above-mentioned installation of new ToRs and connection between the LER and the new ToR may also be performed during the operation of the network system 300.

However, in the first comparative example, it is necessary to stop each physical server. For example, the IaaS provider stops the physical server 320, adds a new NIC 322 to the physical server 320, connects the physical port of the NIC 322 to the ToR 312 through a cable, and then boots the physical server 320. The same holds true with other physical servers, mutatis mutandis. If the number of physical servers is large, the time and effort taken for the above-mentioned manual operations for stopping the physical servers and adding the physical NICs are very large.

In the first comparative example, each of the routers in the MPLS network 371 may be an LSR, which is used for relay. In this case, each of the ToRs 312, 332, and 352 connected to the MPLS network 371 is not a simple L2 switch, but an LER. However, even in this case, it is still necessary in the first comparative example to stop each physical server in order to add a new service level which is provided by the MPLS network 371.

In addition, it is also necessary to stop the VM while the physical server is stopped, or to migrate the VM before stopping the physical server. Stopping the VM decreases the availability of the user system which is operated by a user using the VM. Furthermore, it is necessary to perform the migration of the VM depending on which physical server is to be stopped at what timing. Furthermore, it is also necessary to delete an existing tunnel and create a new tunnel when the migration is performed. In the first comparative example, since each physical server is stopped at least once when a new physical network is added, it is necessary for any VM to be stopped or migrated.

Under the above-mentioned situation, the embodiment illustrated in FIG. 1 etc. has the following merits over the first comparative example.
- The number of ToRs and the number of NICs in the embodiment are less than those in the first comparative example. Therefore, the financial cost of the ToRs and NICs is lower, and the time and effort taken to manage the ToRs are lower. It is also expected that the failure rate of the entire network system 100 is lower.
- The manual operations required to add a new service level is also reduced.
- It is possible to add a new service level at which a new physical network is used, without lowering the availability of VMs (and without producing excess processing loads, such as the migration of VMs, on the network system 100). Therefore, a new service level is allowed to be added with an arbitrary schedule, without the necessity to consider the influence on a number of existing VMs.

Then, the second comparative example is described with reference to FIGS. 5 through 7. FIG. 5 illustrates the system configuration diagram of a network system 400 of the second comparative example.

In the second comparative example, a rack 410 is provided in a DC, and an LER 411 (i.e., an edge router which supports the MPLS) is provided in the rack 410. Furthermore, physical servers 412, 413, and 420 are provided in the rack 410.

The physical server 420 includes a NIC 421, and the NIC 421 is connected to the LER 411. Although omitted in FIG. 5 due to space limitations, the physical server 412 is also connected to the LER 411 in a similar way, and the physical server 413 is also connected to the LER 411 in a similar way.

Furthermore, for example, VMs 422 and 423 run on the physical server 420. A VM which runs on a physical server performs communication through a virtual NIC in the host OS. However, the virtual NICs in the host OS of each physical server are omitted in FIG. 5 for simplifying FIG. 5.

For example, the interface between the physical NIC 421 and the virtual NIC which is included in the VM 422 but is not illustrated in FIG. 5 is provided by a virtual NIC which is included in the host OS but is not illustrated in FIG. 5. However, in FIG. 5, the VM 422 and the NIC 421 are directly connected by a line. Similarly, the VM 423 is connected to the NIC 421 directly by a line for simplifying FIG. 5.

A rack 430 is also provided in the DC, and an LER 431 is provided in the rack 430. Physical servers 432, 433, and 440 are also provided in the rack 430.

The physical server 440 includes a NIC 441, and the NIC 441 is connected to the LER 431. On the physical server 440, for example, a VM 442 runs. The interface between the VM 442 and the physical NIC 441 is provided by a virtual NIC which is included in the host OS of the physical server 440 but is not illustrated in FIG. 5.

In FIG. 5, the details of the physical servers 432 and 433, the cable for connection of the physical server 432 to the LER 431, and the cable for connection of the physical server 433 to the LER 431 are omitted.

Furthermore, a rack 450 is also provided in the DC, and an LER 451 is provided in the rack 450. Physical servers 452, 453, and 460 are also provided in the rack 450.

The physical server 460 includes a NIC 461, and the NIC 461 is connected to the LER 451. On the physical server 460, for example, a VM 462 runs. The interface between the VM 462 and the physical NIC 461 is provided by a virtual NIC which is included in the host OS of the physical server 460 but is not illustrated in FIG. 5.

In FIG. 5, the details of the physical servers 452 and 453, the cable for connection of the physical server 452 to the LER 451, and the cable for connection of the physical server 453 to the LER 451 are omitted.

The second comparative example uses only a single physical network. Concretely, in the second comparative example, an MPLS/RSVP-TE network 470 is used. In the MPLS/RSVP-TE network 470, the RSVP-TE is used as a signaling protocol. To be more concrete, the RSVP-TE is used in the label distribution. Then, data is sent along the label switched path (LSP) which is established by the RSVP-TE and for which the bandwidth has been reserved. The MPLS/RSVP-TE network 470 is capable of providing a plurality of different levels in QoS.

In the above-described second comparative example illustrated in FIG. 5, for example, the VMs 422 and 462 may be enabled to communicate with each other through an L2 tunnel on a first LSP for which a broad bandwidth is reserved over the MPLS/RSVP-TE network 470 (i.e., through an L2 tunnel along an LSP with high QoS). Also in the second comparative example, the VMs 423 and 442 may be enabled to communicate with each other through an L2 tunnel on a second LSP for which a bandwidth narrower than that of the first LSP is reserved.

Thus, in the second comparative example, it is possible to provide a plurality of levels in QoS on a single physical network (that is, the MPLS/RSVP-TE network 470) by using the functions of the MPLS and the RSVP-TE. That is, in the second comparative example, by using the functions of the MPLS and the RSVP-TE, an IaaS provider is enabled to present (i.e., offer) to a user a plurality of service levels corresponding to the plurality of levels in QoS, as a menu.

The MPLS/RSVP-TE network 470 is an example of a network capable of setting a different level of QoS for each flow. The MPLS and the RSVP-TE may be replaced with another protocol. For example, an asynchronous transfer mode (ATM) network or a frame relay network may be used instead of the MPLS/RSVP-TE network 470.

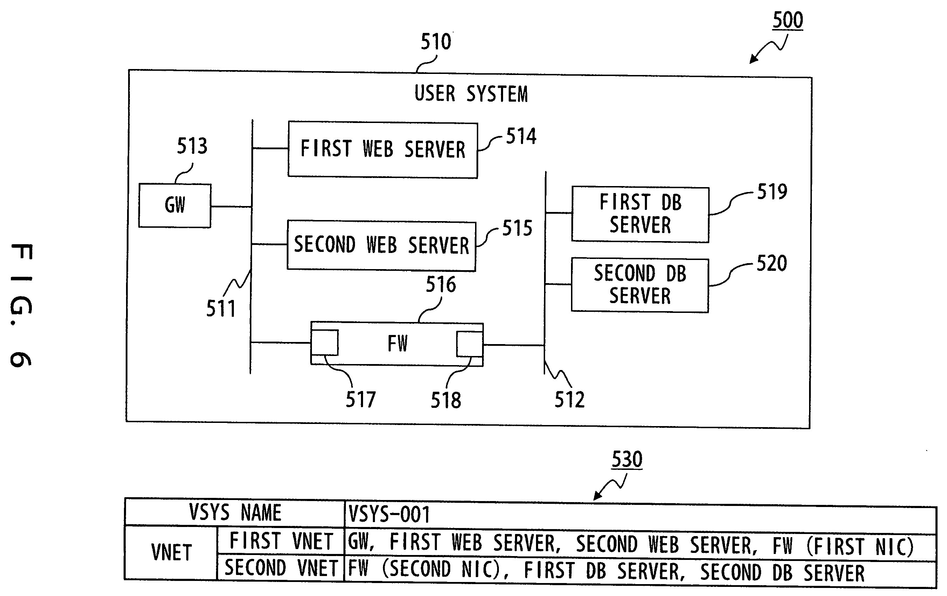

FIG. 6 illustrates examples of a management screen and definition information used in the second comparative example. Although omitted in FIG. 5, a certain type of IaaS management server and a user terminal are used in the second comparative example. The IaaS management server is connected to each physical server through the MPLS/RSVP-TE network 470 or another network. The user terminal is connected to the IaaS management server through the MPLS/RSVP-TE network 470 or another network.

FIG. 6 exemplifies a management screen 500 displayed on the display of the user terminal. When the user terminal accesses the IaaS management server through a network, the IaaS management server provides the user terminal with the information for displaying the management screen 500. The user terminal displays the management screen 500 on the display according to the provided information. The management screen 500 is an example of a graphical user interface (GUI) for defining a user system 510. A user is enabled to edit the definition of the user system 510 by using an input device such as a keyboard, a pointing device, etc.

The user system 510 in FIG. 6 includes two virtual networks and six VMs.

Concretely, the user system 510 includes networks 511 and 512. The network 511 is a virtual network realized by a plurality of L2 tunnels over the MPLS/RSVP-TE network 470. The network 512 is also a virtual network realized by a plurality of L2 tunnels over the MPLS/RSVP-TE network 470.

Concretely, a gateway (GW) 513, a first Web server 514, a second Web server 515, and a firewall (FW) 516 are connected to the network 511. The GW 513, the first Web server 514, the second Web server 515, and the FW 516 are VMs.

The FW 516 is connected also to the network 512. Therefore, the management screen 500 also displays a first NIC 517 for connecting the FW 516 to the network 511, and a second NIC 518 for connecting the FW 516 to the network 512. To be more concrete, the first NIC 517 is a virtual NIC in the host OS of a physical server which runs the FW 516, which is a VM. Similarly, the second NIC 518 is another virtual NIC in the host OS of the physical server which runs the FW 516.

However, the user who designs the user system 510 while watching the management screen 500 is not required to know how the first NIC 517 and the second NIC 518 are implemented. The user simply defines, on the management screen 500, the first NIC 517 as the interface between the FW 516 and the network 511, and defines, on the management screen 500, the second NIC 518 as the interface between the FW 516 and the network 512.

In addition to the FW 516, a first DB server 519 and a second DB server 520 are connected to the network 512. Each of the first DB server 519 and the second DB server 520 is a VM.

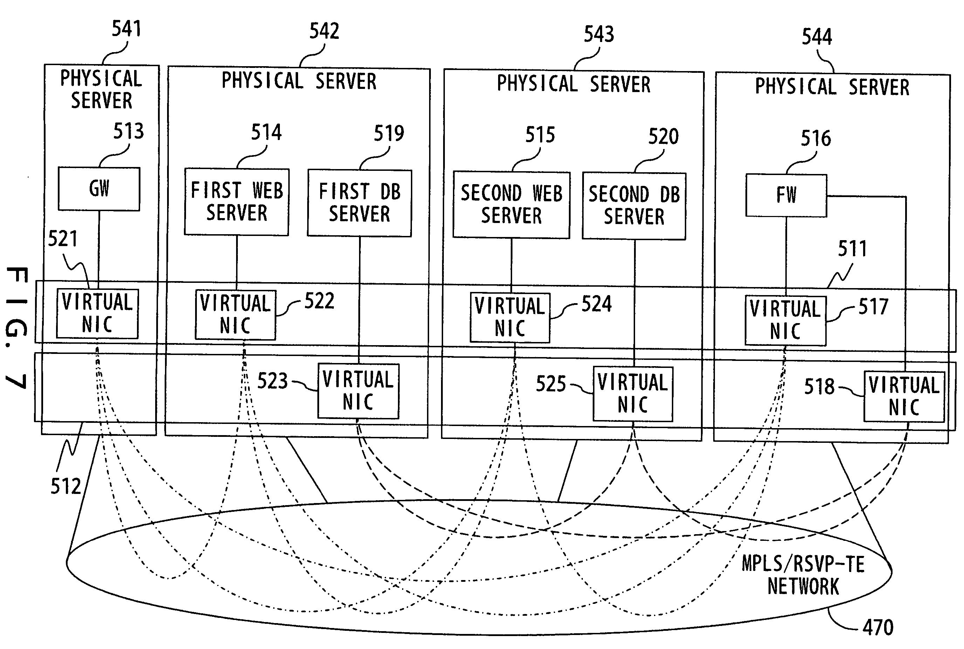

In order to simplify FIG. 6, the virtual NIC for the GW 513 (that is, the virtual NIC in the host OS of the physical server which runs the GW 513, which is a VM) is omitted in FIG. 6. Similarly, in FIG. 6, the virtual NICs for the first Web server 514, the second Web server 515, the first DB server 519, and the second DB server 520 are omitted. The virtual NICs omitted in FIG. 6 are illustrated as virtual NICs 521 through 525 in FIG. 7.

The user system 510 is a system that accepts (i.e., receives) a request from a client through an external network (for example, the Internet), which is not illustrated FIGS. 5 through 7, and returns a reply to the client. The GW 513 is positioned on the boundary between the external network and the user system 510. The GW 513 may also work as a load balancer.

The request from the client is forwarded to the first Web server 514 or the second Web server 515 by the GW 513. Upon receipt of the request, each of the first Web server 514 and the second Web server 515 performs an appropriate process depending on the request, and returns a reply. The reply is sent to the client through the GW 513 and the above-mentioned external network.

Furthermore, the process performed by each of the first Web server 514 and the second Web server 515 may involve DB access. The DB used in the user system 510 is configured redundantly. More specifically, the second DB server 520 holds a replica (i.e., copy) of the DB held in the first DB server 519. The FW 516 is provided on the boundary between the networks 511 and 512 in order to protect the first DB server 519 and the second DB server 520.

The user is enabled to define the user system 510 having the above-mentioned network configuration, through the GUI such as the management screen 500. Then, the definition information for defining the user system 510 is edited by the user terminal, and sent to the IaaS management server. The IaaS management server receives the definition information from the user terminal, and stores the definition information.

FIG. 6 exemplifies also the definition information stored in the IaaS management server. Concretely, definition information 530 corresponding to the user system 510 is illustrated in a table format in FIG. 6. The definition information 530 includes the following two fields.
- The "VSYS name" field indicating that the name of the user system 510, which is a virtual system, is "VSYS-001".
- The "VNET" field for defining the virtual networks included in the user system 510

As illustrated in FIG. 6, the following data is stored in the VNET field of the definition information 530.
- The user system 510 includes a first VNET (that is, the network 511) and a second VNET (that is, the network 512).
- The GW 513, the first Web server 514, the second Web server 515, and the first NIC 517 of the FW 516 are connected to the first VNET.
- The second NIC 518 of the FW 516, the first DB server 519, and the second DB server 520 are connected to the second VNET.

The IaaS management server of the second comparative example performs the following processes according to the definition information 530. As a result of the following processes, for example, nine tunnels are created as illustrated in FIG. 7 in the second comparative example.
- The process of deploying the six VMs in the user system 510 on the appropriate physical servers
- The process of giving commands for creating a plurality of tunnels for realizing the network 511 to the physical servers on which the VMs belonging to the network 511 are deployed
- The process of giving commands for creating a plurality of tunnels for realizing the network 512 to the physical servers on which the VMs belonging to the network 512 are deployed

In the example in FIG. 7, the GW 513 is deployed on a physical server 541, and the first Web server 514 and the first DB server 519 are deployed on a physical server 542. The second Web server 515 and the second DB server 520 are deployed on a physical server 543, and the FW 516 is deployed on a physical server 544.

Each of the physical servers 541 through 544 is one of a plurality of physical servers included in the network system 400 in FIG. 5. Due to space limitations, only the nine physical servers mounted on the three racks are illustrated in FIG. 5. However, it is obvious that the network system 400 may include ten or more physical servers mounted on four or more racks.

Meanwhile, the first NIC 517 and the second NIC 518 in FIG. 6 are virtual NICs created in the host OS corresponding to the FW 516 as described above. Therefore, in FIG. 7, each of the first NIC 517 and the second NIC 518 is expressed as a "virtual NIC".

Similarly, in the host OS of the physical server 541, the virtual NIC 521 is created corresponding to the GW 513. Furthermore, in the host OS of the physical server 542, the virtual NIC 522 is created corresponding to the first Web server 514, and the virtual NIC 523 is created corresponding to the first DB server 519. In addition, in the host OS of the physical server 543, the virtual NIC 524 is created corresponding to the second Web server 515, and the virtual NIC 525 is created corresponding to the second DB server 520.

As illustrated in FIG. 6, the GW 513, the first Web server 514, the second Web server 515, and the FW 516 belong to the network 511. Therefore, in FIG. 7, the virtual NIC 521 for the GW 513, the virtual NIC 522 for the first Web server 514, the virtual NIC 524 for the second Web server 515, and the virtual NIC 517 for the FW 516 are illustrated in the block of the network 511.

Furthermore, as illustrated in FIG. 6, the FW 516, the first DB server 519, and the second DB server 520 belong to the network 512. Therefore, in FIG. 7, the second NIC 518 for the FW 516, the virtual NIC 523 for the first DB server 519, and the virtual NIC 525 for the second DB server 520 are illustrated in the block of the network 512.

Let V be the number of virtual NICs which are defined in the definition information for connection to a virtual network (concretely, a virtual L2 network). In this case, the virtual network is realized by (V×(V-1)/2) L2 tunnels over the physical network.

In the second comparative example illustrated in FIGS. 5 through 7, four virtual NICs (that is, the virtual NICs 521, 522, 524, and 517) are defined for connection to the network 511. Therefore, the network 511 is realized by 6 (= 4x3/2) tunnels over the MPLS/RSVP-TE network 470. These six tunnels are expressed by dot-and-dash lines in FIG. 7. These six tunnels enable communication (concretely, L2 communication) between any two of the four VMs belonging to the network 511.

Furthermore, in the second comparative example illustrated in FIGS. 5 through 7, three virtual NICs (that is, the virtual NICs 523, 525, and 518) are defined for connection to the network 512. Therefore, the network 512 is realized by 3 (= 3x2/2) tunnels over the MPLS/RSVP-TE network 470. These three tunnels are expressed by broken lines in FIG. 7. These three tunnels enable L2 communication between any two of the three VMs belonging to the network 512.

As clearly understood from FIG. 7, no tunnel is created between the virtual NIC which belongs to the network 511 and the virtual NIC which belongs to the network 512. Furthermore, each tunnel is created according to commands issued (i.e., given) from the IaaS management server to the physical servers.

When the second comparative example explained above with reference to FIGS. 5 through 7 is compared with the embodiment illustrated in FIGS. 1 through 3 (and FIGS. 8 through 12 described later), it will be understood that the embodiment excels the second comparative example. The details are as follows.

In the second comparative example, a single physical network provides a plurality of levels in QoS corresponding to a plurality of service levels. Therefore, it is necessary for the IaaS provider, which provides the network system 400, to predetermine the menu of service levels when designing the network system 400.

The IaaS provider constructs a physical network by using network devices (for example, routers, switches, etc.) each having the function to support the QoS corresponding to any service level included in the predetermined menu. The thus constructed physical network may be the MPLS/RSVP-TE network 470 illustrated in FIG. 5, or may be another type of network (for example, an ATM network or a frame relay network) which is capable of performing QoS control for each flow as described above.

Thus, in the second comparative example, the menu of the service levels which the IaaS provider is able to offer is determined by the QoS control function supported by a single physical network. That is, in the second comparative example, a new service level corresponding to the QoS which is not supported by the physical network once constructed is not allowed to be added later. That is, in the second comparative example, a menu is inflexible and a menu is hardly extensible (or not extensible at all).

The deficiency in the extensibility as described above in the second comparative example contrasts with the flexible extensibility (i.e., the characteristic of allowing a new service level to be added at any time by adding a physical network) in the embodiment as illustrated in FIG. 1 etc.

The deficiency in the extensibility means that a new network technology is not allowed to be incorporated into the network system 400 even if the new network technology is developed. Therefore, the network system 400 of the second comparative example, which merely continues to offer a constant menu, may become, with the lapse of time, an inconvenient system which is only able to provide a user with an obsolete service. That is, the deficiency in the extensibility may incur the possibility of reduced usability in a long-term basis.

Since the deficiency in the extensibility may also incur an increase in initial investment, the deficiency in the extensibility is also inconvenient for the IaaS provider. For example, when the IaaS provider first designs the network system 400, the IaaS provider may take the deficiency in the extensibility into account and may consider preparing the largest possible number of choices of service levels from the beginning. However, in order to provide a large number of service levels, it is necessary for the network devices such as routers in the physical network to have a function of finely controlling a large number of levels of QoS. The network devices with such an advanced function are expensive in many cases. The initial investment to install (i.e., construct) a physical network using expensive network devices is naturally expensive. Therefore, the deficiency in the extensibility may be a factor of incurring an increase of the initial investment.

On the other hand, according to the embodiment in FIG. 1 etc., it is possible that the initial investment is not so expensive. For example, the IaaS provider may start with the network system 100 which uses only a single network which may be specifically the best-effort IP router network 170. Thus, the amount of the initial investment can be relatively low.

The IaaS provider may later add a new service level appropriately, depending on the request from a user, the business environment, etc. For example, at a certain point in time, the IaaS provider may add a service level realized by the leased line network 172, to the menu. Afterwards, the IaaS provider may further add a service level realized by the MPLS network 171, to the menu.

When a new network technology is developed, the IaaS provider is obviously enabled to add, to the menu, the service level realized by a new physical network using the new network technology. Thus, the IaaS provider is enabled to provide the user with a new service level under the benefit of the technological development.

On the other hand, there may be the possibility that one of the physical networks used in the network system 100 becomes technologically obsolete. In this case, the IaaS provider may delete the service level corresponding to the obsolete physical network from the menu, and remove the obsolete physical network. That is, according to the embodiment illustrated in FIG. 1 etc. , technological renewal can be reflected in the network system 100.

As explained above with reference to FIGS. 4 through 7, the embodiment as illustrated in FIG. 1 etc. excels the first comparative example, and also excels the second comparative example. The embodiment, which has the above-mentioned excellent features, are described below in more detail with reference to FIGS. 8 through 12.

FIG. 8 illustrates examples of a management screen and definition information according to the embodiment. FIG. 8 exemplifies a service level menu 600 presented (i.e. , offered) to a user. FIG. 8 also exemplifies a management screen 610 displayed on the display of the user terminal 190, and definition information 640 defined through the management screen 610. The definition information 640 is sent from the user terminal 190 to the IaaS management server 180, and stored in the definition storage unit 183.

The service level menu 600 may, for example, be displayed on the display of the user terminal 190 together with the management screen 610. The service level menu 600 may be described in the SLA exchanged between the user and the IaaS provider.

In the example in FIG. 8, the service level menu 600 presents three service levels of "level A", "level B", and "level C". The service level menu 600 also defines the charge to a user.

According to the service level menu 600, level A is a best-effort level. Concretely, the communication at level A is realized by a tunnel over the best-effort IP router network 170. According to the service level menu 600, the tunnel at level A is available without excess charge.

Furthermore, level B is a level at which the bandwidth of 1 Gbps is shared among a maximum of eight VMs. Concretely, the communication at level B is realized by a tunnel over the MPLS network 171. According to the service level menu 600, the IaaS provider charges a user who uses the tunnel at level B for the use of the tunnel. Concretely, a user is charged 0.1 yen per hour for one tunnel at level B.

It is assumed that the VM management unit 182 appropriately distributes a plurality of VMs to a plurality of physical servers in order to realize the communication at level B. To appropriately distribute the VMs to the physical servers, for example, a well-known algorithm may be used. Furthermore, a well-known algorithm may be used to equally treat the above-mentioned maximum of eight VMs.

Level C is a level of a leased switched network (i.e., a level of a leased line network). Concretely, the communication at level C is realized by a tunnel over the leased line network 172. According to the service level menu 600, the IaaS provider charges a user who uses the tunnel at level C for the use of the tunnel. Concretely, a user is charged 0.9 yen per hour for one tunnel at level C.

It is obvious that the number of presented service levels may be arbitrarily determined depending on the embodiment. In addition, the amount of charge for the use of a tunnel at each service level may be appropriately determined depending on the embodiment.

When the user terminal 190 accesses the IaaS management server 180 through a network, the UI processing unit 181 of the IaaS management server 180 provides, through the network, the user terminal 190 with the information for displaying the management screen 610. The user terminal 190 displays the management screen 610 on the display according to the provided information. The management screen 610 is an example of a GUI for defining a user system 620. The definition of the user system 620 may be edited according to the input from a user through an input device of the user terminal 190.

To be more concrete, the management screen 610 includes an area for visually displaying the network topology of the user system 620, and some GUIs. FIG. 6 illustrates, as examples of the GUIs, a "start-up" button 611 and a "change" button 612.

The start-up button 611 is clicked or tapped when the definition of the user system 620 through the management screen 610 is completed. The start-up button 611 is a GUI for requesting the IaaS management server 180 to start up the user system 620.

On the other hand, the change button 612 is used when the definition information 640 is edited through the management screen 610 with respect to the user system 620 which has been started up (i.e., which is currently in operation). When the editing operation for a change is completed, a user clicks or taps the change button 612. The change button 612 is a GUI for requesting the IaaS management server 180 to change the definition information 640 of the user system 620 (that is, to change the configuration of the user system 620).

Meanwhile, the definition storage unit 183 of the IaaS management server 180 may store one or more templates of a user system. Each template is created in advance by the IaaS provider, and is stored in the definition storage unit 183 in advance. The management screen 610 may further include a GUI which is not illustrated in FIG. 8 but is used to allow a user to select a template from among the one or more templates.

A user may select an appropriate template, and click or tap the start-up button 611 without editing the selected template. The user may also edit the selected template and then click or tap the start-up button 611. Obviously, the user may define his/her user system without using a template, complete the definition of the user system, and then click or tap the start-up button 611. In any case, the user is enabled to specify the user system 620 through the management screen 610 as he/she desires.

The topology of the user system 620 in FIG. 8 is congruent with the topology of the user system 510 in FIG. 6. That is, the user system 620 includes two virtual networks (that is, networks 621 and 622) and six VMs.

A GW 623, a first Web server 624, a second Web server 625, and a FW 626 are connected to the network 621. The GW 623, the first Web server 624, the second Web server 625, and the FW 626 are VMs.

Furthermore, the FW 626 is connected also to the network 622. Therefore, the management screen 610 also displays a first NIC 627 for connecting the FW 626 to the network 621, and a second NIC 628 for connecting the FW 626 to the network 622. The first NIC 627 is concretely a virtual NIC in the host OS of the physical server which runs the FW 626, which is a VM. Similarly, the second NIC 628 is another virtual NIC in the host OS of the physical server which runs the FW 626.

However, it is not necessary for the user to know how the first NIC 627 and the second NIC 628 are implemented. The user simply defines, on the management screen 610, the first NIC 627 as an interface between the FW 626 and the network 621, and defines, on the management screen 610, the second NIC 628 as an interface between the FW 626 and the network 622.

In addition to the FW 626, a first DB server 629 and a second DB server 630 are connected to the network 622. Each of the first DB server 629 and the second DB server 630 is also a VM.

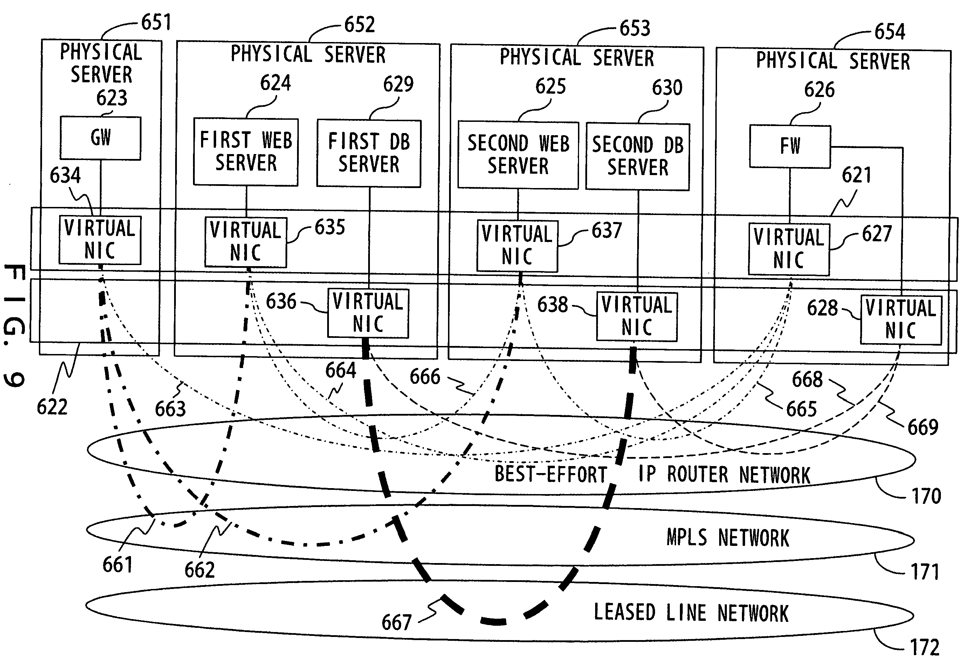

In order to simplify FIG. 8, the virtual NIC for the GW 623 (that is, the virtual NIC in the host OS of the physical server which runs the GW 623, which is a VM) is omitted in FIG. 8. Similarly, in FIG. 8, the virtual NICs for the first Web server 624, the second Web server 625, the first DB server 629, and the second DB server 630 are also omitted. The virtual NICs omitted in FIG. 8 are illustrated as virtual NICs 634 through 638 in FIGS. 9 and 12.

As clearly understood by the explanation above, the network 621 is realized by 6 (= 4x3/2) tunnels, and the network 622 is realized by 3 (= 3x2/2) tunnels. In the present embodiment, a user is allowed to arbitrarily select a service level from among levels A, B, and C for each of the 9 (= 6+3) tunnels. In other words, the user is allowed to arbitrarily select the service level that defines the QoS of the link between two VMs, from among levels A, B, and C.

Since the usage of the user system 620 and the operation of each VM in the user system 620 are similar to those of the user system 510 in FIG. 6, the detailed explanation is omitted. Meanwhile, the user may make a judgment based on the role of each VM as follows, for example.
- The reply returned by the first Web server 624 to a client may include a relatively large file such as an image file, a video file, a sound file, etc. That is, a relatively large file may be sent from the first Web server 624 to the GW 623. Therefore, it is preferable that the bandwidth of a link 631 between the first Web server 624 and the GW 623 is large.
- For a similar reason, it is also preferable that the bandwidth of a link 632 between the second Web server 625 and the GW 623 is large.
- When the DB on the first DB server 629 is updated, the first DB server 629 instructs the second DB server 630 to update the replica on the second DB server 630. It is preferable that the time taken to synchronize the DB on the first DB server 629 and the DB (i.e., replica) on the second DB server 630 is short. Therefore, it is preferable that the bandwidth of a link 633 between the first DB server 629 and the second DB server 630 is large.

Assume that the user specifies service levels through an input device of the user terminal 190 as follows based on the judgment as exemplified above.
- The default service level for the links in the user system 620 is level A. That is, unless otherwise specified individually, the service level of any link in the user system 620 is level A.
- The service level of the links 631 and 632 is level B.
- The service level of the link 633 is level C.

Assume that the management screen 610 further includes a GUI for specifying a service level. The user terminal 190 is enabled to receive the input for specifying the above-mentioned service levels, from the user through the GUI on the management screen 610.

As described above, according to the present embodiment, the user is enabled to arbitrarily define the configuration of the user system 620 through the GUI such as the management screen 610. Furthermore, according to the present embodiment, for each link between any two VMs (that is, for each virtual link implemented by a tunnel over a physical network), the user is enabled to specify the QoS of the link by specifying the service level.

Then, the definition information 640 for defining the configuration of the user system 620 and the service level of each link is sent from the user terminal 190 to the IaaS management server 180 when the start-up button 611 is clicked or tapped. The UI processing unit 181 of the IaaS management server 180 stores the definition information 640 received from the user terminal 190 in the definition storage unit 183.

The definition information 640 exemplified in FIG. 8 defines the user system 620. Although the definition information 640 is illustrated in a table format in FIG. 8, any data format other than the table format may be used. The definition information 640 includes the following three fields.
- The "VSYS name" field indicating that the name of the user system 620, which is a virtual system, is "VSYS-002".
- The "default service level" field indicating that the default service level of the links in the user system 620 is level A as described above.
- The "VNET" field for defining the virtual networks included in the user system 620.

As illustrated in FIG. 8, the VNET field of the definition information 640 stores the following data. Due to space limitations, the term "service level" is abbreviated as "SL" in FIG. 8.
- The user system 620 includes a first VNET (that is, the network 621) and a second VNET (that is, the network 622)
- The GW 623, the first Web server 624, the second Web server 625, and the FW 626 are connected to the first VNET. For more details, the FW 626 is connected to the first VNET through the first NIC 627 of the two virtual NICs.
- Among the service levels of the links between the VMs connected to the first VNET, the service level of the link 631 between the GW 623 and the first Web server 624 and that of the link 632 between the GW 623 and the second Web server 625 are set to be level B.
- The FW 626, the first DB server 629, and the second DB server 630 are connected to the second VNET. For more details, the FW 626 is connected to the second VNET through the second NIC 628 of the two virtual NICs.
- Among the service levels of the links between the VMs connected to the second VNET, the service level of the link 633 between the first DB server 629 and the second DB server 630 is set to be level C.

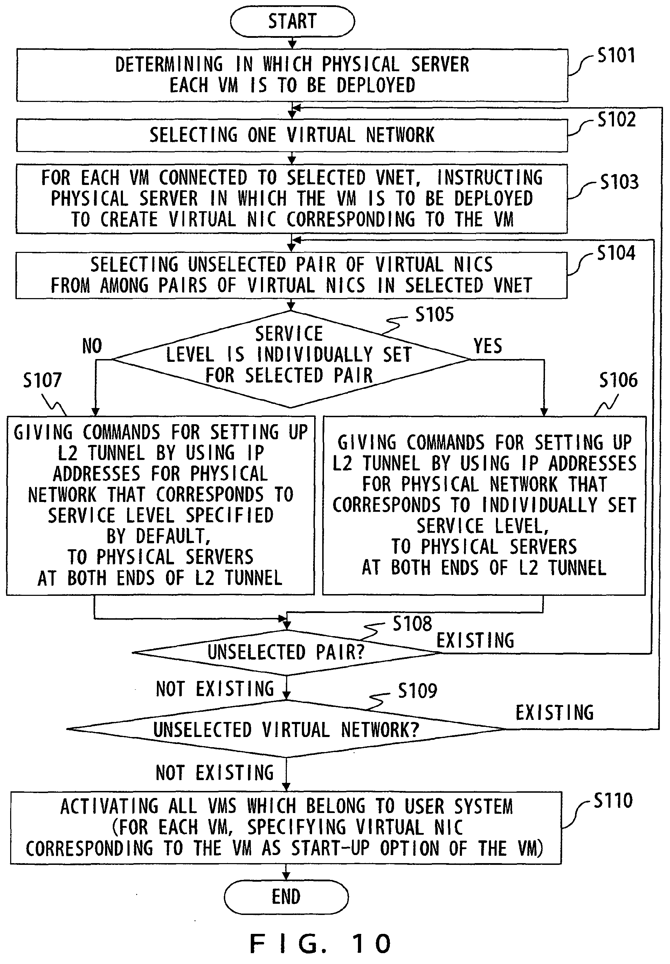

When the user newly defines the user system 620 on the management screen 610 using the user terminal 190, and clicks or taps the start-up button 611, the user terminal 190 sends the definition information 640 to the IaaS management server 180. Then, the IaaS management server 180 performs the process illustrated in FIG. 10 described later. As a result, the user system 620 starts running. FIG. 9 described later illustrates an example of a result of the process in FIG. 10.

The user may edit the definition information 640 after the user system 620 starts running. That is, at a request from the user terminal 190, the UI processing unit 181 may send the definition information 640 stored in the definition storage unit 183 to the user terminal 190. The definition information 640 is then edited in the user terminal 190 through the management screen 610.

If the change button 612 is clicked or tapped after the definition information 640 is edited, the user terminal 190 sends the edited definition information 640 to the IaaS management server 180. The UI processing unit 181 of the IaaS management server 180 receives the definition information 640 from the user terminal 190, and stores the received definition information 640 in the definition storage unit 183.

When the definition information 640 is edited as described above, the IaaS management server 180 performs the process depending on the details of the change. For example, when the service level of the link between certain two VMs is changed, the IaaS management server 180 performs the process in FIG. 11 described later. FIG. 12 described later illustrates an example of a result of the process in FIG. 11.

FIG. 9 illustrates examples of tunnels which are created in the present embodiment. If the user system 620 is newly defined as illustrated in FIG. 8 and the start-up button 611 is clicked or tapped, then, as a result of the process in FIG. 10 as described later, six VMs are deployed in some physical servers and nine tunnels are newly created as exemplified in FIG. 9.

In the example illustrated in FIG. 9, the GW 623 is deployed on a physical server 651, the first Web server 624 and the first DB server 629 are deployed on a physical server 652, the second Web server 625 and the second DB server 630 are deployed on a physical server 653, and the FW 626 is deployed on a physical server 654.

Each of the physical server 651 through 654 is one of a plurality of physical servers included in the network system 100 in FIG. 1. Due to space limitations, only the nine physical servers mounted on the three racks are illustrated in FIG. 1. However, it is obvious that the network system 100 may include ten or more physical servers mounted on four or more racks.

The first NIC 627 and the second NIC 628 in FIG. 8 are virtual NICs created in the host OS corresponding to the FW 626, which is a VM, as described above. Therefore, in FIG. 9, each of the first NIC 627 and the second NIC 628 are expressed as a "virtual NIC".

Similarly, in the host OS of the physical server 651, the virtual NIC 634 is created corresponding to the GW 623. In the host OS of the physical server 652, the virtual NIC 635 is created corresponding to the first Web server 624, and the virtual NIC 636 is created corresponding to the first DB server 629. In the host OS of the physical server 653, the virtual NIC 637 is created corresponding to the second Web server 625, and the virtual NIC 638 is created corresponding to the second DB server 630.

As illustrated in FIG. 8, the GW 623, the first Web server 624, the second Web server 625, and the FW 626 belong to the network 621. Therefore, in FIG. 9, the virtual NIC 634 for the GW 623, the virtual NIC 635 for the first Web server 624, the virtual NIC 637 for the second Web server 625, and the virtual NIC 627 for the FW 626 are illustrated in the block of the network 621.

As illustrated in FIG. 8, the FW 626, the first DB server 629, and the second DB server 630 belong to the network 622. Therefore, in FIG. 9, the virtual NIC 628 for the FW 626, the virtual NIC 636 for the first DB server 629, and the virtual NIC 638 for the second DB server 630 are illustrated in the block of the network 622.

In the definition information 640 in FIG. 8, for convenience of the drawings, the VMs connected to each virtual network and the links for which the service level is individually set are specified by simply using the names (such as "GW") of VMs (that is, pieces of identification information for identifying VMs). However, correctly speaking, an endpoint connected to a virtual L2 network (that is, the network 621 or 622) is not a VM itself, but a virtual interface (i.e., a virtual NIC) created in the host OS corresponding to the VM, as illustrated in FIG. 9.

That is, an endpoint of a tunnel is correctly a virtual NIC in the host OS. For example, when the VXLAN protocol is used as a protocol for tunneling, an endpoint of a tunnel is also referred to as a VXLAN tunnel end point (VTEP). Correctly speaking, a VTEP is not a VM, but a virtual NIC in the host OS. However, for simplifying the explanation, the simplified expressions "VMs at both ends of a tunnel", "physical servers at both ends of a tunnel", etc. may be used.

The name of a VM such as "GW" is used in the definition information 640 in FIG. 8. This is because, regarding the GW 623 for example, only one interface (that is, only the virtual NIC 634) is created for connection between the GW 623 and the virtual network. In this case, the virtual NIC 634 is identifiable by the name "GW" of the VM.

On the other hand, with respect to the FW 626, which is associated with two virtual NICs, i.e., the virtual NICs 627 and 628, an individual virtual NIC is not identified simply by the name "FW" of the VM. Therefore, the expressions such as "FW (first NIC)", "FW (second NIC)", etc. are used in the definition information 640.

Obviously, the notation used in the definition information 640 exemplified in FIG. 8 merely indicates an example for convenience of explanation. In the definition information 640, the four endpoints connected to the network 621 may be indicated by the identification information for identifying the virtual NIC 634, the identification information for identifying the virtual NIC 635, the identification information for identifying the virtual NIC 637, and the identification information for identifying the virtual NIC 627. Similarly, the link 631, whose service level is individually set, may also be indicated by a pair of the identification information for identifying the virtual NIC 634 and the identification information for identifying the virtual NIC 635. Furthermore, the link 632 may also be indicated by a pair of the identification information for identifying the virtual NIC 634 and the identification information for identifying the virtual NIC 637.

Similarly, in the definition information 640, the three endpoints connected to the network 622 may be indicated by the identification information for identifying the virtual NIC 636, the identification information for identifying the virtual NIC 638, and the identification information for identifying the virtual NIC 628. In addition, the link 633, whose service level is individually set, may be indicated by a pair of the identification information for identifying the virtual NIC 636 and the identification information for identifying the virtual NIC 638.

As described above, a specific notation used in the definition information 640 may be appropriately determined depending on the embodiment. Whatever notation is specifically adopted, the number of the virtual NICs defined for connection to the network 621 is four, and the number of the virtual NICs defined for connection to the network 622 is three.

The number of combinations of two virtual NICs out of the four virtual NICs is 6 (= 4×3/2). Therefore, the network 621 is realized by six tunnels 661 through 666. These six tunnels 661 through 666 are indicated by alternate dot-and-dash lines in FIG. 9.

Furthermore, the number of combinations of two virtual NICs out of the three virtual NICs is 3 (= 3×2/2). Therefore, the network 622 is realized by three tunnels 667 through 669. These three tunnels 667 through 669 are indicated by broken lines in FIG. 9.

As clearly understood from FIG. 9, no tunnel is created between the virtual NIC which belongs to the network 621 and the virtual NIC which belongs to the network 622. Therefore, the communication between the VMs in the user system 620 is realized by a total of nine (= 6+3) tunnels, i.e., the tunnels 661 through 669.

As indicated by the definition information 640 in FIG. 8, the service level is individually set for each of the three links among the nine links realized by the nine tunnels. Herein, as explained relating to the service level menu 600, the communication at level A is realized by a tunnel over the best-effort IP router network 170. The communication at level B is realized by a tunnel over the MPLS network 171, and the communication at level C is realized by a tunnel over the leased line network 172.

Therefore, the details of the nine tunnels 661 through 669 are concretely described as follows.
- In order to realize the link 631, for which level B is specified, the tunnel 661 over the MPLS network 171 is created between the virtual NICs 634 and 635. When the tunnel 661 is created, the signaling is performed over the MPLS network 171 according to the RSVP-TE. As a result, a physical path for connecting the physical servers 651 and 652 through the MPLS network 171 is established.
- In order to realize the link 632, for which level B is specified, the tunnel 662 over the MPLS network 171 is created between the virtual NICs 634 and 637. When the tunnel 662 is created, the signaling is performed over the MPLS network 171 according to the RSVP-TE. As a result, a physical path for connecting the physical servers 651 and 653 through the MPLS network 171 is established.
- The default service level is applied to the link between the GW 623 and the FW 626. In order to realize this link, the tunnel 663 over the best-effort IP router network 170 is created between the virtual NICs 634 and 627.
- The default service level is applied also to the link between the first Web server 624 and the FW 626. In order to realize this link, the tunnel 664 over the best-effort IP router network 170 is created between the virtual NICs 635 and 627.
- The default service level is applied also to the link between the second Web server 625 and the FW 626. In order to realize this link, the tunnel 665 over the best-effort IP router network 170 is created between the virtual NICs 637 and 627.
- The default service level is applied also to the link between the first Web server 624 and the second Web server 625. In order to realize this link, the tunnel 666 over the best-effort IP router network 170 is created between the virtual NICs 635 and 637.
- In order to realize the link 633, for which level C is specified, the tunnel 667 over the leased line network 172 is created between the virtual NICs 636 and 638.
- The default service level is applied to the link between the FW 626 and the first DB server 629. In order to realize this link, the tunnel 668 over the best-effort IP router network 170 is created between the virtual NICs 628 and 636.
- The default service level is applied to the link between the FW 626 and the second DB server 630. In order to realize this link, the tunnel 669 over the best-effort IP router network 170 is created between the virtual NICs 628 and 638.

As explained as the "second method" with reference to FIG. 1, within the section between the physical server and the edge router (or edge switch) of a physical network, the CoS control may be performed according to the value of the PCP in the VLAN tag. Then, the value of the PCP is the value depending on the service level specified by a user for the link realized by a tunnel. That is, the value depending on the QoS which is provided by the IaaS provider corresponding to the service level specified by the user is set in the PCP field. Therefore, in the case where the "second method" is applied, after the nine tunnels are created as illustrated in FIG. 9, a communication between the VMs in the user system 620 is performed while the QoS is kept at a specified service level from end to end, i.e. , from the sender VM to the destination VM.

It is obvious that the end-to-end QoS may be attained by the "first method" (i.e., the method of using ToRs with a sufficiently high performance), not by the "second method".

Then, how the IaaS management server 180 works when the start-up button 611 is clicked or tapped is described with reference to FIG. 10. How the physical servers work after the process in FIG. 10 is completed is described after the explanation with reference to FIG. 10.

When the user system 620 is defined on the management screen 610 in FIG. 8 and the start-up button 611 is clicked or tapped, the user terminal 190 sends the definition information 640 to the IaaS management server 180. Then, the UI processing unit 181 receives the definition information 640, generates a new name, sets the generated name in the "VSYS name" field of the definition information 640, and stores the definition information 640 in the definition storage unit 183.

Otherwise, instead of the definition information 640, the template identification information for specifying one of the templates stored in the definition storage unit 183 in advance may be sent from the user terminal 190 to the IaaS management server 180. In this case, the UI processing unit 181 generates a new instance of the definition information 640 by copying the specified template. Then, the UI processing unit 181 generates a new name, sets the generated name in the "VSYS name" field of the generated instance, and stores the thus-named instance in the definition storage unit 183.

The process in which the UI processing unit 181 receives the definition information 640 is an example of the process in which the IaaS management server 180 receives the network setting command, which is explained with reference to FIG. 1. Furthermore, the process in which the UI processing unit 181 receives the template identification information is also an example of the process in which the IaaS management server 180 receives the network setting command. Concretely, in the example in FIG. 8, when the start-up button 611 is clicked or tapped, the UI processing unit 181 receives (i.e., accepts) the following two network setting commands.
- A network setting command relating to the network 621 (including six tunnel connection commands about the six tunnels)
- A network setting command relating to the network 622 (including three tunnel connection commands about the three tunnels)

In any case, when the start-up button 611 is clicked or tapped, the new definition information 640 for defining the new user system 620 is stored in the definition storage unit 183. Then, in step S101, the VM management unit 182 determines in which physical server each VM included in the user system 620 is to be deployed, according to the newly stored definition information 640. That is, the VM management unit 182 determines the assignment of the VMs to the physical servers.

The assignment algorithm in step S101 may be any algorithm. For example, according to the definition information 640 in FIG. 8, the VM management unit 182 may determine, in step S101, the assignment illustrated in FIG. 9. Furthermore, the VM management unit 182 notifies the VNET management unit 184 of the determined deployment.

Next, in step S102, the VNET management unit 184 selects one of the one or more virtual networks defined by the definition information 640. For convenience of explanation below, the virtual network selected in step S102 is referred to as "selected VNET". For example, out of the first VNET (that is, the network 621) and the second VNET (that is, the network 622) which are defined by the definition information 640, the VNET management unit 184 may first select the first VNET in step S102.

Next, in step S103, for each VM connected to the selected VNET, the VNET management unit 184 instructs a physical server in which the VM concerned is to be deployed to create, in the host OS, a virtual NIC corresponding to the VM concerned.

For example, assume that the selected VNET is the network 621. In this case, four VMs, that is, the GW 623, the first Web server 624, the second Web server 625, and the FW 626, are connected to the selected VNET. In addition, assume that these four VMs are to be deployed in the physical servers 651 through 654 as illustrated in FIG. 9 according to the determination performed by the VM management unit 182 in step S101. In this case, the VNET management unit 184 operates as follows in step S103.
- The VNET management unit 184 instructs the physical server 651, in which the GW 623 is to be deployed, to create, in the host OS, the virtual NIC 634 corresponding to the GW 623. For more details, the VNET management unit 184 instructs the physical server 651 to create the virtual NIC 634 in the host OS corresponding to the virtual NIC to be created in the GW 623 for connection to the network 621.
- The VNET management unit 184 instructs the physical server 652, in which the first Web server 624 is to be deployed, to create, in the host OS, the virtual NIC 635 corresponding to the first Web server 624. For more details, the VNET management unit 184 instructs the physical server 652 to create the virtual NIC 635 in the host OS corresponding to the virtual NIC to be created in the first Web server 624 for connection to the network 621.
- The VNET management unit 184 instructs the physical server 653, in which the second Web server 625 is to be deployed, to create, in the host OS, the virtual NIC 637 corresponding to the second Web server 625. For more details, the VNET management unit 184 instructs the physical server 653 to create the virtual NIC 637 in the host OS corresponding to the virtual NIC to be created in the second Web server 625 for connection to the 621.
- The VNET management unit 184 instructs the physical server 654, in which the FW 626 is to be deployed, to create, in the host OS, the virtual NIC 627 corresponding to the FW 626. For more details, the VNET management unit 184 instructs the physical server 654 to create the virtual NIC 627 in the host OS corresponding to the virtual NIC to be created in the FW 626 for connection to the network 621.

Each physical server which receives the instruction (i.e. , command) in step S103 creates a new virtual NIC in the host OS in accordance with the instruction. For example, when the deployment as illustrated in FIG. 9 is determined in step S101 and the network 621 is selected in step S102, the virtual NICs 634, 635, 637, and 627 in FIG. 9 are created. As another example, when the network 622 is selected in step S102, the virtual NICs 636, 638, and 628 in FIG. 9 are created.

In addition, the VNET management unit 184 may receive, in step S103, the report indicating that the creation of the virtual NIC has been completed, from each physical server to which the above-exemplified command has been given. The report may include the identification information for identifying the created virtual NIC. The identification information may be the name of the virtual NIC. The identification information of the virtual NIC may be explicitly specified to the physical server by the VNET management unit 184 in step S103.

Next, in step S104, the VNET management unit 184 selects an unselected pair of virtual NICs from among the pairs of virtual NICs in the selected VNET. For convenience of explanation below, the pair selected in step S104 is referred to as a "selected pair".

For example, assume that the deployment as illustrated in FIG. 9 is determined in step S101 and that the network 621 is selected in step S102. In this case, the virtual NICs 634, 635, 637, and 627 are included in the selected VNET. Therefore, in step S104, the VNET management unit 184 selects one of the 6 pairs below.
- a pair of the virtual NICs 634 and 635
- a pair of the virtual NICs 634 and 637
- a pair of the virtual NICs 634 and 627
- a pair of the virtual NICs 635 and 637
- a pair of the virtual NICs 635 and 627
- a pair of the virtual NICs 637 and 627

Next, in step S105, the VNET management unit 184 refers to the definition information 640 stored in the definition storage unit 183, and judges whether or not the service level is individually specified for the selected pair. When the service level is individually specified for the selected pair, the VNET management unit 184 next executes step S106. On the other hand, when the service level is not individually specified for the selected pair (that is, when the default service level is applied to the selected pair), the VNET management unit 184 next executes step S107.

In the definition information 640 illustrated in FIG. 8, the name for identifying a VM, not the information for identifying a virtual NIC, is used for comprehensibility (and for simplifying the expression). As mentioned above, using the name of a VM is acceptable when a virtual NIC is uniquely identified from the name of the VM. It is also mentioned above that the identification information of a virtual NIC may be used instead of the name of a VM in the definition information 640. Therefore, the VNET management unit 184 is able to judge, in step S105, whether the service level is individually specified for the selected pair or not, by referring to the definition information 640.

For example, assume that the pair of the virtual NICs 634 and 635 is selected from among the six pairs exemplified relating to step S104. In this case, according to the definition information 640 in FIG. 8, level B is individually specified for the selected pair. Therefore, the VNET management unit 184 next executes step S106.

As another example, assume that the pair of the virtual NICs 635 and 627 is selected from among the six pairs exemplified relating to step S104. In this case, according to the definition information 640 in FIG. 8, the default service level (that is, level A) is applied to the selected pair. Therefore, the VNET management unit 184 next executes step S107.

In step S106, the VNET management unit 184 gives commands for setting up an L2 tunnel by using the IP addresses for the physical network that corresponds to the individually set service level, to the physical servers at both ends of the L2 tunnel.

For convenience of explanation below, assume that the pair of the virtual NICs 634 and 635 is selected in step S105, for example. In this case, the VNET management unit 184 recognizes the followings on the basis of the deployment determined by the VM management unit 182 in step S101.
- The GW 623 is to be deployed in the physical server 651. Therefore, the virtual NIC 634 exists in the physical server 651.
- The first Web server 624 is to be deployed in the physical server 652. Therefore, the virtual NIC 635 exists in the physical server 652.

Meanwhile, the IP addresses of the physical NIC of each physical server in the network system 100 are stored (i.e., registered) in advance in the storage device 256 of the IaaS management server 180. Therefore, the VNET management unit 184 is able to read, from the storage device 256, the three IP addresses assigned to the physical NIC of the physical server 651 corresponding to the best-effort IP router network 170, the MPLS network 171, and the leased line network 172. The VNET management unit 184 is able to similarly read, from the storage device 256, the three IP addresses assigned to the physical NIC of the physical server 652.

According to the assumption above, the service level set individually for the selected pair is level B. Meanwhile, the physical network which supports the QoS which realizes (i.e., implements) the level B is the MPLS network 171. Therefore, the VNET management unit 184 concretely reads the IP address assigned to the physical NIC of the physical server 651 corresponding to the MPLS network 171, and the IP address assigned to the physical NIC of the physical server 652 corresponding to the MPLS network 171. For convenience of explanation below, assume that the former IP address is 2001:db8:2:3::1 and the latter IP address is 2001:db8:2:6::1.

In addition, the VNET management unit 184 determines the tunnel identification information for identifying the tunnel between the two virtual NICs of the selected pair. For example, when the GRE is used for tunneling, a GRE key may be used as the tunnel identification information. As another example, when the VXLAN is used, a VNI may be used as the tunnel identification information.

For example, depending on the deployment determined by the VM management unit 182, there may be a plurality of tunnels between certain two physical servers, and these plurality of tunnels may be, specifically, a plurality of tunnels over the same physical network. That is, the pair of the destination IP address and the source IP address in the outer IP header used for tunneling may be common among the plurality of tunnels.

Even in the case above, the host OS of each of the two physical servers is able to discriminate these tunnels by using the tunnel identification information. That is, the use of the tunnel identification information makes it possible to output the encapsulated inner L2 frame to an appropriate VM through an appropriate virtual NIC.

The above is the reason why the VNET management unit 184 determines the tunnel identification information in step S106 as described earlier. For example, the storage device 256 of the IaaS management server 180 may store a DB (hereafter referred to as a "tunnel management DB") not illustrated in the attached drawings.

The tunnel management DB may store the information about an existing tunnel. For example, the tunnel management DB may store the information for identifying the virtual NICs on both ends of a tunnel, the two IP addresses used in tunneling, the tunnel identification information, etc. In this case, the VNET management unit 184 may generate a candidate for tunnel identification information. If the generated candidate is not registered as existing tunnel identification information in the tunnel management DB, the VNET management unit 184 may determine that the generated candidate is used as the tunnel identification information for a new tunnel. The VNET management unit 184 may repeat the generation of a candidate until unused tunnel identification information is found.

Obviously, if a simple sequence number is available as the tunnel identification information, the VNET management unit 184 may generate the tunnel identification information by simply using a counter. In any way, the VNET management unit 184 is capable of determining unused tunnel identification information for a new tunnel.

For example, when the selected pair is the pair of the virtual NICs 634 and 635 as assumed above, the VNET management unit 184 specifically gives commands to the physical servers 651 and 652 as mentioned below.

That is, the VNET management unit 184 notifies the physical server 651 of two IP addresses 2001:db8:2:3::1 and 2001:db8:2:6::1, the unused tunnel identification information determined as described above, and the identification information of the virtual NIC 634. That is, the VNET management unit 184 notifies the host OS of the physical server 651 of the information to be used in a tunnel header, and also notifies the host OS of the physical server 651 that one of the endpoints of the tunnel identified by the above tunnel identification information, more specifically, the endpoint on the physical server 651, is the virtual NIC 634. The thus-given notification is, in other words, a command. By this command, the VNET management unit 184 specifically instructs the physical server 651 (concretely, the host OS of the physical server 651) as follows.
- When encapsulating an inner L2 frame (that is, an L2 frame output to the virtual NIC 634 from the GW 623) for communication through the tunnel identified by the above tunnel identification information, use 2001:db8:2:3::1 and 2001:db8:2:6::1 as the source and destination IP addresses, respectively, and specify the above tunnel identification information in the tunnel header.
- When the physical NIC receives an outer L3 packet whose source and destination IP addresses are 2001:db8:2:6::1 and 2001:db8:2:3::1, respectively, and in which the above tunnel identification information is specified in the tunnel header, output the received outer L3 packet to the virtual NIC 634.

Similarly, the VNET management unit 184 notifies the physical server 652 of two IP addresses 2001:db8:2:6::1 and 2001:db8:2:3::1, the above tunnel identification information, and the identification information of the virtual NIC 635. That is, the VNET management unit 184 notifies the host OS of the physical server 652 of the information to be used in a tunnel header, and also notifies the host OS of the physical server 652 that one of the endpoints of the tunnel identified by the above tunnel identification information, more specifically, the endpoint on the physical server 652, is the virtual NIC 635. The thus-given notification is, in other words, a command. By this command, the VNET management unit 184 instructs the host OS of the physical server 652 as follows.
- When encapsulating an inner L2 frame (that is, an L2 frame output from the first Web server 624 to the virtual NIC 635) for communication through the tunnel identified by the above tunnel identification information, use 2001:db8:2:6::1 and 2001:db8:2:3::1 as the source and destination IP addresses, respectively, and specify the above tunnel identification information in the tunnel header.
- When the physical NIC receives an outer L3 packet whose source and destination IP addresses are 2001:db8:2:3::1 and 2001:db8:2:6::1, respectively, and in which the above tunnel identification information is specified in the tunnel header, output the received outer L3 packet to the virtual NIC 635.

In accordance with the command thus given, the host OS of the physical server 651 stores, in a storage device (for example, RAM), an entry that associates the following pieces of information with each other: the two IP addresses, the tunnel identification information, and the identification information of the virtual NIC 634, which are given by the notification as the command. This entry is allowed to be referenced from the host OS of the physical server 651. Hence, the virtual NIC 634 in the host OS is able to recognize the destination IP address, the source IP address, and the tunnel identification information which are to be set in the tunnel header, by referencing this entry.

Similarly, in accordance with the command given by the VNET management unit 184, the host OS of the physical server 652 also stores, in a storage device (for example, RAM), an entry that associates the following pieces of information with each other: the two IP addresses, the tunnel identification information, and the identification information of the virtual NIC 635, which are given by the notification as the command.

An entry, of which examples are described above, is added to the storage device of each physical server each time the physical server receives a command from the VNET management unit 184. Therefore, there may be a plurality of entries in the storage device. For convenience of explanation below, a set of these entries are also called a "tunnel management DB". However, the format of the tunnel management DB of each physical server may be different from that of the tunnel management DB managed by the VNET management unit 184.

Depending on the embodiments, the VNET management unit 184 may further notify, in step S106, the physical servers 651 and 652 of one or both of the two values below.
- The value of priority predetermined for the service level specified for the selected pair (concretely, the value to be set in the PCP field of the VLAN tag).
- The VLAN-ID predetermined for the service level specified for the selected pair.

In the case where the value of the PCP is given by the notification from the VNET management unit 184, the host OS of the physical server 651 includes the given value of the PCP in the entry of the tunnel management DB. In the case where the VLAN-ID is given by the notification from the VNET management unit 184, the host OS of the physical server 651 includes the given value of the VLAN-ID in the entry of the tunnel management DB. The host OS of the physical server 652 similarly works.

However, even if a VLAN tag is used in the section between the edge router (or edge switch) of a physical network and a physical server, the notification of the value of the PCP and/or that of the VLAN-ID may be omitted for the following reason.

For example, when a physical server boots up, a parameter (s) relating to the VLAN may be preset in the driver (for example, Ethernet driver) which is provided for the physical NIC and is included in the host OS of the physical server. For example, the information that associates the prefix of the IPv6 address, the VLAN-ID, and the value of the PCP with each other may be set in the driver.

In this case, by using the prefix common between the source and destination IP addresses in the tunnel header (concretely, in the IP header in the tunnel header), the host OS of the physical server is able to look up the VLAN-ID and the value of the PCP which correspond to this prefix. Therefore, the host OS is able to include, in the outer L2 header, the VLAN tag in which an appropriate VLAN-ID and an appropriate value of the PCP that depend on the QoS supported by the physical network over which the tunnel exists are specified.

Obviously, the VNET management unit 184 may explicitly notify the physical server of the value of the PCP, as described above. In this case, the host OS of the physical server is able to include, in the outer L2 header, the VLAN tag in which the value of the PCP given by the notification from the VNET management unit 184 is specified, by referring to the value of the PCP stored in the entry of the tunnel management DB.

The VNET management unit 184 may explicitly notify the physical server of only the value of the VLAN-ID. In this case, it is assumed that the information that associates the value of the PCP with each VLAN-ID is set in advance in the driver which is provided for the physical NIC and is included in the host OS of the physical server. Concretely, it is assumed that, for each level of QoS provided by a physical network, the information that associates the following two values with each other is set in the above-mentioned driver.
- The VLAN-ID predetermined corresponding to the QoS concerned
- The value of the PCP predetermined corresponding to the QoS concerned

In this case, the host OS (including the driver) of the physical server is enabled to read the VLAN-ID from the entry of the tunnel management DB, and to obtain the value of the PCP associated with the read VLAN-ID. Therefore, the host OS is able to include, in the outer L2 header, the VLAN tag in which an appropriate VLAN-ID and an appropriate value of the PCP that depend on the QoS supported by the physical network over which the tunnel exists are specified.

As described above, in step S106, the commands to create an L2 tunnel are given, by the VNET management unit 184, to the physical servers at both ends of the tunnel.

On the other hand, in step S107, the VNET management unit 184 gives commands for setting up an L2 tunnel by using the IP addresses for the physical network corresponding to the service level specified by default, to the physical servers at both ends of the L2 tunnel.

The difference between step S107 and step S106 lies in the two IP addresses specified by the VNET management unit 184. In the case where the VNET management unit 184 explicitly gives the physical server the notification of the value of the PCP and/or VLAN-ID, the given value of the PCP and/or the given VLAN-ID is/are also different between step S106 and step S107.

However, in other points, steps S106 and S107 are similar. Therefore, the detailed explanation of step S107 is omitted here. Examples of the IP addresses specified in step S107 are briefly explained below.

For example, assume that the selected pair is the pair of the virtual NICs 635 and 627. Furthermore, assume that IP address 2001:db8:1:6: :1 is assigned to the physical NIC of the physical server 652, corresponding to the physical network (that is, the best-effort IP router network 170) corresponding to the default service level. In addition, assume that IP address 2001:db8:1:15::1 is assigned to the physical NIC of the physical server 654, corresponding to the best-effort IP router network 170.

In this case, in step S107, the VNET management unit 184 notifies the physical server 652 of two IP addresses 2001:db8:1:6::1 and 2001:db8:1:15::1 as the source IP address and the destination IP address, respectively. Furthermore, the VNET management unit 184 notifies the physical server 654 of two IP addresses 2001:db8:1:15::1 and 2001:db8:1:6::1 as the source IP address and the destination IP address, respectively.

After the execution of step S106 or S107, step S108 is executed. In step S108, the VNET management unit 184 judges whether or not there is an unselected pair among the pairs of virtual NICs in the selected VNET. If one or more unselected pairs remain, the VNET management unit 184 next executes step S104 again. On the other hand, if the pairs of virtual NICs in the selected VNET have all been selected, step S109 is executed next.

In step S109, the VNET management unit 184 judges whether or not there is any unselected virtual network among the one or more virtual networks defined by the definition information 640. If one or more unselected virtual networks remain, the VNET management unit 184 next executes step S102 again. On the other hand, if the one or more virtual networks defined by the definition information 640 have all been selected, step S110 is executed next.

In step S110, the VM management unit 182 performs the process for activating (i. e. , starting up) all VMs which belong to the user system 620. Concretely, for each VM which belongs to the user system 620, the VM management unit 182 instructs the corresponding physical server, which has been determined in step S101 corresponding to the VM concerned, to activate the VM concerned. To be more concrete, the VM management unit 182 specifies that the identification information of the virtual NIC which the corresponding physical server has been instructed in step S103 to create corresponding to the VM concerned is to be set, by the corresponding physical server, for an option parameter of the command to activate the VM concerned. For example, in the example in FIG. 9, the VM management unit 182 gives commands to the physical servers 651 through 654 as described below.
- The VM management unit 182 instructs the physical server 651 (to be more concrete, the host OS of the physical server 651) to activate the GW 623 with the identification information of the virtual NIC 634 specified as the option.
- The VM management unit 182 instructs the physical server 652 to activate the first Web server 624 with the identification information of the virtual NIC 635 specified as the option, and to activate the first DB server 629 with the identification information of the virtual NIC 636 specified as the option.
- The VM management unit 182 instructs the physical server 653 to activate the second Web server 625 with the identification information of the virtual NIC 637 specified as the option, and to activate the second DB server 630 with the identification information of the virtual NIC 638 specified as the option.
- The VM management unit 182 instructs the physical server 654 to activate the FW 626 with the identification information of the virtual NIC 627 and the identification information of the virtual NIC 628 both specified as the option.

Upon completion of the above-mentioned process in step S110, the virtual system activating process in FIG. 10 is also completed. Meanwhile, each physical server which has received the command in step S110 appropriately activates a VM (or VMs) in accordance with the command.

Then, a concrete example of a communication after completion of the virtual system activating process in FIG. 10 is described. For convenience of explanation below, assume that, as a result of the process in FIG. 10, the six VMs of the user system 620 are deployed in the four physical servers 651 through 654 and the nine tunnels 661 through 669 are created as illustrated in FIG. 9. Described below as an example is the case in which the first Web server 624 sends data to the GW 623.

The first Web server 624 creates an inner L3 packet to be sent to the GW 623. The inner L3 packet may be in any L3 protocol format.

For example, the inner L3 packet may be an IPv4 packet. In this case, in the IP header of the inner L3 packet (that is, in the inner L3 header), the IPv4 address of the first Web server 624 (for example, 192.168.2.2) is specified as the source IP address. In the IP header of the inner L3 packet, the IPv4 address of the GW 623 (for example, 192.168.2.1) is specified as the destination IP address. A user is allowed to arbitrarily determine the IP address of any VM in the user system 620.

Then, the first Web server 624 creates an inner L2 frame by prepending an inner L2 header to the inner L3 packet. The inner L2 frame may be in any L2 protocol format.

For example, the inner L2 frame may be an Ethernet frame. In this case, in the inner L2 header (that is, in the Ethernet header of the inner L2 frame), the MAC address of the first Web server 624 (for more details, the MAC address of the virtual NIC which is included in the first Web server 624 but is not illustrated in the attached drawings) is specified as the source MAC address. In addition, in the inner L2 header, the MAC address of the GW 623 (for more details, the MAC address of the virtual NIC which is included in the GW 623 but is not illustrated in the attached drawings) is specified as the destination MAC address.

The MAC address of the virtual NIC in the VM may be a value not related to the MAC address of the physical NIC. For example, in the case where a hypervisor is used for virtualization, the hypervisor may automatically determine the MAC address of the virtual NIC in the VM when the VM is activated (i.e., started up). As another example, a user may explicitly specify the MAC address of the virtual NIC in the VM.

The first Web server 624 may recognize the MAC address of the GW 623 with reference to an address resolution protocol (ARP) table in the first Web server 624. If the MAC address of the GW 623 has already been learned and stored in the ARP table, the first Web server 624 is able to specify the learned MAC address as the destination MAC address of the inner L2 header as described above.

However, at a point in time immediately after the user system 620 is activated (i.e. , started up), the MAC address of the GW 623 is neither learned nor stored in the ARP table. In this case, the first Web server 624 first performs the address resolution in the network 621 (that is, a virtual L2 network segment).

Concretely, the first Web server 624 generates, as an inner L3 packet, an ARP request packet in which the IPv4 address (for example, 192.168.2.1) of the GW 623 is specified as a target protocol address (TPA). Then, the first Web server 624 creates an inner L2 frame by prepending, to the inner L3 packet, an inner L2 header in which the broadcast address is specified as the destination MAC address. The first Web server 624 outputs the created inner L2 frame to the virtual NIC 635. The source MAC address in the inner L2 header is the MAC address of the virtual NIC which is included in the first Web server 624 but is not illustrated in the attached drawings.

When the destination MAC address in the inner L2 header is the broadcast address, the host OS of the physical server 652 operates as follows. For each tunnel whose endpoint at one end is the virtual NIC 635, which has received the inner L2 frame from the first Web server 624, the host OS sends an outer L3 packet including the encapsulated inner L2 frame through the tunnel.

That is, in this example, the outer L3 packet including the ARP request packet as the inner L3 packet is sent through each of the tunnels 661, 664, and 666. Thus, a broadcast transmission over the network 621 is realized. It is described below in more detail.

In the physical server 652, the virtual NIC 635 in the host OS receives the inner L2 frame including the ARP request packet, from the first Web server 624. Therefore, the virtual NIC 635 learns that the source MAC address of the inner L2 frame is the address of the first Web server 624, which is the VM paired with the virtual NIC 635 in the physical server 652, not the address of the "communication partner", which means the other party of communication, connected through a tunnel.

Here, as understood from the explanation about steps S106 and S107, the tunnel management DB of the physical server 652 includes three entries corresponding to the tunnels 661, 664, and 666. Therefore, the virtual NIC 635 finds these three entries by searching the tunnel management DB for an entry including the identification information of the virtual NIC 635.

For each of the found entries, the virtual NIC 635 reads, from the entry, the destination IP address, the source IP address, and the tunnel identification information, and sets, in the tunnel header, the read destination IP address, the read source IP address, and the read tunnel identification information. The virtual NIC 635 generates the outer L3 packet by prepending the tunnel header to the inner L2 frame (i.e., the frame including the ARP request packet) output from the first Web server 624.

To each of the three outer L3 packets generated as described above, an appropriate outer L2 header is prepended by the host OS of the physical server 652. Then, the three outer L2 frames are sent from the physical NIC of the physical server 652. The destination MAC address specified in the outer L2 header is concretely determined as described below. Note that the "neighbor discovery", "neighbor cache", etc. described below are elements of the technology used relating to the IPv6, as described in the request for comments 4861 (RFC 4861) etc.

When the physical server indicated by the destination IP address in the tunnel header is in the same network segment as the physical server 652, which is the source (i.e., sender), the host OS of the physical server 652 refers to the neighbor cache. If the MAC address corresponding to the destination IP address is found in the neighbor cache, the host OS specifies the found MAC address as the destination MAC address in the outer L2 header.

If the MAC address corresponding to the destination IP address is not found in the neighbor cache, the host OS performs the neighbor discovery. To be more concrete, the host OS performs "neighbor solicitation".

When the physical server indicated by the destination IP address is in the same network segment as the physical server 652, which is the source, the host OS can receive a "neighbor advertisement" packet as a result of the neighbor solicitation. The host OS is able to learn, from the neighbor advertisement packet, the MAC address corresponding to the destination IP address. Therefore, the host OS stores the result of the learning in the neighbor cache, and specifies the learned MAC address as the destination MAC address in the outer L2 header.

On the other hand, when the physical server indicated by the destination IP address and the physical server 652, which is the source, are in different network segments, the host OS of the physical server 652 refers to the neighbor cache, and reads the MAC address of a router. Then, the host OS specifies the MAC address of the router as the destination MAC address in the outer L2 header.

As clearly understood from FIGS. 1 and 3, the edge router (or edge switch) of each of a plurality of physical networks is connected, through a single ToR, to the physical server 652, which is the source. Therefore, the neighbor cache includes a plurality of entries about the plurality of edge routers (or edge switches).

In this example, the host OS reads, from the neighbor cache, the MAC address of an edge router (or an edge switch) which is one of the plurality of edge routers (or edge switches) and is of the physical network to which the prefix of the destination IP address is assigned. That is, the host OS reads, from the neighbor cache, the MAC address corresponding to the router IP address which starts with the prefix common to the source IP address and the destination IP address.

A router in the IPv6 network periodically sends a "router advertisement" packet. The router advertisement packet includes the information about the prefix. Each physical server may send a "router solicitation" packet when it boots up, and then may receive a router advertisement packet as a reply to the router solicitation packet.

Therefore, each physical server is able to recognize a prefix length by receiving a router advertisement. Furthermore, each physical server is able to learn the MAC address of a router by receiving a router advertisement.

Therefore, the physical server 652 is able to judge, based on the recognized prefix length, whether or not the physical server indicated by the destination IP address is in the same network segment as the physical server 652, which is the source. The physical server 652 is also able to read, from the neighbor cache, the MAC address of the router as described above.

As described above, an appropriate destination MAC address is specified in the outer L2 header. The source MAC address in the outer L2 header is the MAC address of the physical NIC of the physical server 652. As described above, the outer L2 header may include a VLAN tag in which the PCP (or the PCP and the VLAN-ID) is specified. As described above, for example, the Ethernet driver of the host OS may insert an appropriate VLAN tag according to the information set in advance.

As described above, the three outer L3 packets, which include the same ARP request packet as the inner L3 packet, are sent through the tunnels 661, 664, and 666.

As a result, the virtual NIC 634 receives, through the tunnel 661, the outer L3 packet including the ARP request packet as the inner L3 packet.

Concretely, the outer L3 packet is first received by the physical NIC of the physical server 651. The host OS of the physical server 651 judges the protocol of the header next to the outer IP header, by referring to the value of the "next header" field in the outer L3 header (concretely, in the outer IP header) of the outer L3 packet. If the protocol specified in the next header field is not the protocol used in tunneling, the host OS performs an appropriate process depending on the protocol.

On the other hand, if the protocol specified in the next header field is the protocol (for example, the GRE) used in tunneling, then the host OS outputs the outer L3 packet to an appropriate virtual NIC.

Concretely, the host OS reads the tunnel identification information (for example, the GRE key) from the next header (for example, the GRE header) next to the outer IP header, and searches the tunnel management DB for an entry including the read tunnel identification information. Depending on the embodiment, the host OS may use, as search keys, not only the tunnel identification information but also the two IP addresses specified in the outer IP header.

Unless there is an unexpected error or an illegal transmission, an entry corresponding to the tunnel 661 (that is, an entry that the host OS has created in accordance with the command given by the VNET management unit 184 for creation of the tunnel 661) is found as a result of the search. The host OS reads the identification information of the virtual NIC from the found entry, and passes the outer L3 packet to the virtual NIC identified by the read identification information (i.e., to the virtual NIC 634, in this example).

As described above, the virtual NIC 634 is enabled to receive the outer L3 packet through the tunnel 661. Furthermore, when the outer L3 packet is thus received, the virtual NIC 634 learns that the source MAC address of the inner L2 header is not the address of the VM in the physical server 651, but the address of the communication partner connected through the tunnel 661. That is, the virtual NIC 634 learns the association between the source MAC address of the inner L2 header and the tunnel identification information (that is, the identification information of the tunnel 661) in the tunnel header of the received outer L3 packet. Concretely, the virtual NIC 634 adds, to the learning table, an entry that associates the source MAC address of the inner L2 header and the tunnel identification information in the outer L3 packet with each other.

The virtual NIC 634 removes the tunnel header (which includes, for example, the IP header and the GRE header) from the outer L3 packet. Then, the virtual NIC 634 outputs the inner L2 frame to the GW 623, which is the VM paired with the virtual NIC 634.

The TPA of the ARP request packet included in the inner L2 frame received by the GW 623 is the IPv4 address of the GW 623. Therefore, the GW 623 learns the pair of the sender protocol address (SPA) and the sender hardware address (SHA) of the ARP request packet. That is, the GW 623 learns the pair of the IP address and the MAC address of the first Web server 624. In other words, the GW 623 stores the pair of the SPA and the SHA in the ARP table.

In addition, the GW 623 creates an inner L2 frame including an ARP reply packet as an inner L3 packet. In the ARP reply packet, the SPA is the IP address of the GW 623, and the SHA is the MAC address of the GW 623. In the inner L2 frame, the MAC address of the GW 623 is set as the source MAC address, and the MAC address of the first Web server 624 is set as the destination MAC address.

The GW 623 outputs the created inner L2 frame to the virtual NIC 634. Therefore, the virtual NIC 634 learns that the source MAC address of the inner L2 frame is not the address of the communication partner connected through a tunnel but the address of the VM (i.e., the GW 623) paired with the virtual NIC 634 in the physical server 651.

Furthermore, it has been learned that the MAC address of the first Web server 624 is the address of the communication partner connected through the tunnel 661. This learning process is done, as described above, when the outer L3 packet including the ARP request packet is received. That is, the virtual NIC 634 has learned the association between the MAC address of the first Web server 624 and the tunnel identification information of the tunnel 661. Therefore, based on the above-mentioned result of the learning and the destination MAC address in the inner L2 header, the virtual NIC 634 recognizes the tunnel identification information of the tunnel 661.

Then, in order to obtain the information to be used in encapsulation, the virtual NIC 634 searches the tunnel management DB for the entry including the recognized tunnel identification information and the identification information of the virtual NIC 634 itself. As a result of the search, an entry corresponding to the tunnel 661 (that is, an entry that the host OS has created in accordance with the command given by the VNET management unit 184 for creation of the tunnel 661) is found.

Therefore, the virtual NIC 634 specifies, in the outer IP header for tunneling, the destination IP address and the source IP address included in the found entry. Furthermore, the virtual NIC 634 specifies the recognized tunnel identification information in the tunnel header. For example, the virtual NIC 634 may specify, in the "key" field of the GRE header, the GRE key recognized based on the destination MAC address in the inner L2 header.

An outer L2 header is then prepended, by the host OS of the physical server 651, to the outer L3 packet thus generated by the virtual NIC 634. Then, the outer L2 frame is sent from the physical NIC of the physical server 651. When the destination MAC address to be specified in the outer L2 header is determined, the neighbor cache is referred to.

Meanwhile, the virtual NIC 627 receives the outer L3 packet including the ARP request packet as the inner L3 packet, through the tunnel 664. When the outer L3 packet is received, the virtual NIC 627 learns the association between the source MAC address (that is, the MAC address of the first Web server 624) in the inner L2 header and the tunnel identification information of the tunnel 664.

The virtual NIC 627 outputs the inner L2 frame to the FW 626, which is the VM paired with the virtual NIC 627. If an entry for the IP address of the first Web server 624 already exists in the ARP table, the FW 626 updates the MAC address of this entry to the SHA of the ARP request packet.

Similarly, the virtual NIC 637 also receives the outer L3 packet including the ARP request packet as the inner L3 packet, through the tunnel 666. When the outer L3 packet is received, the virtual NIC 637 learns the association between the source MAC address (that is, the MAC address of the first Web server 624) in the inner L2 header and the tunnel identification information of the tunnel 666.

Furthermore, the virtual NIC 637 outputs the inner L2 frame to the second Web server 625, which is the VM paired with the virtual NIC 637. If an entry for the IP address of the first Web server 624 already exists in the ARP table, the second Web server 625 updates the MAC address of this entry to the SHA of the ARP request packet.

Neither the second Web servers 625 nor the FW 626 generate an ARP reply packet. On the other hand, as described above, the outer L3 packet including the ARP reply packet as the inner L3 packet is sent from the virtual NIC 634 through the tunnel 661. The outer L3 packet is received by the virtual NIC 635 in the physical server 652.

Concretely, the host OS of the physical server 652 refers to the "next header" field of the outer IP header of the received outer L3 packet. Since the protocol for tunneling is specified in the "next header" field, the host OS next refers to the tunnel identification information.

Then, the host OS searches the tunnel management DB for an entry indicating the tunnel identified by the tunnel identification information. As a result of the search, an entry indicating the tunnel 661 is found. Since this entry includes the identification information of the virtual NIC 635, the host OS passes the outer L3 packet to the virtual NIC 635.

When the outer L3 packet is thus received, the virtual NIC 635 learns the association between the source MAC address of the inner L2 header and the tunnel identification information in the tunnel header of the received outer L3 packet. That is, the virtual NIC 635 learns the association between the MAC address of the GW 623 and the tunnel identification information of the tunnel 661.

The virtual NIC 635 removes the tunnel header (which includes, for example, the IP header and the GRE header) from the outer L3 packet. Then, the virtual NIC 635 outputs the inner L2 frame to the first Web server 624, which is the VM paired with the virtual NIC 635.

As a result, the first Web server 624 receives the ARP reply packet included in the inner L2 frame as the inner L3 packet. Therefore, the first Web server 624 learns the pair of the SPA and the SHA of the ARP reply packet (that is, the pair of the IP address and the MAC address of the GW 623). That is, the first Web server 624 stores the pair of the SPA and the SHA in the ARP table.

As described above, the address resolution in accordance with the ARP is realized on the network 621, which is realized by the L2 tunnels over the L3 physical network. Therefore, by the transmission of the ARP request packet and the reception of the ARP reply packet, or by the learned entry in the ARP table, the first Web server 624 is enabled to recognize the MAC address of the GW 623.

Therefore, when the first Web server 624 creates the inner L3 packet to be sent to the GW 623 as described above, the first Web server 624 is able to determine the destination MAC address to be specified in the inner L2 header.

That is, the first Web server 624 is able to generate the inner L2 frame including the inner L3 packet to be sent to the GW 623. In this inner L2 frame, the MAC address of the GW 623 is specified as the destination MAC address, and the MAC address of the first Web server 624 is specified as the source MAC address.

The first Web server 624 outputs the created inner L2 frame to the virtual NIC 635. As described above, when the outer L3 packet including the ARP reply packet as the inner L3 packet is received, the virtual NIC 635 has learned the association between the MAC address of the GW 623 and the tunnel identification information of the tunnel 661. Therefore, based on the above result of the learning and the destination MAC address in the inner L2 header, the virtual NIC 635 recognizes the tunnel identification information of the tunnel 661.

Then, the virtual NIC 635 searches the tunnel management DB for an entry including the identification information of the virtual NIC 635 itself and the recognized tunnel identification information. As a result of the search, the entry corresponding to the tunnel 661 (that is, the entry that the host OS has created in accordance with the command given by the VNET management unit 184 for creation of the tunnel 661) is found.

Therefore, the virtual NIC 635 specifies, in the outer IP header for tunneling, the destination IP address and the source IP address included in the found entry. That is, the virtual NIC 635 specifies, as the destination IP address, the IP address assigned to the physical NIC of the physical server 651 corresponding to the MPLS network 171. Furthermore, the virtual NIC 635 specifies, as the source IP address, the IP address assigned to the physical NIC of the physical server 652 corresponding to the MPLS network 171.

Furthermore, the virtual NIC 635 specifies, in the tunnel header, the tunnel identification information of the tunnel 661 recognized as described above. For example, the virtual NIC 635 may specify, in the "key" field of the GRE header, the GRE key recognized based on the destination MAC address in the inner L2 header.

The host OS of the physical server 652 prepends an outer L2 header to the outer L3 packet thus generated by the virtual NIC 635. Then, the outer L2 frame is sent from the physical NIC of the physical server 652. In determining the destination MAC address to be specified in the outer L2 header, the neighbor cache is referenced.

Then, the outer L3 packet reaches the physical server 651 through the tunnel 661 over the MPLS network 171. The host OS of the physical server 651 refers to the "next header" field of the outer IP header of the outer L3 packet received by the physical NIC. Since the protocol for tunneling is specified in the "next header" field, the host OS next refers to the tunnel identification information.

Then, the host OS searches the tunnel management DB for the entry indicating the tunnel identified by the tunnel identification information. As a result of the search, the entry indicating the tunnel 661 is found. Since this entry includes the identification information of the virtual NIC 634, the host OS passes the outer L3 packet to the virtual NIC 634.

When the outer L3 packet is thus received, the virtual NIC 634 checks the association between the source MAC address of the inner L2 header and the tunnel identification information in the outer L3 packet. As described above, this association has been learned upon receipt of the outer L3 packet including the ARP request packet as the inner L3 packet. Therefore, it is not necessary for the virtual NIC 634 to add an entry to the learning table at this time.

Then, the virtual NIC 634 removes the tunnel header (which includes, for example, the IP header and the GRE header) from the thus received outer L3 packet. Then, the virtual NIC 634 outputs the inner L2 frame to the GW 623, which is the VM paired with the virtual NIC 634.

As a result, the GW 623 receives the inner L3 packet included in the inner L2 frame. The GW 623 performs an appropriate process depending on the payload of the inner L3 packet.

For example, as described above, the first Web server 624 is able to send the data of the inner L3 packet to the GW 623, which belongs to the network 621. The communication between any other pair of VMs connected through a tunnel is also realized in a similar way.

As understood from the explanation above, the host OS of each physical server operates in accordance with the command given by the VNET management unit 184 to the physical server in step S106 or S107, thereby realizing the communication between VMs with the QoS specified depending on the tunnel. That is, the host OS of each physical server operates in accordance with the command given by the VNET management unit 184, thereby realizing the communication between VMs at the service level specified depending on the link in the virtual network (for example, the link 631 in the network 621).

FIG. 11 is a flowchart of a service level changing process. For example, for the currently running user system 620, a user may specify again the service level of any link in the user system 620 through the management screen 610 in FIG. 8. In this case, if the user clicks or taps the change button 612, then the new definition information 640 in which the service level has been changed is sent from the user terminal 190 to the IaaS management server 180, and received by the UI processing unit 181. Then, the UI processing unit 181 stores the new definition information 640 in the definition storage unit 183. Then, the service level changing process in FIG. 11 is started.

In step S201, the VNET management unit 184 gives commands for disconnecting (i.e. , deleting) the tunnel for which change in the service level is requested by the user, to the physical servers at both ends of the tunnel. As explained with reference to FIG. 8, in the definition information 640, the tunnel is specified by the pair of the virtual NICs as both endpoints of the tunnel.

Next, in step S202, the VNET management unit 184 gives commands for establishing (i.e., creating) a tunnel which runs between the virtual NICs at both ends and is configured over the physical network corresponding to the newly specified service level, to the physical servers at both ends of the tunnel. When step S202 is completed, the service level changing process is also completed.

The physical servers at both ends of the tunnel operate in accordance with the commands given in steps S201 and S202. As a result, the existing tunnel is deleted, and a new tunnel is created.

For example, according to the definition information 640 in FIG. 8, the service level of the link 633 between the first DB server 629 and the second DB server 630 is specified as level C by the user. Meanwhile, assume that the user re-specifies the service level of the link 633 as level B through the management screen 610 at a certain point in time, and clicks or taps the change button 612. In this case, the VNET management unit 184 gives, in step S201, the physical servers 652 and 653 commands to delete the tunnel 667 in FIG. 9 (that is, the tunnel to realize the link 633).

For convenience of explanation below, the following assumptions are made.
- The IP address assigned to the physical NIC of the physical server 652 corresponding to the leased line network 172 is 2001:db8:3:6::1.
- The IP address assigned to the physical NIC of the physical server 652 corresponding to the MPLS network 171 is 2001:db8:2:6::1.
- The IP address assigned to the physical NIC of the physical server 653 corresponding to the leased line network 172 is 2001:db8:3:1c::1.
- The IP address assigned to the physical NIC of the physical server 653 corresponding to the MPLS network 171 is 2001:db8:2:1c::1.

Under the assumptions above, the VNET management unit 184 concretely gives the following commands to the physical servers 652 and 653 in step S201.

That is, the VNET management unit 184 gives a command to the physical server 652 and thereby instructs the physical server 652 to dissolve the association between the IP address of 2001:db8:3:6::1 and the virtual NIC 636. That is, the VNET management unit 184 instructs the physical server 652 to stop using the IP addresses of 2001: db8 : 3 : 6 : : 1 and 2001: db8 : 3 : 1c:: 1 in encapsulating an L2 frame output from the first DB server 629.

Similarly, the VNET management unit 184 gives a command to the physical server 653 and thereby instructs the physical server 653 to dissolve the association between the IP address of 2001:db8:3:1c::1 and the virtual NIC 638. That is, the VNET management unit 184 instructs the physical server 653 to stop using the IP addresses of 2001:db8:3:1c::1 and 2001:db8:3:6: 1 in encapsulating an L2 frame output from the second DB server 630.

In accordance with the above command, the host OS of the physical server 652 deletes, from the tunnel management DB, the entry which associates the above-mentioned two IP addresses, the identification information of the tunnel 667, and the identification information of the virtual NIC 636 with each other. Similarly, the host OS of the physical server 653 also deletes, from the tunnel management DB, the entry which associates the above-mentioned two IP addresses, the identification information of the tunnel 667, and the identification information of the virtual NIC 638 with each other.

Meanwhile, step S202 is similar to steps S106 and S107. In step S202, the VNET management unit 184 may use the tunnel identification information used for the tunnel 667, for which the commands for deletion are issued in step S201, as the tunnel identification information used for a new tunnel to realize the link 633 at level B. Otherwise, the VNET management unit 184 may use unused tunnel identification information as the tunnel identification information for the new tunnel.

In any way, the VNET management unit 184 notifies the physical server 652 of 2001:db8:2:6::1 and 2001:db8:2:41c::1 respectively as the source IP address and the destination IP address. Furthermore, the VNET management unit 184 notifies the physical server 652 of the tunnel identification information determined as described above and the identification information of the virtual NIC 636, which is a tunnel endpoint on the physical server 652.

Similarly, the VNET management unit 184 notifies the physical server 653 of 2001:db8:2:1c::1 and 2001:db8:2:6::1 respectively as the source IP address and the destination IP address. Furthermore, the VNET management unit 184 also notifies the physical server 653 of the tunnel identification information determined as described above and the identification information of the virtual NIC 638, which is a tunnel endpoint on the physical server 653.

In accordance with the above command, the host OS of the physical server 652 adds, to the tunnel management DB, an entry which associates the above-mentioned two IP addresses, the tunnel identification information, and the identification information of the virtual NIC 636 with each other. Similarly, the host OS of the physical server 653 also adds, to the tunnel management DB, an entry which associates the above-mentioned two IP addresses, the tunnel identification information, and the identification information of the virtual NIC 638 with each other. As a result, as with the cases in step S106 or S107, a new tunnel is created.

In order to avoid the state in which two tunnels for realizing a certain single link (for example, the link 633) included in a virtual L2 network (for example, the network 622) simultaneously exist, it is preferable to delete an existing tunnel before creating a new tunnel as described above.

FIG. 12 illustrates an example of a change of a tunnel according to the embodiment. FIG. 12 concretely illustrates an example case in which the tunnel 667 over the leased line network 172 in FIG. 9 is deleted and then a tunnel 670 over the MPLS network 171 is newly created. This example case corresponds to the above-mentioned concrete example with reference to FIG. 11.

That is, FIG. 12 illustrates the example case in which the service level of the link 633 between the first DB server 629 and the second DB server 630 is changed from level C to level B. The change thus made is specifically realized as a result of the process in FIG. 11. After the tunnel 667 is replaced with the tunnel 670, the communication between the first DB server 629 and the second DB server 630 is performed through the tunnel 670 over the MPLS network 171.

Meanwhile, the present invention is not limited to the embodiments above. Some variations are described above, but the embodiments may also be modified variously from the following points of view, for example. The modified embodiments described above and below may be arbitrarily combined unless they contradict one another.

The number and type of the physical networks may be appropriately determined depending on the embodiments. For example, an ATM network and/or a frame relay network may be used, and/or two or more leased line networks may be used.

The physical servers exemplified in FIG. 1 are rack-mount servers. However, it is obvious that blade servers may be used. For example, one chassis may include one switch blade and a plurality of CPU blades connected to the switch blade. In this case, the switch blade corresponds to the ToR in FIG. 1.

There may be a plurality of chassis, each of which is configured as described above, in one rack. In this case, a plurality of switch blades in one rack may be connected to the edge switch of each physical network. The edge switch as described herein is also called an "aggregation switch".

Meanwhile, in some cases, two physical servers may be connected through a plurality of tunnels over the same physical network. These plurality of tunnels may be discriminated from one another by tunnel identification information. However, there may be an embodiment in which no tunnel identification information is used. In such an embodiment, some IP addresses which are different from each other only in some least significant bits may be assigned to one physical NIC corresponding to one physical network.

For example, in FIG. 9, the first Web server 624 and the second Web server 625 are deployed on different physical servers. However, the first Web server 624 and the second Web server 625 may both be deployed on the physical server 652.

In this case, the link between the GW 623 and the first Web server 624 is realized by a tunnel between the physical servers 651 and 652, and the link between the GW 623 and the second Web server 625 is realized by another tunnel between the physical servers 651 and 652. Therefore, in this case, when the data sent from the physical server 651 is received by the physical server 652, a certain mechanism is used to appropriately determine whether an inner L2 frame is to be output to the first Web server 624 or to the second Web server 625. An example of the mechanism is the tunnel management DB including the tunnel identification information as described above. However, instead of the tunnel identification information, a plurality of IP addresses corresponding to one physical network may be used.

For example, at least two IP addresses which start with the prefix of the MPLS network 171 may be assigned to the physical NIC of the physical server 652. Of course one or more IP addresses which start with the prefix of the best-effort IP router network 170, and one or more IP addresses which start with the prefix of the leased line network 172 are also assigned to the physical NIC of the physical server 652.

The virtual NIC 635, which is created in the host OS of the physical server 652 corresponding to the first Web server 624, may be associated with one of the above-mentioned at least two IP addresses, which start with the prefix of the MPLS network 171. The virtual NIC which is created in the host OS of the physical server 652 corresponding to the second Web server 625 may be associated with another one of the above-mentioned at least two IP addresses.

When two or more IP addresses are assigned to the physical NIC corresponding to one physical network as described above, it is sufficient for each entry in the tunnel management DB of the physical server to include a pair of IP addresses, and the identification information of the virtual NIC in the host OS. That is, the tunnel identification information is not essential because it is possible to discriminate tunnels by using IP addresses without using tunnel identification information. In the embodiment in which no tunnel identification information is used, for each tunnel, the VNET management unit 184 selects one appropriate IP address from the above-mentioned at least two IP addresses, and notifies the physical server of the selected IP address. For example, in the case of the example above, the VNET management unit 184 appropriately selects an IP address for each tunnel in step S106 or S107 so as to let the following two IP addresses be different.
- the IP address of the physical NIC of the physical server 652 for the tunnel over the MPLS network 171 between the GW 623 and the first Web server 624
- the IP address of the physical NIC of the physical server 652 for the tunnel over the MPLS network 171 between the GW 623 and the second Web server 625

As described above, whether or not the tunnel identification information is used depends on embodiments.

Meanwhile, in response to the migration (for example, live migration) of a VM, the IaaS management server 180 gives appropriate physical servers commands to delete and create again a tunnel. The migration of a VM is controlled by the VM management unit 182.

For example, assume that when there is a tunnel between a first VM on a first physical server and a second VM on a second physical server, the VM management unit 182 determines to migrate the first VM to a third physical server. In this case, the VNET management unit 184 deletes an existing tunnel by giving commands to the first and the second physical servers, and creates a new tunnel by giving commands to the second and third physical servers. The process for deleting the existing tunnel is similar to that in step S201, and the process for creating the new tunnel is similar to that in step S202.

According to various embodiments described above, it is feasible to maintain QoS between VMs, from end to end. In addition, a user is allowed to select a desired service level from among a plurality of choices. Furthermore, even when the service level that the user desires for the link between certain two VMs changes, the tunnel is deleted and created again flexibly depending on the change as illustrated in FIGS. 11 and 12.

In addition, as described above, the embodiments excel the first and second comparative examples in various aspects. For example, the embodiments are excellent in various aspects such as financial cost, availability and extensibility of a system, time and effort taken for management, initial investment, etc. Therefore, an IaaS provider is enabled to flexibly add a choice (or choices) to the menu of service levels. As a result, a user is allowed to select an appropriate service level that he/she desires from among the increased number of choices, and therefore it is expected to improve the user satisfaction.

## Claims

1. A management program comprising a plurality of executable instructions, which, when executed on a computer (180), cause the computer to execute a process comprising:
receiving a tunnel connection command to connect a first virtual machine (123; 629) and a second virtual machine (142; 630) through a layer 2 tunnel (667) corresponding to particular quality of service;
**characterized in that** the process further comprises:
instructing (S106; S107) a first physical machine (120; 652) on which the first virtual machine (123;629) is running and which is connected to a plurality of physical networks (170, 171, 172) through a first physical network interface device (121) to use a first address (I3) and a second address (I6) in encapsulating in a first layer 3 packet a first layer 2 frame that the first virtual machine decides to send to the second virtual machine, each of the plurality of physical networks supporting one or more levels in quality of service, both the first address (I3) and the second address (I6) corresponding to a particular physical network (172) of the plurality of physical networks that supports the particular quality of service, the first address (I3) being one of a plurality of addresses (I1, I2, I3) assigned to the first physical network interface device (121), and the second address (I6) being one of a plurality of addresses (I4, I5, I6) assigned to a second physical network interface device (141) through which a second physical machine (140; 653) on which the second virtual machine (142; 630) is running is connected to the plurality of physical networks; and
instructing (S106; S107) the second physical machine to use the second address (I6) and the first address (I3) in encapsulating in a second layer 3 packet a second layer 2 frame that the second virtual machine decides to send to the first virtual machine.

2. The management program according to claim 1, wherein:
the process further comprises:
generating or determining tunnel identification information that identifies the layer 2 tunnel (667; 670); and
notifying (S106; S107) the first and second physical machines of the tunnel identification information;
the first layer 3 packet includes the tunnel identification information at a location that precedes the encapsulated first layer 2 frame; and
the second layer 3 packet includes the tunnel identification information at a location that precedes the encapsulated second layer 2 frame.

3. The management program according to claim 2, wherein:
the first physical machine (120; 652) provides a first virtual interface (125; 636) between the first physical network interface device (121) and the first virtual machine (123; 629) ;
the second physical machine (140; 653) provides a second virtual interface (143; 638) between the second physical network interface device (141) and the second virtual machine (142; 630); and
the process further comprises:
enabling the first physical machine (120; 652) to output the second layer 2 frame to the first virtual machine through the first virtual interface upon receipt of the second layer3 packet at the first physical network interface device, by instructing (S106; S107) the first physical machine (120; 652) to associate the first virtual interface (125; 636) with a combination of the first address (I3), the second address (I6), and the tunnel identification information; and
enabling the second physical machine (140; 653) to output the first layer 2 frame to the second virtual machine through the second virtual interface upon receipt of the first layer3 packet at the second physical network interface device, by instructing (S106; S107) the second physical machine (140; 653) to associate the second virtual interface (143; 638) with a combination of the second address (I6), the first address (I3), and the tunnel identification information.

4. The management program according to any of claims 1 through 3, wherein:
each of the plurality of addresses (I1, I2, I3) assigned to the first physical network interface device (121) is an Internet Protocol version 6 (IPv6) address which starts with a prefix corresponding to each physical network; and
each of the plurality of addresses (I4, I5, I6) assigned to the second physical network interface device (141) is an IPv6 address which starts with the prefix corresponding to each physical network.

5. The management program according to any of claims 1 through 4, wherein the tunnel connection command is a command to newly create the layer 2 tunnel (667) corresponding to the particular quality of service when no layer 2 tunnel corresponding to any quality of service is created between the first virtual machine and the second virtual machine.

6. The management program according to any of claims 1 through 4, wherein the tunnel connection command is a command to replace, with the layer 2 tunnel (670) corresponding to the particular quality of service, another layer 2 tunnel (667) which corresponds to different quality of service other than the particular quality of service and has been created between the first virtual machine and the second virtual machine.

7. The management program according to claim 6, wherein:
a third address is assigned to the first physical network interface device corresponding to a different physical network (172) which is one of the plurality of physical networks (170, 171, 172) other than the particular physical network (171) and supports the different quality of service;
a fourth address is assigned to the second physical network interface device corresponding to the different physical network (172); and
the process further comprises:
instructing (S201) the first physical machine (652) to stop using the third address and the fourth address in encapsulating a layer 2 frame that the first virtual machine (629) decides to send to the second virtual machine (630); and
instructing (S201) the second physical machine (653) to stop using the fourth address and the third address in encapsulating a layer 2 frame that the second virtual machine (630) decides to send to the first virtual machine (629).

8. The management program according to any of claims 1 through 7, wherein:
the process further comprises receiving a network setting command;
for each pair of virtual machines of a plurality of virtual machines (626, 629, 630) which include the first virtual machine (629) and the second virtual machine (630) and belong to one virtual network (622), the network setting command specifies quality of service of a layer 2 tunnel (667, 668, 669) for connecting the pair of virtual machines;
the tunnel connection command is included in the network setting command; and
the receiving of the tunnel connection command is included in the receiving of the network setting command.

9. A management device (180) comprising:
accepting means (181; 253; 254) for accepting a tunnel connection command to connect a first virtual machine (123; 629) and a second virtual machine (142; 630) through a layer 2 tunnel (667) corresponding to particular quality of service;
**characterized in that** the management device (180) further comprises
transmission means (184; 253) for
sending a first command to a first physical machine (120; 652) on which the first virtual machine (123; 629) is running and which is connected to a plurality of physical networks (170, 171, 172) through a first physical network interface device (121), and
sending a second command to a second physical machine (140; 653) on which the second virtual machine (142; 630) is running and which is connected to the plurality of physical networks through a second physical network interface device (141), wherein:
each of the plurality of physical networks supports one or more levels in quality of service;
the first command is a command to instruct the first physical machine to use a first address (I3) and a second address (I6) in encapsulating in a first layer 3 packet a first layer 2 frame that the first virtual machine decides to send to the second virtual machine;
the second command is a command to instruct the second physical machine to use the second address (I6) and the first address (13) in encapsulating in a second layer 3 packet a second layer 2 frame that the second virtual machine decides to send to the first virtual machine;
the first address (I3) is one of a plurality of addresses (I1, I2, I3) assigned to the first physical network interface device (121) and corresponds to a particular physical network (172) which supports the particular quality of service; and
the second address (I6) is one of a plurality of addresses (I4, I5, I6) assigned to the second physical network interface device (141) and corresponds to the particular physical network.

10. A network system (100) comprising:
a first communication device (111) connected to a plurality of physical networks (170, 171, 172);
a second communication device (131) connected to the plurality of physical networks;
a first physical machine (120) which includes:
a first physical network interface device (121) which is connected to the first communication device;
a first processor (221) adapted to
run a first virtual machine (123), encapsulate in a first layer 3 packet a first layer 2 frame that the first virtual machine decides to send to a second virtual machine (142), and
control the first physical network interface device to send the first layer 3 packet; and
a first storage device (222; 223) adapted to store a first source address and a first destination address for use in encapsulating the first layer 2 frame;
a second physical machine (140) which includes:
a second physical network interface device (141) which is connected to the second communication device;
a second processor (241) adapted to
run the second virtual machine,
encapsulate in a second layer 3 packet a second layer 2 frame that the second virtual machine decides to send to the first virtual machine, and
control the second physical network interface device to send the second layer 3 packet;
and
a second storage device (242; 243) adapted to store a second source address and a second destination address for use in encapsulating the second layer 2 frame; and
a management computer (180) which is enabled to communicate with the first physical machine and the second physical machine, and includes:
an input device (181; 254) from which a tunnel connection command is input or a reception device (181; 253) adapted to receive the tunnel connection command, the tunnel connection command being a command to connect the first virtual machine and the second virtual machine through a layer 2 tunnel (667) corresponding to particular quality of service; **characterized in that**:
each of the plurality of physical networks (170, 171, 172) supports one or more levels in quality of service;
the first physical network interface device (121) is assigned a plurality of addresses (I1, I2, I3) corresponding to the plurality of physical networks;
the second physical network interface device (141) is assigned a plurality of addresses (I4, I5, I6) corresponding to the plurality of physical networks; and
the management computer (180) further includes a transmission device (184; 253) adapted to
send (S106; S107), to the first physical machine, first setting information that specifies a first address (I3) and a second address (I6) respectively as the first source address and the first destination address, wherein the first address is one of the plurality of addresses (I1, I2, I3) of the first physical network interface device and corresponds to a particular physical network (172) which supports the particular quality of service, and the second address (I6) is one of the plurality of addresses (I4, I5, I6) of the second physical network interface device and corresponds to the particular physical network, and
send (S106; S107) second setting information that specifies the second address (I6) and the first address (I3) respectively as the second source address and the second destination address, to the second physical machine.

11. The network system (100) according to claim 10, wherein
when the first physical machine (120) sends the first layer 3 packet to the first communication device (111), the first processor (221) prepends, to the first layer 3 packet, a first layer 2 header in which a particular value indicating a particular priority corresponding to the particular quality of service is specified;
when the second physical machine (140) sends the second layer 3 packet to the second communication device (131), the second processor (241) prepends, to the second layer 3 packet, a second layer 2 header in which the particular value is specified.

12. The network system (100) according to claim 11, wherein:
the first layer 2 header includes a first virtual local area network (VLAN) tag in which the particular value is specified; and
the second layer 2 header includes a second VLAN tag in which the particular vale is specified.

13. The network system according to claim 12, wherein
the first VLAN tag further includes a particular VLAN identifier which corresponds to the particular quality of service or to the particular physical network; and
the second VLAN tag further includes the particular VLAN identifier.

14. The network system according to any of claims 10 through 13, wherein:
when the particular physical network (171) supports two or more levels in quality of service including the particular quality of service, a first field which relates to quality of service and is included in a header of the first layer 3 packet is referred to while the first layer 3 packet is being sent in the particular physical network, or first signaling information which specifies the particular quality of service is sent over the particular physical network before the first layer 3 packet is sent; and
when the particular physical network supports the two or more levels in quality of service including the particular quality of service, a second field which relates to quality of service and is included in a header of the second layer 3 packet is referred to while the second layer 3 packet is being sent in the particular physical network, or second signaling information which specifies the particular quality of service is sent over the particular physical network before the second layer 3 packet is sent.

## Patentansprüche

1. Ein Managementprogramm, umfassend eine Vielzahl von ausführbaren Anweisungen, welche, wenn diese auf einem Computer (180) ausgeführt werden, den Computer dazu veranlassen, einen Prozess auszuführen, umfassend:
Empfangen eines Tunnelverbindungsbefehls zum Verbinden einer ersten virtuellen Maschine (123; 629) und einer zweiten virtuellen Maschine (142; 630) über einen zu einer bestimmten Dienstqualität gehörenden Schicht-2-Tunnel (667);
**dadurch gekennzeichnet, dass** der Prozess weiter umfasst:
Anweisen (S106; S107) einer ersten physischen Maschine (120; 652), auf welcher die erste virtuelle Maschine (123; 629) läuft und welche mit einer Vielzahl von physischen Netzwerken (170, 171, 172) über eine erste physische Netzwerkschnittstellenvorrichtung (121) verbunden ist, eine erste Adresse (I3) und eine zweite Adresse (I6) bei einem Verkapseln in einem ersten Schicht-3-Paket eines ersten Schicht-2-Frames zu verwenden, für welchen die erste virtuelle Maschine bestimmt, diesen an die zweite virtuelle Maschine zu senden, wobei jedes der Vielzahl von physischen Netzwerken ein oder mehrere Niveaus in einer Dienstqualität unterstützt, sowohl die erste Adresse (I3) als auch die zweite Adresse (I6) zu einem bestimmten physischen Netzwerk (172) der Vielzahl von physischen Netzwerken gehören, welches die bestimmte Dienstqualität unterstützt, wobei die erste Adresse (I3) eine aus einer Vielzahl von Adressen (I1, I2, I3) ist,
welche zu der ersten physischen
Netzwerkschnittstellenvorrichtung (121) zugeordnet ist, und die zweite Adresse (I6) eine aus einer Vielzahl von Adressen (I4, I5, I6) ist, welche zu einer zweiten physischen Netzwerkschnittstellenvorrichtung (141) zugeordnet ist, durch welche eine zweite physische Maschine (140; 653), auf welcher die zweite virtuelle Maschine (142; 630) läuft, mit der Vielzahl von physischen Netzwerken verbunden ist; und
Anweisen (S106; S107) der zweiten physischen Maschine, die zweite Adresse (I6) und die erste Adresse (I3) bei einem Verkapseln in einem zweiten Schicht-3-Paket eines zweiten Schicht-2-Frames zu verwenden, für welchen die zweite virtuelle Maschine bestimmt, diesen an die erste virtuelle Maschine zu senden.

2. Managementprogramm gemäß Anspruch 1, wobei:
der Prozess weiter umfasst:
Erzeugen oder Bestimmen einer Tunnelidentifikationsinformation, welche den Schicht-2-Tunnel (667; 670) identifiziert; und
Melden (S106; S107) der ersten und der zweiten physischen Maschine die Tunnelidentifikationsinformation;
wobei das erste Schicht-3-Paket die Tunnelidentifikationsinformation bei einer Position umfasst, welche dem verkapselten ersten Schicht-2-Frame vorausgeht; und
wobei das zweite Schicht-3-Paket die Tunnelidentifikationsinformation bei einer Position umfasst, welche dem verkapselten zweiten Schicht-2-Frame vorausgeht.

3. Managementprogramm gemäß Anspruch 2, wobei:
die erste physische Maschine (120; 652) eine erste virtuelle Schnittstelle (125; 636) zwischen der ersten physischen Netzwerkschnittstellenvorrichtung (121) und der ersten virtuellen Maschine (123; 629) bereitstellt;
die zweite physische Maschine (140; 653) eine zweite virtuelle Schnittstelle (143; 638) zwischen der zweiten physischen Netzwerkschnittstellenvorrichtung (141) und der zweiten virtuellen Maschine (142; 630) bereitstellt; und
der Prozess weiter umfasst:
Ermöglichen der ersten physischen Maschine (120; 652), den zweiten Schicht-2-Frame an die erste virtuelle Maschine über die erste virtuelle Schnittstelle auszugeben, auf einen Empfang des zweiten Schicht-3-Pakets bei der ersten physischen Netzwerkschnittstellenvorrichtung, durch Anweisen (S106; S107) der ersten physischen Maschine (120; 652),die erste virtuelle Schnittstelle (125; 636) mit einer Kombination der ersten Adresse (I3), der zweiten Adresse (I6) und der Tunnelidentifikationsinformation zu verknüpfen; und
Ermöglichen der zweiten physischen Maschine (140; 653), den ersten Schicht-2-Frame an die zweite virtuelle Maschine über die zweite virtuelle Schnittstelle auszugeben, auf einen Empfang des ersten Schicht-3-Pakets bei der zweiten physischen Netzwerkschnittstellenvorrichtung, durch Anweisen (S106; S107) der zweiten physischen Maschine (140; 653), die zweite virtuelle Schnittstelle (143; 638) mit einer Kombination der zweiten Adresse (I6), der ersten Adresse (I3) und der Tunnelidentifikationsinformation zu verknüpfen.

4. Managementprogramm gemäß einem der Ansprüche 1 bis 3, wobei:
jede der Vielzahl von zu der ersten physischen Netzwerkschnittstellenvorrichtung (121) zugeordneten Adressen (I1, I2, I3) eine Internetprotokollversion 6-(IPv6) Adresse ist, welche mit einem zu jedem physischen Netzwerk gehörenden Präfix beginnt; und
jede der Vielzahl von zu der zweiten physischen Netzwerkschnittstellenvorrichtung (141) zugeordneten Adressen (I4, I5, I6) eine IPv6-Adresse ist, welche mit dem zu jedem physischen Netzwerk gehörenden Präfix beginnt.

5. Managementprogramm gemäß einem der Ansprüche 1 bis 4, wobei der Tunnelverbindungsbefehl ein Befehl zum Neuerzeugen des zu der bestimmten Dienstqualität gehörenden Schicht-2-Tunnels (667) ist, wenn kein zu einer Dienstqualität gehörender Schicht-2-Tunnel zwischen der ersten virtuellen Maschine und der zweiten virtuellen Maschine erzeugt ist.

6. Managementprogramm gemäß einem der Ansprüche 1 bis 4, wobei der Tunnelverbindungsbefehl ein Befehl zum Ersetzen, mit dem zu der bestimmten Dienstqualität gehörenden Schicht-2-Tunnel (670), eines anderen Schicht-2-Tunnels (667) ist, welcher zu einer anderen Dienstqualität außer der bestimmten Dienstqualität gehört und zwischen der ersten virtuellen Maschine und der zweiten virtuellen Maschine erzeugt ist.

7. Managementprogramm gemäß Anspruch 6, wobei:
eine dritte Adresse zu der ersten physischen Netzwerkschnittstellenvorrichtung zugeordnet ist, welche zu einem anderen physischen Netzwerk (172) gehört, welches eines aus der Vielzahl von physischen Netzwerken (170, 171, 172) außer dem bestimmten physischen Netzwerk (171) ist und die andere Dienstqualität unterstützt;
eine vierte Adresse zu der zweiten physischen Netzwerkschnittstellenvorrichtung zugeordnet ist, welche zu dem anderen physischen Netzwerk (172) gehört; und
der Prozess weiter umfasst:
Anweisen (S201) der ersten physischen Maschine (652) zum Anhalten einer Verwendung der dritten Adresse und der vierten Adresse bei einem Verkapseln eines Schicht-2-Frames, für welchen die erste virtuelle Maschine (629) bestimmt, diesen an die zweite virtuelle Maschine (630) zu senden; und
Anweisen (S201) der zweiten physischen Maschine (653) zum Anhalten einer Verwendung der vierten Adresse und der dritten Adresse bei einem Verkapseln eines Schicht-2-Frames, für welchen die zweite virtuelle Maschine (630) bestimmt, diesen an die erste virtuelle Maschine (629) zu senden.

8. Managementprogramm gemäß einem der Ansprüche 1 bis 7, wobei:
der Prozess weiter ein Empfangen eines Netzwerkeinstellbefehls umfasst;
für jedes Paar von virtuellen Maschinen einer Vielzahl von virtuellen Maschinen (626, 629, 630), welche die erste virtuelle Maschine (629) und die zweite virtuelle Maschine (630) umfassen und zu einem virtuellen Netzwerk (622) gehören, der Netzwerkeinstellbefehl eine Dienstqualität eines Schicht-2-Tunnels (667, 668, 669) zum Verbinden des Paares von virtuellen Maschinen bestimmt;
der Tunnelverbindungsbefehl in dem Netzwerkeinstellbefehl umfasst ist; und
das Empfangen des Tunnelverbindungsbefehls in dem Empfangen des Netzwerkeinstellbefehls umfasst ist.

9. Eine Managementvorrichtung (180), umfassend:
Annahmemittel (181; 253; 254) zum Annehmen eines Tunnelverbindungsbefehls zum Verbinden einer ersten virtuellen Maschine (123; 629) und einer zweiten virtuellen Maschine (142; 630) über einen zu einer bestimmten Dienstqualität gehörenden Schicht-2-Tunnel (667);
**dadurch gekennzeichnet, dass** die Managementvorrichtung (180) weiter umfasst
Übertragungsmittel (184; 253) zum
Senden eines ersten Befehls an eine erste physische Maschine (120; 652), auf welcher die erste virtuelle Maschine (123; 629) läuft und welche mit einer Vielzahl von physischen Netzwerken (170, 171, 172) über eine erste physische Netzwerkschnittstellenvorrichtung (121) verbunden ist, und
Senden eines zweiten Befehls an eine zweite physische Maschine (140; 653), auf welcher die zweite virtuelle Maschine (142; 630) läuft und welche mit der Vielzahl von physischen Netzwerken über eine zweite physische
Netzwerkschnittstellenvorrichtung (141) verbunden ist, wobei:
ein jedes der Vielzahl von physischen Netzwerken ein oder mehrere Niveaus in einer Dienstqualität unterstützt;
der erste Befehl ein Befehl zum Anweisen der ersten physischen Maschine ist, eine erste Adresse (I3) und eine zweite Adresse (I6) bei einem Verkapseln in einem ersten Schicht-3-Paket eines ersten Schicht-2-Frames zu verwenden, für welchen die erste virtuelle Maschine bestimmt, diesen an die zweite virtuelle Maschine zu senden;
der zweite Befehl ein Befehl ist, zum Anweisen der zweiten physischen Maschine die zweite Adresse (I6) und die erste Adresse (I3) bei einem Verkapseln in einem zweiten Schicht-3-Paket eines zweiten Schicht-2-Frames zu verwenden, für welchen die zweite virtuelle Maschine bestimmt, diesen an die erste virtuelle Maschine zu senden;
die erste Adresse (I3) eine aus einer Vielzahl von Adressen (I1, I2, I3) ist, welche zu der ersten physischen Netzwerkschnittstellenvorrichtung (121) zugeordnet ist und zu einem bestimmten physischen Netzwerk (172) gehört, welches die bestimmte Dienstqualität unterstützt; und
die zweite Adresse (I6) eine aus einer Vielzahl von Adressen (I4, I5, I6) ist, welche zu der zweiten physischen Netzwerkschnittstellenvorrichtung (141) zugeordnet ist und zu dem bestimmten physischen Netzwerk gehört.

10. Ein Netzwerksystem (100), umfassend:
eine erste Kommunikationsvorrichtung (111), verbunden mit einer Vielzahl von physischen Netzwerken (170, 171, 172);
eine zweite Kommunikationsvorrichtung (131), verbunden mit der Vielzahl von physischen Netzwerken;
eine erste physische Maschine (120), welche umfasst:
eine erste physische Netzwerkschnittstellenvorrichtung (121), welche mit der ersten Kommunikationsvorrichtung verbunden ist;
einen ersten Prozessor (221), angepasst zum
Betreiben der ersten virtuellen Maschine (123),
Verkapseln in einem ersten Schicht-3-Paket eines ersten Schicht-2-Frames, für welchen die erste virtuelle Maschine bestimmt, diesen an eine zweite virtuelle Maschine (142) zu senden, und
Steuern der ersten physischen Netzwerkschnittstellenvorrichtung, das erste Schicht-3-Paket zu senden; und
eine erste Speichervorrichtung (222; 223), angepasst zum Speichern einer ersten Ursprungsadresse und einer ersten Zieladresse zur Verwendung bei einem Verkapseln des ersten Schicht-2-Frames;
eine zweite physische Maschine (140), welche umfasst:
eine erste physische Netzwerkschnittstellenvorrichtung (141), welche mit der zweiten Kommunikationsvorrichtung verbunden ist;
einen zweiten Prozessor (241), angepasst zum
Betreiben der zweiten virtuellen Maschine, Verkapseln in einem zweiten Schicht-3-Paket einen zweiten Schicht-2-Frame, für welchen die zweite virtuelle Maschine bestimmt, diesen an die erste virtuelle Maschine zu senden, und
Steuern der zweiten physischen Netzwerkschnittstellenvorrichtung, das zweite Schicht-3-Paket zu senden; und
eine zweite Speichervorrichtung (242; 243), angepasst zum Speichern einer zweiten Ursprungsadresse und einer zweiten Zieladresse zur Verwendung bei einem Verkapseln des zweiten Schicht-2-Frames; und
einen Management-Computer (180), welcher geeignet ist zum Kommunizieren mit der ersten physischen Maschine und der zweiten physischen Maschine und umfasst:
eine Eingabevorrichtung (181; 254), von welcher ein Tunnelverbindungsbefehl eingegeben wird, oder eine Empfangsvorrichtung (181; 253), welche zum Empfangen des Tunnelverbindungsbefehls angepasst ist, wobei der Tunnelverbindungsbefehl ein Befehl zum Verbinden der ersten virtuellen Maschine und der zweiten virtuellen Maschine über einen zu einer bestimmten Dienstqualität gehörenden Schicht-2-Tunnel (667) ist;
**dadurch gekennzeichnet, dass**:
jedes der Vielzahl von physischen Netzwerken (170, 171, 172) ein oder mehrere Niveaus in einer Dienstqualität unterstützt;
die erste physische Netzwerkschnittstellenvorrichtung (121) einer Vielzahl von Adressen (I1, I2, I3) zugeordnet ist, welche zu der Vielzahl von physischen Netzwerken gehören;
die zweite physische Netzwerkschnittstellenvorrichtung (141) einer Vielzahl von Adressen (I4, I5, I6) zugeordnet ist, welche zu der Vielzahl von physischen Netzwerken gehören; und
der Management-Computer (180) weiter eine Übertragungsvorrichtung (184; 253) umfasst, angepasst zum
Senden (S106; S107), an die erste physische Maschine, einer ersten Einstellinformation, welche eine erste Adresse (I3) und eine zweite Adresse (I6) jeweils als die erste Ursprungsadresse und die erste Zieladresse bestimmt, wobei die erste Adresse eine aus einer Vielzahl von Adressen (I1, I2, I3) der ersten physischen Netzwerkschnittstellenvorrichtung ist und zu einem bestimmten physischen Netzwerk (172) gehört, welche die bestimmte Dienstqualität unterstützt, und die zweite Adresse (I6) eine aus der Vielzahl von Adressen (I4, I5, I6) der zweiten physischen Netzwerkschnittstellenvorrichtung ist und zu dem bestimmten physischen Netzwerk gehört, und
Senden (S106; S107) einer zweiten Einstellinformation an die zweite physische Maschine, welche die zweite Adresse (I6) und die erste Adresse (I3) jeweils als die zweite Ursprungsadresse und die zweite Zieladresse bestimmt.

11. Netzwerksystem (100) gemäß Anspruch 10, wobei,
wenn die erste physische Maschine (120) das erste Schicht-3-Paket an die erste Kommunikationsvorrichtung (111) sendet, der erste Prozessor (221) dem ersten Schicht-3-Paket einen ersten Schicht-2-Header voranstellt, wobei ein eine zu der bestimmten Dienstqualität gehörende bestimmte Priorität angebender bestimmter Wert, angegeben ist;
wenn die zweite physische Maschine (140) das zweite Schicht-3-Paket an die zweite Kommunikationsvorrichtung (131) sendet, der zweite Prozessor (241) dem zweiten Schicht-3-Paket einen zweiten Schicht-2-Header voranstellt, bei welchem der bestimmte Wert angegeben ist.

12. Netzwerksystem (100) gemäß Anspruch 11, wobei:
der erste Schicht-2-Header ein erstes virtuelles lokales Bereichsnetzwerk- (VLAN) Tag umfasst, bei welchem der bestimmte Wert bestimmt ist; und
der zweite Schicht-2-Header einen zweiten VLAN-Tag umfasst, bei welchem der bestimmte Wert bestimmt ist.

13. Netzwerksystem gemäß Anspruch 12, wobei
der erste VLAN-Tag weiter einen bestimmten VLAN-Identifikator umfasst, welcher zu der bestimmten Dienstqualität oder zu dem bestimmten physischen Netzwerk gehört; und
der zweite VLAN-Tag weiter den bestimmten VLAN-Identifikator umfasst.

14. Netzwerksystem gemäß einem der Ansprüche 10 bis 13, wobei:
wenn das bestimmte physische Netzwerk (171) zwei oder mehr Niveaus in einer Dienstqualität unterstützt, welche die bestimmte Dienstqualität umfasst, auf ein erstes Feld, welches eine Dienstqualität betrifft und in einem Header des ersten Schicht-3-Pakets umfasst ist, Bezug genommen wird, während das erste Schicht-3-Paket in dem bestimmten physischen Netzwerk gesendet wird, oder eine erste Signalisierungsinformation, welche die bestimmte Dienstqualität angibt, über das bestimmte physische Netzwerk gesendet wird, bevor das erste Schicht-3-Paket gesendet wird; und,
wenn das bestimmte physische Netzwerk die zwei oder mehr Niveaus in einer Dienstqualität unterstützt, welche die bestimmte Dienstqualität umfassen, auf ein zweites Feld, welches eine Dienstqualität betrifft und in einem Header des zweiten Schicht-3-Pakets umfasst ist, Bezug genommen wird, während das zweite Schicht-3-Paket in dem bestimmten physischen Netzwerk gesendet wird, oder eine zweite Signalisierungsinformation, welche die bestimmte Dienstqualität bestimmt, über das bestimmte physische Netzwerk gesendet wird, bevor das zweite Schicht-3-Paket gesendet wird.

## Revendications

1. Programme de gestion comprenant une pluralité d'instructions exécutables, qui, lorsqu'elles sont exécutées sur un ordinateur (180), amènent l'ordinateur à exécuter un processus comprenant :
la réception d'une commande de connexion de tunnel pour connecter une première machine virtuelle (123 ; 629) et une deuxième machine virtuelle (142 ; 630) à travers un tunnel de couche 2 (667) correspondant à une qualité de service particulière ;
**caractérisé en ce que** le processus comprend en outre :
le fait de donner pour instruction (S106 ; S107) à une première machine physique (120 ; 652) sur laquelle la première machine virtuelle (123 ; 629) est en cours d'exécution et qui est connectée à une pluralité de réseaux physiques (170, 171, 172) par le biais d'un premier dispositif d'interface de réseau physique (121) d'utiliser une première adresse (I3) et une deuxième adresse (I6) en encapsulant dans un premier paquet de couche 3 une première trame de couche 2 que la première machine virtuelle décide d'envoyer à la deuxième machine virtuelle, chacun de la pluralité de réseaux physiques supportant un ou plusieurs niveaux de qualité de service, à la fois la première adresse (I3) et la deuxième adresse (I6) correspondant à un réseau physique particulier (172) de la pluralité de réseaux physiques qui supporte la qualité de service particulière, la première adresse (I3) étant une d'une pluralité d'adresses (I1, I2, I3) assignée au premier dispositif d'interface de réseau physique (121), et la deuxième adresse (I6) étant une d'une pluralité d'adresses (I4, I5, I6) assignée à un deuxième dispositif d'interface de réseau physique (141) par le biais duquel une deuxième machine physique (140 ; 653) sur laquelle la deuxième machine virtuelle (142 ; 630) est en cours d'exécution est connectée à la pluralité de réseaux physiques ; et
le fait de donner pour instruction (S106 ; S107) à la deuxième machine physique d'utiliser la deuxième adresse (I6) et la première adresse (I3) en encapsulant dans un deuxième paquet de couche 3 une deuxième trame de couche 2 que la deuxième machine virtuelle décide d'envoyer à la première virtuelle machine.

2. Programme de gestion selon la revendication 1, dans lequel :
le processus comprend en outre :
la génération ou la détermination d'informations d'identification de tunnel qui identifient le tunnel de couche 2 (667 ; 670) ; et
la notification (S106, S107) aux première et deuxième machines physiques des informations d'identification de tunnel ;
le premier paquet de couche 3 inclut les informations d'identification de tunnel à un emplacement qui précède la première trame de couche 2 encapsulée ; et
le deuxième paquet de couche 3 inclut les informations d'identification de tunnel à un emplacement qui précède la deuxième trame de couche 2 encapsulée.

3. Programme de gestion selon la revendication 2, dans lequel :
la première machine physique (120 ; 652) fournit une première interface virtuelle (125 ; 636) entre le premier dispositif d'interface de réseau physique (121) et la première machine virtuelle (123 ; 629) ;
la deuxième machine physique (140 ; 653) fournit une deuxième interface virtuelle (143 ; 638) entre le deuxième dispositif d'interface de réseau physique (141) et la deuxième machine virtuelle (142 ; 630) ; et
le processus comprend en outre :
le fait de permettre à la première machine physique (120 ; 652) de sortir la deuxième trame de couche 2 vers la première machine virtuelle par le biais de la première interface virtuelle lors de la réception du deuxième paquet de couche 3 au niveau du premier dispositif d'interface de réseau physique, en donnant pour instruction (S106 ; S107) à la première machine physique (120 ; 652) d'associer la première interface virtuelle (125 ; 636) à une combinaison de la première adresse (I3), de la deuxième adresse (I6), et des informations d'identification de tunnel ; et
le fait de permettre à la deuxième machine physique (140 ; 653) de sortir la première trame de couche 2 vers la deuxième machine virtuelle par le biais de la deuxième interface virtuelle lors de la réception du premier paquet de couche 3 au niveau du deuxième dispositif d'interface de réseau physique, en donnant pour instruction (S106 ; S107) à la deuxième machine physique (140 ; 653) d'associer la deuxième interface virtuelle (143 ; 638) à une combinaison de la deuxième adresse (I6), de la première adresse (I3), et des informations d'identification de tunnel.

4. Programme de gestion selon l'une quelconque des revendications 1 à 3, dans lequel :
chacune de la pluralité d'adresses (I1, I2, I3) assignée au premier dispositif d'interface de réseau physique (121) est une adresse de protocole Internet version 6 (IPv6) qui commence par un préfixe correspondant à chaque réseau physique ; et
chacune de la pluralité d'adresses (I4, I5, I6) assignée au deuxième dispositif d'interface de réseau physique (141) est une adresse IPv6 qui commence par le préfixe correspondant à chaque réseau physique.

5. Programme de gestion selon l'une quelconque des revendications 1 à 4, dans lequel la commande de connexion de tunnel est une commande pour créer nouvellement le tunnel de couche 2 (667) correspondant à la qualité de service particulière lorsqu'aucun tunnel de couche 2 correspondant à une quelconque qualité de service n'est créé entre la première machine virtuelle et la deuxième machine virtuelle.

6. Programme de gestion selon l'une quelconque des revendications 1 à 4, dans lequel la commande de connexion de tunnel est une commande pour remplacer, par le tunnel de couche 2 (670) correspondant à la qualité de service particulière, un autre tunnel de couche 2 (667) qui correspond à une qualité de service différente autre que la qualité de service particulière et a été créé entre la première machine virtuelle et la deuxième machine virtuelle.

7. Programme de gestion selon la revendication 6, dans lequel :
une troisième adresse est assignée au premier dispositif d'interface de réseau physique correspondant à un réseau physique différent (172) qui est un de la pluralité de réseaux physiques (170, 171, 172) autre que le réseau physique particulier (171) et supporte la qualité de service différente ;
une quatrième adresse est assignée au deuxième dispositif d'interface de réseau physique correspondant au réseau physique différent (172) ; et
le processus comprend en outre :
le fait de donner pour instruction (S201) à la première machine physique (652) d'arrêter d'utiliser la troisième adresse et la quatrième adresse en encapsulant une trame de couche 2 que la première machine virtuelle (629) décide d'envoyer à la deuxième machine virtuelle (630) ; et
le fait de donner pour instruction (S201) à la deuxième machine physique (653) d'arrêter d'utiliser la quatrième adresse et la troisième adresse en encapsulant une trame de couche 2 que la deuxième machine virtuelle (630) décide d'envoyer à la première machine virtuelle (629).

8. Programme de gestion selon l'une quelconque des revendications 1 à 7, dans lequel :
le processus comprend en outre la réception d'une commande de réglage de réseau ;
pour chaque paire de machines virtuelles d'une pluralité de machines virtuelles (626, 629, 630) qui incluent la première machine virtuelle (629) et la deuxième machine virtuelle (630) et appartiennent à un réseau virtuel (622), la commande de réglage de réseau spécifie la qualité de service d'un tunnel de couche 2 (667, 668, 669) pour connecter la paire de machines virtuelles ;
la commande de connexion de tunnel est incluse dans la commande de réglage de réseau ; et
la réception de la commande de connexion de tunnel est incluse dans la réception de la commande de réglage de réseau.

9. Dispositif de gestion (180), comprenant :
des moyens d'acceptation (181 ; 253 ; 254) pour accepter une commande de connexion de tunnel pour connecter une première machine virtuelle (123 ; 629) et une deuxième machine virtuelle (142 ; 630) à travers un tunnel de couche 2 (667) correspondant à une qualité de service particulière ;
**caractérisé en ce que** le dispositif de gestion (180) comprend en outre
des moyens de transmission (184 ; 253) pour
envoyer une première commande à une première machine physique (120 ; 652) sur laquelle la première machine virtuelle (123 ; 629) est en cours d'exécution et qui est connectée à une pluralité de réseaux physiques (170, 171, 172) par le biais d'un premier dispositif d'interface de réseau physique (121), et
envoyer une deuxième commande à une deuxième machine physique (140 ; 653) sur laquelle la deuxième machine virtuelle (142 ; 630) est en cours d'exécution et qui est connectée à la pluralité de réseaux physiques par le biais d'un deuxième dispositif d'interface de réseau physique (141), où :
chacun de la pluralité de réseaux physiques supporte un ou plusieurs niveaux de qualité de service ;
la première commande est une commande pour donner pour instruction à la première machine physique d'utiliser une première adresse (I3) et une deuxième adresse (I6) en encapsulant dans un premier paquet de couche 3 une première trame de couche 2 que la première machine virtuelle décide d'envoyer à la deuxième machine virtuelle ;
la deuxième commande est une commande pour donner pour instruction à la deuxième machine physique d'utiliser la deuxième adresse (I6) et la première adresse (I3) en encapsulant dans un deuxième paquet de couche 3 une deuxième trame de couche 2 que la deuxième machine virtuelle décide d'envoyer à la première machine virtuelle ;
la première adresse (I3) est une d'une pluralité d'adresses (I1, I2, I3) assignée au premier dispositif d'interface de réseau physique (121) et correspond à un réseau physique particulier (172) qui supporte la qualité de service particulière ; et
la deuxième adresse (I6) est une d'une pluralité d'adresses (I4, I5, I6) assignée au deuxième dispositif d'interface de réseau physique (141) et correspond au réseau physique particulier.

10. Système de réseau (100), comprenant :
un premier dispositif de communication (111) connecté à une pluralité de réseaux physiques (170, 171, 172) ;
un deuxième dispositif de communication (131) connecté à la pluralité de réseaux physiques ;
une première machine physique (120) qui inclut :
un premier dispositif d'interface de réseau physique (121) qui est connecté au premier dispositif de communication ;
un premier processeur (221) adapté pour
exécuter une première machine virtuelle (123),
encapsuler dans un premier paquet de couche 3 une première trame de couche 2 que la première machine virtuelle décide d'envoyer à une deuxième machine virtuelle (142), et
commander le premier dispositif d'interface de réseau physique pour envoyer le premier paquet de couche 3 ; et
un premier dispositif de stockage (222 ; 223) adapté pour stocker une première adresse source et une première adresse de destination pour une utilisation dans l'encapsulation de la première trame de couche 2 ;
une deuxième machine physique (140) qui inclut :
un deuxième dispositif d'interface de réseau physique (141) qui est connecté au deuxième dispositif de communication ;
un deuxième processeur (241) adapté pour
exécuter la deuxième machine virtuelle,
encapsuler dans un deuxième paquet de couche 3 une deuxième trame de couche 2 que la deuxième machine virtuelle décide d'envoyer à la première machine virtuelle, et
commander le deuxième dispositif d'interface de réseau physique pour envoyer le deuxième paquet de couche 3 ; et
un deuxième dispositif de stockage (242 ; 243) adapté pour stocker une deuxième adresse source et une deuxième adresse de destination pour une utilisation dans l'encapsulation de la deuxième trame de couche 2 ; et
un ordinateur de gestion (180) qui est habilité à communiquer avec la première machine physique et la deuxième machine physique, et inclut :
un dispositif d'entrée (181 ; 254) à partir duquel une commande de connexion de tunnel est entrée ou un dispositif de réception (181 ; 253) adapté pour recevoir la commande de connexion de tunnel, la commande de connexion de tunnel étant une commande pour connecter la première machine virtuelle et la deuxième virtuelle machine à travers un tunnel de couche 2 (667) correspondant à la qualité de service particulière ;
**caractérisé en ce que** :
chacun de la pluralité de réseaux physiques (170, 171, 172) supporte un ou plusieurs niveaux de qualité de service ;
le premier dispositif d'interface de réseau physique (121) se voit assigner une pluralité d'adresses (I1, I2, I3) correspondant à la pluralité de réseaux physiques ;
le deuxième dispositif d'interface de réseau physique (141) se voit assigner une pluralité d'adresses (I4, I5, I6) correspondant à la pluralité de réseaux physiques ; et
l'ordinateur de gestion (180) inclut en outre un dispositif de transmission (184 ; 253) adapté pour
envoyer (S106 ; S107), à la première machine physique, des premières informations de réglage qui spécifient une première adresse (I3) et une deuxième adresse (I6) respectivement comme la première adresse source et la première adresse de destination, où la première adresse est une de la pluralité d'adresses (I1, I2, I3) du premier dispositif d'interface de réseau physique et correspond à un réseau physique particulier (172) qui supporte la qualité de service particulière, et la deuxième adresse (I6) est une de la pluralité d'adresses (I4, I5, I6) du deuxième dispositif d'interface de réseau physique et correspond au réseau physique particulier, et
envoyer (S106 ; S107) des deuxièmes informations de réglage qui spécifient la deuxième adresse (I6) et la première adresse (I3) respectivement comme la deuxième adresse source et la deuxième adresse de destination, à la deuxième machine physique.

11. Système de réseau (100) selon la revendication 10, dans lequel
lorsque la première machine physique (120) envoie le premier paquet de couche 3 au premier dispositif de communication (111), le premier processeur (221) prépose, au premier paquet de couche 3, un premier en-tête de couche 2 dans lequel une valeur particulière indiquant une priorité particulière correspondant à la qualité de service particulière est spécifiée ;
lorsque la deuxième machine physique (140) envoie le deuxième paquet de couche 3 au deuxième dispositif de communication (131), le deuxième processeur (241) prépose, au deuxième paquet de couche 3, un deuxième en-tête de couche 2 dans lequel la valeur particulière est spécifiée.

12. Système de réseau (100) selon la revendication 11, dans lequel :
le premier en-tête de couche 2 inclut une première étiquette de réseau local virtuel (VLAN) dans laquelle la valeur particulière est spécifiée ; et
le deuxième en-tête de couche 2 inclut une deuxième étiquette VLAN dans laquelle la valeur particulière est spécifiée.

13. Système de réseau selon la revendication 12, dans lequel
la première étiquette VLAN inclut en outre un identificateur VLAN particulier qui correspond à la qualité de service particulière ou au réseau physique particulier ; et
la deuxième étiquette VLAN inclut en outre l'identificateur VLAN particulier.

14. Système de réseau selon l'une quelconque des revendications 10 à 13, dans lequel :
lorsque le réseau physique particulier (171) supporte deux niveaux de qualité de service ou plus incluant la qualité de service particulière, un premier champ qui se rapporte à la qualité de service et est inclus dans un en-tête du premier paquet de couche 3 fait l'objet d'une référence alors que le premier paquet de couche 3 est envoyé dans le réseau physique particulier, ou des premières informations de signalisation qui spécifient la qualité de service particulière sont envoyées sur le réseau physique particulier avant que le premier paquet de couche 3 ne soit envoyé ; et
lorsque le réseau physique particulier supporte les deux niveaux de qualité de service ou plus incluant la qualité de service particulière, un deuxième champ qui se rapporte à la qualité de service et est inclus dans un en-tête du deuxième paquet de couche 3 fait l'objet d'une référence alors que le deuxième paquet de couche 3 est envoyé dans le réseau physique particulier, ou des deuxièmes informations de signalisation qui spécifient la qualité de service particulière sont envoyées sur le réseau physique particulier avant que le deuxième paquet de couche 3 ne soit envoyé.
